# EUROPEAN PATENT APPLICATION

(11) **EP 2 157 650 A1**
(43) Date of publication of application: **24.02.2010**
(21) Application number: 09014736.4
(22) Date of filing: 02.02.2005
(51) Int. Cl.: H01M 8/10, H01M 8/04

(54) **Fuel battery and fuel storage for fuel battery**

(30) Priority: 02.02.2004 JP 2004025647; 02.02.2004 JP 2004025648; 02.02.2004 JP 2004025649; 02.02.2004 JP 2004025650; 02.02.2004 JP 2004025651; 28.10.2004 JP 2004314108; 26.11.2004 JP 2004341576; 21.12.2004 JP 2004369786
(62) Divisional of application: 05709622.4
(71) Applicant: Mitsubishi Pencil Co., Ltd., Tokyo 140-8537 (JP)
(72) Inventor: Suda, Yoshihisa, Fujioka-shi, Gunma 375-8501 (JP); Osada, Takahiro, Fujioka-shi, Gunma 375-8501 (JP); Yamada, Kunitaka, Fujioka-shi, Gunma 375-8501 (JP); Kamitami, Toshimi, Fujioka-shi, Gunma 375-8501 (JP)
(74) Representative: Luderschmidt, Schüler & Partner

(57) **Abstract**

In order to provide a small-sized fuel cell suitably used as an electric power source for portable electronic appliances such as cellular phones, note type personal computers and PDA, assumed is a structure in which connected are plural unit cells each of which is formed by constructing an electrolyte layer on a fuel electrode body and constructing an air electrode layer on the electrolyte layer and in which a fuel supplying member connected with a fuel storing tank for storing a liquid fuel and having a penetrating structure or the fuel electrode body is connected with the respective unit cells to supply the liquid fuel, wherein a liquid fuel occlusion body comprising a porous body and/or a fiber bundle having capillary force is accommodated in the liquid fuel storing tank.

## Description

### Technical Field

The present invention relates to a fuel cell and a fuel reservoir for a fuel cell, more specifically to a small-sized fuel cell suitably used as an electric power source for portable electronic appliances such as cellular phones, note type personal computers and PDA and a fuel reservoir for a fuel cell.

### Background Art

In general, a fuel cell comprises a unit cell on which an air electrode layer, an electrolyte layer and a fuel electrode layer are laminated, a fuel supplying part for supplying a fuel as a reducing agent to the fuel electrode layer and an air supplying part for supplying air as an oxidizing agent to the air electrode layer, and it is an electric cell in which electrochemical reaction is caused in the cell between fuel and oxygen in the air to bring out electric power to the outside. Fuel cells of various types are developed.

In recent years, because of a rise in consciousness to environmental problems and energy saving, it is studied to use a fuel cell as a clean energy source for various applications. In particular, attentions have been paid to a direct methanol fuel cell which can generate electric power by only supplying directly a liquid fuel comprising methanol and water (refer to, for example, patent documents 1 and 2).

Among them, liquid fuel type fuel cells making use of capillary force for supplying a liquid fuel are known (refer to, for example, patent documents 3 to 7).

In liquid fuel type fuel cells described in the above respective patent documents, a liquid fuel is supplied from a fuel tank to a fuel electrode by virtue of capillary force, and therefore they do not require a pump for sending a liquid fuel with pressure, so that they have merits in reducing a size.

Such liquid fuel cells as merely making use of only capillary force of a porous body and/or a fiber bundle disposed in a fuel reservoir are suited to reduction in a size in terms of constitution, but because a fuel is supplied directly to a fuel electrode in the form of liquid, the fuel follows imperfectly during use over a long period of time under a use situation in which it is loaded in a small-sized portable appliance and in which the direction of a cell part is changed very often in every direction, and the trouble that the fuel is cut off from being supplied is brought about, so that it causes disturbing the fuel from being supplied constantly to an electrolyte layer.

On the other hand, known as one of countermeasures for solving the above defects is, for example, a fuel cell system in which a liquid fuel is introduced into a cell by virtue of capillary force and in which the liquid fuel is then vaporized in a fuel vaporizing layer and used (refer to, for example, patent document 8). However, it has the problem that poor followability of the fuel which is a fundamental problem is not improved, and the fuel cell having the above structure involves the problem that it is difficult to reduce a size thereof because of a system in which a liquid is vaporized and then used as fuel.

As described above, in conventional fuel cells, the existing situation is that a liquid fuel is instably supplied in supplying the fuel directly to a fuel electrode to cause fluctuation in an output value during operation and that it is difficult to reduce a size thereof to such an extent that they can be mounted in portable appliances while maintaining stable characteristics.

Storage of used fuel is disclosed in the above patent documents 1 and 8, but treatment of the used fuel after that is not clearly disclosed therein.

Also in the fuel cells which can generate electric power by only supplying directly a liquid fuel comprising methanol and water, it has been required to provide auxiliary equipment such as a pump, an electromagnetic valve, a controlling device for controlling a discharge amount of a liquid fuel, a discharge amount sensor and the like between a fuel cartridge and a cell in order to quantitatively supply a liquid fuel to the cell (refer to, for example, patent documents 1 and 2).

However, providing of mechanisms such as a pump, an electromagnetic valve and the like requires electric power for driving the pump, the electromagnetic valve and the like, and the problem that reduction in the size is difficult is involved therein.

Further, known is a lot of means for supplying a liquid fuel to cells by making use of an own weight of the liquid fuel and a capillary phenomenon (refer to, for example, patent documents 3 to 7), but the problem that it is difficult to quantitatively supply a liquid fuel is involved in these systems of supplying a liquid fuel to cells.

Further, conventional fuel reservoirs for a fuel cell of the respective types described above have the problem that because of small power for holding a liquid fuel in a fuel storing part itself, dropping or leaking of the liquid fuel is liable to be caused by air substitution from a fuel discharge port. In particular, liquid fuels for a fuel cell have a low viscosity and a low surface tension as compared with those of inks and cosmetics and therefore involve the problem that air substitution from a fuel discharge port is liable to be brought about.

On the other hand, fuel is not completely consumed in generation of electric power in fuel cells, and water or a liquid fuel having a low concentration is produced as waste fuel or oxidized fuel is produced. For example, in fuel cells using boron hydride as fuel, boron oxide is produced as waste fuel.

Carbon dioxide is dissolved in waste fuel produced in power generation. Bubbles produced due to a rise in a concentration of the carbon dioxide make it impossible for an electrode to bring into contact with fuel, and therefore the waste fuel has to be quickly recovered and removed. A recovery tank for waste fuel requires a size which is almost equal to that of a fuel reservoir. Further, a pump and an electromagnetic valve have to be mounted between a cell and a waste fuel recovery tank in order to recover waste fuel, and providing of such mechanism involves the problem that electric power for operating the pump and the electromagnetic valve is required.

For example, a structure such as a fuel cartridge in which a liquid fuel once used is returned to an original tank to make effective use of a space of the fuel tank is known as a conventional art of recovering waste fuel in a fuel cell (refer to, for example, patent documents 9 to 10).

In the above documents, however, a supplying mechanism of a fuel from a fuel tank and a recovering mechanism of a used fuel are not described in details, and they are different in a technical concept from the fuel cell of the present invention in which a liquid fuel is quantitatively supplied without operating a pump and an electromagnetic valve and in which used waste fuel is automatically recovered.

Further, the liquid fuel cells described above which merely make use of capillary force of a porous body and/or a fiber bundle disposed in a fuel reservoir are suited to reduction in a size in terms of constitution, but because a fuel is supplied directly to a fuel electrode in the form of liquid, the fuel follows imperfectly during use over a long period of time under use situation in which it is mounted in a small-sized portable appliances and in which the direction of a cell part is changed very often in every direction, and the trouble that the fuel is cut off from being supplied is brought about, so that it causes disturbing the fuel from being supplied constantly to an electrolyte layer.

Known as one of countermeasures for solving the above defects is, for example, a fuel cell system in which a liquid fuel is introduced into a cell by virtue of capillary force and in which the liquid fuel is then vaporized in a fuel vaporizing layer and used (refer to, for example, a patent document 8). However, it has the problem that poor followability of the fuel which is a fundamental problem is not improved, and the fuel cell having the above structure involves the problem that it is difficult to reduce a size thereof because of a system in which a liquid is vaporized and then used as fuel.

Further, known is a structure in which a liquid fuel once used is returned to an original tank to make use of it for pushing out unused liquid fuel (refer to, for example, patent documents 9 to 11). However, the existing situation is that a structure in which the returned liquid fuel is immediately reused is not assumed.

In such conventional fuel cells, the existing situation is that a liquid fuel is instably supplied in supplying the fuel directly to a fuel electrode to cause fluctuation in an output value during operation and that it is difficult to reduce a size thereof to such an extent that they can be mounted in portable appliances while maintaining stable characteristics.

Further, storage or treatment of a used fuel is disclosed in the above patent documents 9 and 11, but reuse of the used fuel is not clearly disclosed therein. In addition thereto, involved therein is the problem that when reusing a liquid fuel, a concentration of the fuel is reduced every time it is used and that a minimum concentration at which the liquid fuel can be used is not certain for the users.
Patent document 1: Japanese Patent Application Laid-Open No. 258760/1993 (claims, examples and others)
Patent document 2: Japanese Patent Application Laid-Open No. 307970/1993 (claims, examples and others)
Patent document 3: Japanese Patent Application Laid-Open No. 66066/1984 (claims, examples and others)
Patent document 4: Japanese Patent Application Laid-Open No. 188008/1994 (claims, examples and others)
Patent document 5: Japanese Patent Application Laid-Open No. 229158/2003 (claims, examples and others)
Patent document 6: Japanese Patent Application Laid-Open No. 299946/2003 (claims, examples and others)
Patent document 7: Japanese Patent Application Laid-Open No. 340273/2003 (claims, examples and others)
Patent document 8: Japanese Patent Application Laid-Open No. 102069/2001 (claims, examples and others)
Patent document 9: Japanese Patent Application Laid-Open No. 92128/2003 (claims, examples and others)
Patent document 10: Japanese Patent Application Laid-Open No. 127905/2004 (claims, examples and others)
Patent document 11: Japanese Patent Application Laid-Open No. 199966/2004 (claims, examples and others)

### Disclosure of the Invention

### Problems to be solved by the invention

In light of the problems in reduction in a size of the conventional fuel cells described above and the existing situation thereof, the present first invention to fifth invention have been made in order to solve them, and an object thereof is to provide a fuel cell in which a liquid fuel is stably supplied directly to a fuel electrode and in which a size thereof can be reduce.

In light of the problems in the conventional fuel reservoirs for a fuel cell described above, the present sixth invention has been made in order to solve them, and an obj ect thereof is to provide a fuel reservoir for a fuel cell in which a liquid fuel can quantitatively be supplied efficiently to a cell without providing a pump, an electromagnetic valve, a controlling device for controlling a discharge amount of a liquid fuel, a discharge amount sensor and the like and which can reduce a size of the fuel cell and to provide a fuel cell.

In light of the problems in the conventional fuel reservoirs for a fuel cell described above, the present seventh invention has been made in order to solve them, and an object thereof is to provide a fuel reservoir for a fuel cell and a fuel cell in which a liquid fuel can quantitatively be supplied efficiently to a cell without providing a pump, an electromagnetic valve, a controlling device for controlling a discharge amount of a liquid fuel, a discharge amount sensor and the like and in which used fuel can automatically be recovered with ease without providing separately a used fuel recovery tank.

In light of the problems in the conventional fuel cells described above, the present eighth invention has been made in order to solve them, and an object thereof is to provide a fuel cell in which a liquid fuel is stably supplied directly to a fuel electrode, which makes it possible to reuse used waste fuel with ease, in which exhaustion of the fuel can readily be found by the users and in which a size thereof can be reduced.

### Means for solving the problem

Intensive studies on the conventional problems described above repeated by the present inventors have resulted in finding that a fuel cell which meets the object described above comprises a fuel cell connected plural unit cells each of which is formed by constructing an electrolyte layer on a fuel electrode body comprising a fine porous carbonaceous body and constructing an air electrode layer on the electrolyte layer, wherein a fuel supplying member is connected directly with a fuel storing tank to supply fuel to the respective unit cells, and a used liquid fuel storing tank having a specific structure is connected with an end of the fuel supplying member, and thus the first invention to fifth invention have come to be completed.

Also, the present inventors have succeeded in obtaining a fuel reservoir for a fuel cell and a fuel cell which meet the object described above by a cartridge type fuel reservoir detachably connected with a fuel cell main body, wherein the above fuel reservoir is provided with a specific structure, and thus the sixth invention and seventh invention have come to be completed.

Further, the present inventors have succeeded in obtaining a fuel cell which meets the object described above and which comprises a fuel cell connected plural unit cells each of which is formed by constructing an electrolyte layer on an outer surface of a fuel electrode body comprising a fine porous carbonaceous body and constructing an air electrode layer on an outer surface of the electrolyte layer, wherein a fuel supplying member is connected directly with a liquid fuel storing tank to supply fuel to the respective unit cells, and a used liquid fuel storing tank having a specific structure is connected with an end of the fuel supplying member, and thus the eighth invention has come to be completed.

That is, the present invention comprises the following items (1) to (62).
(1) A fuel cell in which plural unit cells each of which is formed by constructing an electrolyte layer on a fuel electrode body and constructing an air electrode layer on the electrolyte layer are connected and in which a fuel supplying member connected with a fuel storing tank for storing a liquid fuel and having a penetrating structure or the fuel electrode body is connected with the respective unit cells to supply the liquid fuel, wherein a liquid fuel occlusion body comprising a porous body and/or a fiber bundle having capillary force is accommodated in the liquid fuel storing tank described above.
(2) The fuel cell as described in the above item (1), wherein the liquid fuel storing tank described above is an exchangeable cartridge structure.
(3) The fuel cell as described in the above item (1) or (2), wherein the liquid fuel is continuously supplied from the cartridge structure described above to the fuel supplying member via a feed comprising a porous body and/or a fiber bundle occlusion body having larger capillary force than that of the liquid fuel occlusion body described above.
(4) The fuel cell as described in any one of the above items (1) to (3), wherein capillary force of the fuel supplying member or the fuel electrode body described above is larger than capillary force of the feed described above.
(5) The fuel cell as described in any one of the above items (2) to (4), wherein in the fuel cell in which the liquid fuel impregnated in the cartridge structure described above is supplied to the fuel supplying member, the liquid fuel impregnated in the cartridge structure is supplied to the fuel supplying member via a liquid fuel guide tube which is formed by a transparent or translucent resin having visibility and in which a liquid fuel repelling layer is formed at least on a face brought into contact with the liquid fuel; and an exhaustion sign of the liquid fuel supplied from the cartridge structure is detected by visually observing the liquid fuel guide tube through a visible part formed in the cartridge structure.
(6) The fuel cell as described in the above item (5), wherein a smooth part and a part having fine irregularities are provided on an inner wall of the visible part described above, and by combining them an indicator with which exhaustion of the liquid fuel is detected by a user is provided.
(7) The fuel cell as described in any one of the above items (2) to (6), wherein the liquid fuel can continuously be supplied in the state that the cartridge structure described above is situated at a lower position than that of the fuel supplying member described above.
(8) The fuel cell as described in any one of the above items (1) to (7), wherein the liquid fuel described above is colored.
(9) The fuel cell as described in any one of the above items (1) to (8), wherein a used liquid fuel storing tank is connected with an end of the fuel supplyingmember described above and the cartridge structure described above can be used as the used liquid fuel storing tank.
(10) A fuel cell in which plural unit cells each of which is formed by constructing an electrolyte layer on a fuel electrode body and constructing an air electrode layer on the electrolyte layer are connected and in which a fuel supplying member connected with a fuel storing tank for storing a liquid fuel and having a penetrating structure or the fuel electrode body is connected with the respective unit cells to supply the liquid fuel, wherein a supplying mechanism for supplying the liquid fuel from the fuel storing tank to the fuel supplying member is provided with a collector body or a valve.
(11) The fuel cell as described in the above item (10), wherein the liquid fuel storing tank described above comprises an exchangeable cartridge structure.
(12) The fuel cell as described in the above item (10) or (11), wherein the collector body described above is produced by injection molding or stereolithography or the collector body is constituted from a single layer member.
(13) The fuel cell as described in any one of the above items (10) to (12), wherein a surface free energy on the surface of the collector body described above is controlled to a higher value than that of the liquid fuel described above.
(14) The fuel cell as described in any one of the above items (10) to (13), wherein the liquid fuel is continuously supplied from the cartridge structure described above to the fuel supplying member via a feed comprising a porous body and/or a fiber bundle having capillary force.
(15) The fuel cell as described in any one of the above items (10) to (14), wherein a used liquid fuel storing tank is connected with an end of the fuel supplyingmember described above and the cartridge structure described above can be used as the used liquid fuel storing tank.
(16) The fuel cell as described in the above item (10), wherein the valve described above is opened by pressing the liquid fuel storing tank and/or the fuel supplying member each described above to supply a fixed amount of the liquid fuel to the fuel supplying member.
(17) The fuel cell as described in the above item (10) or (16), wherein the liquid fuel storing tank described above is a cartridge structure having a valve.
(18) A fuel cell in which plural unit cells each of which is formed by constructing an electrolyte layer on a fuel electrode body and constructing an air electrode layer on the electrolyte layer are connected, in which a fuel supplying member connected with a liquid fuel storing tank for storing a liquid fuel and having a penetrating structure or the fuel electrode body is connected with the respective unit cells to supply the liquid fuel and in which an end of the fuel supplying member is connected with a used fuel storing tank, wherein the used liquid fuel storing tank is provided with a feed comprising a porous body and/or a fiber bundle having capillary force to discharge a used fuel to the used fuel storing tank via the feed, and a part other than a discharge port via the feed is hermetically closed.
(19) The fuel cell as described in the above item (18), wherein the used liquid fuel storing tank described above is provided with a used fuel occlusion body comprising a porous body and/or a fiber bundle having capillary force so that the occlusion body is brought into contact with the feed described above.
(20) The fuel cell as described in the above item (18) or (19), wherein the feed of the used fuel occlusion body described above has larger capillary force than that of the fuel supplying member described above.
(21) The fuel cell as described in any one of the above items (18) to (20), wherein the used fuel occlusion body described above has larger capillary force than that of the feed described above.
(22) The fuel cell as described in any one of the above items (18) to (21), wherein a discharge mechanism for discharging the used liquid fuel to the used fuel occlusion body in the used fuel storing tank described above is provided with a collector body.
(23) The fuel cell as described in any one of the above items (18) to (22), wherein the collector body described above is produced by injection molding or stereolithography or the collector body is constituted from a single layer member.
(24) The fuel cell as described in any of the above items (18) to (23), wherein a surface free energy on the surface of the collector body described above is controlled to a higher value than that of the used liquid fuel described above.
(25) The fuel cell as described in any one of the above items (18) to (24), wherein the used liquid fuel storing tank described above is detachable.
(26) The fuel cell as described in any one of the above items (18) to (25), wherein the used liquid fuel storing tank described above is provided with an openable and closable cover.
(27) A fuel cell in which plural unit cells each of which is formed by constructing an electrolyte layer on a fuel electrode body and constructing an air electrode layer on the electrolyte layer are connected, in which a fuel supplying member connected with a liquid fuel storing tank for storing a liquid fuel and having a penetrating structure is connected with the respective unit cells to supply the liquid fuel and in which an end of the fuel supplying member is connected with a used fuel storing tank, wherein assumed is a constitution in which a feed comprising a porous body and/or a fiber bundle having capillary force is provided to discharge used fuel to the used fuel storing tank via the feed, and the used fuel storing tank is opened.
(28) The fuel cell as described in the above item (27), wherein the used liquid fuel storing tank described above is provided with a used fuel occlusion body comprising a porous body and/or a fiber bundle having capillary force.
(29) The fuel cell as described in the above item (27) or (28), wherein the feed in the used fuel occlusion body described above has larger capillary force than that of the fuel supplying member described above.
(30) The fuel cell as described in any one of the above items (27) to (29), wherein the used liquid fuel occlusion body described above has larger capillary force than that of the feed described above.
(31) The fuel cell as described in any one of the above items (27) to (30), wherein a discharge mechanism for discharging the used liquid fuel to the used fuel occlusion body in the used fuel storing tank described above is provided with a collector body.
(32) The fuel cell as described in any one of the above items (27) to (31), wherein the collector body described above is produced by injection molding or stereolithography or the collector body is constituted from a single layer member.
(33) The fuel cell as described in any one of the above items (27) to (32), wherein a surface free energy on the surface of the collector body described above is controlled to a higher value than that of the used liquid fuel described above.
(34) The fuel cell as described in any one of the above items (27) to (33), wherein the used liquid fuel storing tank described above is detachable.
(35) The fuel cell as described in any one of the above items (27) to (34), wherein the used fuel storing tank described above is provided with an openable and closable cover.
(36) The fuel cell as described in any one of the above items (27) to (35), wherein the used fuel storing tank described above is provided with a fine aperture, and a surface free energy on an inner face of the used fuel storing tank and in the vicinity of the fine aperture is controlled to a lower value than that of the used liquid fuel described above.
(37) The fuel cell as described in any one of the above items (1) to (36), wherein the liquid fuel is at least one selected from a methanol solution, dimethyl ether (DME), formic acid, hydrazine, an ammonia solution, ethylene glycol and a sodium boron hydride aqueous solution.
(38) A fuel reservoir for a fuel cell which is a cartridge type fuel reservoir detachably connected with a fuel cell main body, wherein the cartridge type fuel reservoir is equipped with a fuel tank for storing a liquid fuel, a liquid fuel discharge part provided at a tip of the fuel tank and having a check valve and a liquid fuel pressing mechanism provided in the fuel tank; and the liquid fuel stored in the fuel tank is pushed forward by the liquid fuel pressing mechanism to supply a fixed amount to the liquid fuel discharge part and a fixed amount of the liquid fuel is discharged from the liquid fuel discharge part.
(39) The fuel reservoir for a fuel cell as described in the above item (38), wherein the liquid fuel pressing mechanism is equipped at the rear of a fuel tank with a rotation operating member constituted by an outer cylindrical member and an inner cylindrical member which is non-rotatably inserted into the inside of the outer cylindrical member, a rachet mechanism provided at a tip part of the outer cylindrical member in the rotation operating member and comprising rachet teeth formed on an inner face of the fuel tank and locking pawls engaged with the rachet teeth, a screw rod inserted into the inside of the inner cylindrical member in the rotation operating member and a piston provided at a tip part of the screw rod and inserted into the fuel tank so as to be slidable on the inner face in front of a partition wall protruded on the inner face of the fuel tank; a male screw part formed on an outer face of the screw rod screws with a female screw part formed at a front end of the inner cylindrical member, and the screw rod is inserted into an inserting pore of the partition wall and movable only in a longitudinal direction relative to the inner cylindrical member; the screw rod is rotated by a rotating operation of the outer cylindrical member in the rotation operating member tomove forward by screwing with the female screw part, and a fixed amount of the liquid fuel is supplied to the liquid fuel discharge part by means of the piston connected with a tip of the screw rod and a fixed amount of the liquid fuel is pushed out from the liquid fuel discharge part.
(40) The fuel reservoir for a fuel cell as described in the above item (38) or (39), wherein the fuel tank has at least one oxygen barrier resin layer.
(41) The fuel reservoir for a fuel cell as described in the above item (40), wherein the oxygen barrier resin layer comprises at least one resin of ethylene·vinyl alcohol copolymer resins, polyacrylonitrile, nylon, polyethylene terephthalate, polycarbonate, polystyrene, polyvinylidene chloride and polyvinyl chloride.
(42) The fuel reservoir for a fuel cell as described in any one of the above items (38) to (41), wherein the fuel tank is formed by a material having a light transmittance of 50 % or more.
(43) The fuel reservoir for a fuel cell as described in any one of the above items (38) to (42), wherein a surface free energy on at least a wall surface of the fuel tank brought into contact with the liquid fuel is controlled to a lower value than that of the liquid fuel.
(44) A fuel cell comprising a fuel cell main body and a cartridge type fuel reservoir detachably connected with the fuel cell main body, wherein assumed is a constitution in which the fuel cell main body connects plural unit cells each of which is formed by constructing an electrolyte layer on an outer surface of a fuel electrode body and constructing an air electrode layer on an outer surface of the electrolyte layer and in which the unit cells are connected with a fuel supplying member connected with the fuel reservoir for a fuel cell as described in any one of the above items (38) to (43) to allow a liquid fuel to be supplied.
(45) A fuel reservoir for a fuel cell which is a cartridge type fuel reservoir detachably connected with a fuel cell main body, wherein the cartridge type fuel reservoir is equipped with a fuel tank storing a liquid fuel and having a waste fuel recovery aperture part, a liquid fuel discharge part provided at a tip of the fuel tank and having a check valve and a liquid fuel pressing mechanism provided in the fuel tank; the liquid fuel stored in the fuel tank is pushed forward by the liquid fuel pressing mechanism to discharge a fixed amount to the fuel cell main body; and a space part in the fuel tank which is formed by the pressing mechanism is used as a waste fuel recovery tank for used fuel consumed in the fuel cell main body.
(46) The fuel reservoir for a fuel cell as described in the above item (45), wherein the liquid fuel pressing mechanism is equipped at the rear of a fuel tank with a rotation operating member constituted by an outer cylindrical member and an inner cylindrical member which is non-rotatably inserted into the inside of the outer cylindrical member, a rachet mechanism provided at a tip part of the outer cylindrical member in the rotation operating member and comprising rachet teeth formed on an inner face of the fuel tank and locking pawls engaged with the rachet teeth, a screw rod inserted into the inside of the inner cylindrical member in the rotation operating member and a piston provided at a tip part of the screw rod and inserted into the fuel tank so as to be slidable on the inner face in front of a partition wall protruded on the inner face of the fuel tank; a male screw part formed on an outer face of the screw rod screws with a female screw part formed at a front end of the inner cylindrical member, and the screw rod is inserted into an inserting pore of the partition wall and movable only in a longitudinal direction relative to the inner cylindrical member; the screw rod is rotated by a rotating operation of the outer cylindrical member in the rotation operating member to move forward by screwing with the female screw part, and a fixed amount of the liquid fuel is supplied to the liquid fuel discharge part by means of the piston connected with a tip of the screw rod and a fixed amount of the liquid fuel is pushed out from the liquid fuel discharge part.
(47) The fuel reservoir for a fuel cell as described in the above item (45) or (46), wherein the fuel tank has at least one oxygen barrier layer.
(48) The fuel reservoir for a fuel cell as described in the above item (47), wherein the oxygen barrier layer comprises at least one resin of ethylene·vinyl alcohol copolymer resins, polyacrylonitrile, nylon, polyethylene terephthalate, polycarbonate, polystyrene, polyvinylidene chloride and polyvinyl chloride.
(49) The fuel reservoir for a fuel cell as described in the above item (48), wherein the oxygen barrier layer comprises a resin film on which a metal oxide is deposited; the metal oxide comprises one of alumina and silica or both of them; and the resin film comprises one of polyethylene terephthalate, polystyrene, polyethylene, polypropylene and nylon or a composite thereof.
(50) The fuel reservoir for a fuel cell as described in the above item (48), wherein the oxygen barrier layer comprises a resin film coveredwithdiamond-likecarbon (DLC); and the resin filmcomprises one of polyethylene terephthalate, polystyrene, polyethylene, polypropylene and nylon or a composite thereof.
(51) The fuel reservoir for a fuel cell as described in any one of the above items (48) to (50), wherein the fuel tank is formed from a material having a light transmittance of 50 % or more.
(52) A fuel cell comprising a fuel cell main body and a cartridge type fuel reservoir ditachably connected with the fuel cell main body, wherein the cartridge type fuel reservoir is equipped with a fuel tank storing a liquid fuel and having a waste fuel recovery aperture part, a liquid fuel discharge part provided at a tip of the fuel tank and having a check valve and a liquid fuel pressing mechanism provided in the fuel tank; the liquid fuel stored in the fuel tank is pushed forward by the liquid fuel pressing mechanism to discharge a fixed amount to the fuel cell main body; and used fuel consumed in the fuel cell main body is recovered in a space part of the fuel tank which is formed by the pressing mechanism.
(53) The fuel cell as described in the above item to (52), wherein the fuel cell main body is provided with a used fuel storing tank, and the used fuel storing tank is connected with the waste fuel recovery aperture part having a check valve in the fuel tank.
(54) A fuel cell assuming a constitution in which a fuel cell main body connects plural unit cells each of which is formed by constructing an electrolyte layer on an outer surface of a fuel electrode body and constructing an air electrode layer on an outer surface of the electrolyte layer and in which the unit cells are connected with a fuel supplying member connected with the fuel reservoir for a fuel cell as described in any one of the above items (45) to (53) to allow a liquid fuel to be supplied.
(55) A fuel cell which connects plural unit cells each of which is formed by constructing an electrolyte layer on an outer surface of a fuel electrode body and constructing an air electrode layer on an outer surface of the electrolyte layer, in which a fuel supplying member connected with a fuel storing tank for storing a liquid fuel and having a penetrating structure or the fuel electrode body is connected with the respective unit cells to supply the liquid fuel and in which an end of the fuel supplying member is connected with a used fuel storing tank, wherein assumed is a constitution in which the used fuel storing tank is connected with the fuel storing tank and in which used fuel is supplied to the fuel storing tank and can be reused as the liquid fuel.
(56) The fuel cell as described in the above item (55), wherein the liquid fuel storing tank described above is equipped with a concentration sensor of the liquid fuel.
(57) The fuel cell as described in the above item (55) or (56), wherein a feed is disposed in a connecting part of the used fuel storing tank described above with the fuel storing tank described above.
(58) The fuel cell as described in any one of the above items to (54) to (56), wherein a feed is disposed in a connecting part of the used fuel storing tank described above with the fuel storing tank described above, and a collector body is further disposed.
(59) The fuel cell as described in any one of the above items to (55) to (58), wherein the collector body described above is produced by injection molding or stereolithography or the collector body is constituted from a single layer member.
(60) The fuel cell as described in any one of the above items (55) to (59), wherein a surface free energy on the surface of the collector body described above is controlled to a higher value than that of the used liquid fuel described above.
(61) The fuel cell as described in any one of the above items to (55) to (60), the used fuel storing tank described above and/or the fuel storing tank described above or a connecting part of the used fuel storing tank with the fuel storing tank is detachable.
(62) The fuel cell as described in any one of the above items (55) to (61), wherein the used fuel storing tank described above and/or the fuel storing tank described above or a connecting part of the used fuel storing tank with the fuel storing tank is provided with an openable and closable cover.

### Effects of the invention

According to the first invention to fifth invention, provided are the fuel cells in which a liquid fuel can stably and continuously be supplied directly to each of the respective unit cells and in which a size thereof can be reduced.

In these inventions, a fuel storing tank constituted from an exchangeable cartridge structure can readily be exchanged.

In the first invention, connection of a used fuel storing tank with an end of a fuel supplying member and use of a cartridge structure as a fuel storing tankmake it possible to readily dispose a used fuel, and the liquid fuel can stably and continuously be supplied from a fuel storing tank directly to each of the respective unit cells without causing backflowing and disruption even if the fuel cell is left standing in any state (angle) or upside down.

In a fuel cell in which a liquid fuel impregnated in a cartridge structure is supplied to a fuel supplying member, the liquid fuel impregnated in the cartridge structure is supplied to the fuel supplying member via a liquid fuel guide tube which is formed by a transparent or translucent resin having visibility and in which a liquid fuel repelling layer is formed at least on a face brought into contact with the liquid fuel, and an exhaustion sign of the liquid fuel supplied from the cartridge structure described above is detected by visually observing the liquid fuel guide tube through a visible part formed in the cartridge structure, whereby the exhaustion sign of the liquid fuel can readily be detected with eyes.

Further, if a surface free energy on the surface of the collector body is controlled to a higher value than that of the liquid fuel, the liquid fuel can stably and continuously be supplied directly to each of the respective unit cells.

According to the sixth invention, provided are a fuel reservoir for a fuel cell in which a liquid fuel can quantitatively be supplied efficiently to a cell without providing a pump, an electromagnetic valve, a controlling device for controlling a discharge amount of a liquid fuel, a discharge amount sensor and the like and which can reduce a size of the fuel cell, and a fuel cell.

According to the seventh invention, provided are a fuel reservoir for a fuel cell in which a liquid fuel can quantitatively be supplied efficiently to a cell without providing a pump, an electromagnetic valve, a controlling device for controlling a discharge amount of a liquid fuel, a discharge amount sensor and the like and in which a used fuel can automatically be recovered with ease without providing separately a waste fuel recovery tank, and a fuel cell.

According to the eighth invention, provided is a fuel cell in which a liquid fuel is stably supplied directly to a fuel electrode, which makes it possible to reuse used fuel with ease and in which a size thereof can be reduced.

Also, provided is a fuel cell in which exhaustion of a fuel can readily be found by the users by disposing a concentration sensor of a liquid fuel.

Further, provided is a fuel cell in which disposition of a feed and a collector body in a connecting part of a used fuel storing tank with a fuel storing tank makes it possible to stably supply a liquid fuel directly to a fuel electrode and reuse used fuel with ease and which is excellent in usability.

### Brief Explanation of the Drawings

Fig. 1 (a) is an outline drawing in a vertical cross-sectional embodiment showing a fuel cell in the first embodiment of the first invention; (b) is a perspective drawing of a unit fuel cell; and (c) is a vertical cross-sectional drawing of the unit fuel cell.
Fig. 2 is an outline drawing in a vertical cross-sectional embodiment showing a fuel cell in a modified example of the first embodiment of the first invention.
Fig. 3 is an outline drawing in a vertical cross-sectional embodiment showing a fuel cell in the second embodiment of the first invention.
Fig. 4 is an outline perspective drawing showing one example of a detecting tube used in the second embodiment of the first invention.
Fig. 5 is an outline partial drawing in a vertical cross-sectional embodiment showing a fuel cell in the third embodiment of the first invention.
Fig. 6 is an outline partial drawing in a vertical cross-sectional embodiment showing a fuel cell in the fourth embodiment of the first invention.
Fig. 7 (a) is an outline drawing in a vertical cross-sectional embodiment showing a fuel cell in the first embodiment of the second invention; (b) is a perspective drawing of a unit fuel cell; and (c) is a vertical cross-sectional drawing of the unit fuel cell.
Fig. 8 is an outline drawing in a vertical cross-sectional embodiment showing a fuel cell in a modified example of the first embodiment of the second invention.
Fig. 9 is an outline drawing in a vertical cross-sectional embodiment showing a fuel cell in the second embodiment of the second invention.
Fig. 10 is a partial outline drawing in a vertical cross-sectional embodiment showing a fuel cell in the third embodiment of the second invention.
Fig. 11 (a) isanoutlinedrawinginaverticalcross-sectional embodiment showing a fuel cell in the first embodiment of the third invention, and (b) is a partial vertical cross-sectional drawing showing an essential part of a unit fuel cell.
Fig. 12 (a) is an outline drawing in a vertical cross-sectional embodiment showing a fuel cell in the second embodiment of the third invention; (b) is a partial vertical cross-sectional drawing of a unit fuel cell; and (c) and (d) are a partial vertical cross-sectional drawing and a perspective drawing showing an essential part of a unit fuel cell showing another embodiment.
Fig. 13 is a partial drawing in a vertical cross-sectional embodiment showing a fuel cell in the third embodiment of the third invention.
Fig. 14 is a partial drawing in a vertical cross-sectional embodiment showing a fuel cell in a fourth embodiment of the third invention.
Fig. 15 (a) isanoutlinedrawinginaverticalcross-sectional embodiment showing a fuel cell in the first embodiment of the fourth invention; (b) is a perspective drawing of a unit fuel cell; and (c) is a vertical cross-sectional drawing of the unit fuel cell.
Fig. 16 is an outline drawing in a vertical cross-sectional embodiment showing a fuel cell in the second embodiment of the fourth invention.
Fig. 17 (a) isanoutlinedrawinginaverticalcross-sectional embodiment showing a fuel cell in the third embodiment of the fourth invention; (b) is an outline drawing in a vertical cross-sectional embodiment showing a fuel cell in the fourth embodiment of the fourth invention; and (c) is a partial cross-sectional drawing showing a mounting structure of a unit cell.
Fig. 18 is an outline drawing in a vertical cross-sectional embodiment showing a fuel cell in the fifth embodiment of the fourth invention.
Fig. 19 (a) is a partial outline drawing in a vertical cross-sectional embodiment showing a fuel cell in the sixth embodiment of the fourth invention, and (b) is an outline cross-sectional drawing showing another embodiment of a used fuel storing tank.
Fig. 20 is an outline drawing in a vertical cross-sectional embodiment showing a fuel cell in the seventh embodiment of the fourth invention.
Fig. 21 (a) isanoutlinedrawinginaverticalcross-sectional embodiment showing a fuel cell in the first embodiment of the fifth invention; (b) is a perspective drawing of a unit fuel cell; (c) is a vertical cross-sectional drawing of the unit fuel cell; (d) is a perspective drawing showing an opening structure of a used fuel storing tank; and (e) is a vertical cross-sectional drawing showing an opening structure of the used fuel storing tank.
Fig. 22 is an outline cross-sectional drawing in a vertical cross-sectional embodiment showing a fuel cell in the second embodiment of the fifth invention.
Fig. 23 (a) is anoutline drawing inavertical cross-sectional embodiment showing a fuel cell in the third embodiment of the fifth invention (b) is an outline drawing in a vertical cross-sectional embodiment showing a fuel cell in the fourth embodiment of the fifth invention; and (c) is a partial cross-sectional drawing showing a mounting structure of a unit cell.
Fig. 24 is an outline drawing in a vertical cross-sectional embodiment showing a fuel cell in the fifth embodiment of the fifth invention.
Fig. 25 (a) is an outline partial drawing in a vertical cross-sectional embodiment showing a fuel cell in the sixth embodiment of the fifth invention, and (b) is an outline cross-sectional drawing showing another embodiment of a used fuel storing tank.
Fig. 26 (a) is an outline partial drawing in a vertical cross-sectional embodiment showing a fuel cell in the sixth embodiment of the fifth invention, and (b) is an outline cross-sectional drawing showing another embodiment of a used fuel storing tank.
Fig. 27 is a fuel cell in the seventh embodiment of the fifth invention and is a drawing showing an occlusion body accommodated in a used fuel storing tank; (a) is a perspective drawing; (b) is a plain drawing; and (c) is a front view.
Fig. 28 is a vertical cross-sectional drawing showing a fuel reservoir for a fuel cell in the first embodiment of the sixth invention.
Fig. 29 is a partial exploded perspective drawing of Fig. 28.
Fig. 30 shows an operation state of the fuel reservoir for a fuel cell shown in Fig. 28, and it is a vertical cross-sectional drawing showing one example of a state in which a fixed amount of a liquid fuel is supplied to a liquid fuel discharge part.
Fig. 31 is an outline cross-sectional drawing showing one example in the embodiment of a fuel cell of the sixth invention, and it is a drawing showing a state in which a fuel reservoir for a fuel cell of the present invention is mounted in the fuel cell main body.
Fig. 32 (a) and (b) are a perspective drawing and a vertical cross-sectional drawing explaining a unit cell of a fuel cell.
Fig. 33 is a partial plain drawing showing a fuel reservoir for a fuel cell in the second embodiment of the sixth invention.
Fig. 34 (a) and (b) are drawings showing another embodiment of a check valve provided in a liquid fuel discharge part, wherein (a) is a vertical cross-sectional drawing showing a state in which the check valve is closed, and (b) is a vertical cross-sectional drawing showing a state in which the check valve is opened.
Fig. 35 (a) is a vertical cross-sectional drawing showing a fuel reservoir for a fuel cell in the first embodiment of the seventh invention, and (b) is a vertical cross-sectional drawing of the waste fuel recovery aperture part.
Fig. 36 is a partial exploded perspective drawing of Fig. 35.
Fig. 37 shows an operation state of the fuel reservoir for a fuel cell shown in Fig. 35, and it is a vertical cross-sectional drawing showing one example of a state in which a fixed amount of a liquid fuel is supplied to a liquid fuel discharge part.
Fig. 38 is an outline cross-sectional drawing showing one example in the embodiment of a fuel cell of the seventh invention, and it is a drawing showing a state in which a fuel reservoir for a fuel cell of the present invention is mounted in a fuel cell main body.
Fig. 39 is a drawing in a vertical cross-sectional embodiment showing a fuel cell in the first embodiment of the eighth invention.

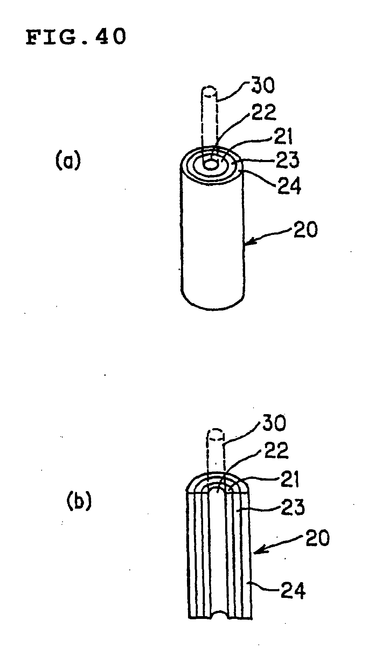

Fig. 40 (a) is a perspective drawing of a unit cell used for the fuel cell shown in Fig. 39, and (b) is a partial vertical cross-sectional drawing thereof.
Fig. 41 is a drawing in a vertical cross-sectional embodiment showing a fuel cell in the second embodiment of the eighth invention.
Fig. 42 is an outline drawing in a perspective drawing embodiment showing a fuel cell in the third embodiment of the eighth invention.
Fig. 43 (a) is a perspective drawing of a unit cell used for the fuel cell shown in Fig. 42, and (b) is a partial vertical cross-sectional drawing of the unit cell.

### List of Reference Numerals

- A :: Fuel cell
- 10 :: Fuel storing tank
- 10a:: Feed
- 11 :: Collector body
- 20 :: Unit cell
- 30 :: Fuel supplying member
- 40 :: Used fuel storing tank

### Best Mode for Carrying Out the Invention

The embodiments of the first invention shall be explained below in details with reference to the drawings.

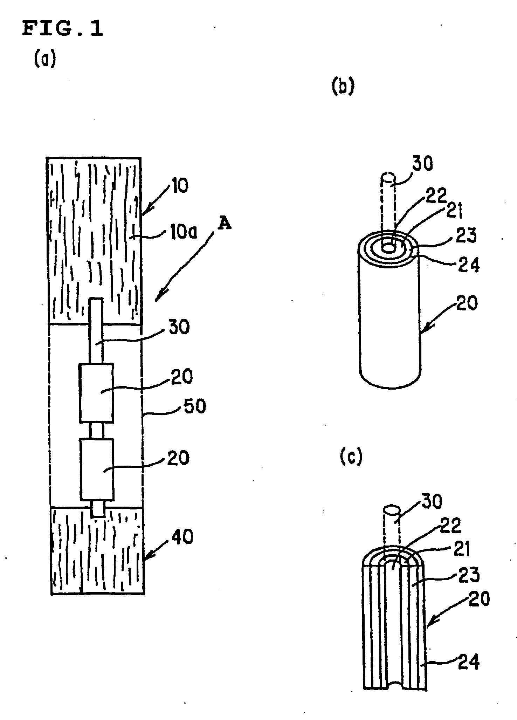

Fig. 1 (a) to (c) show the fundamental mode (first embodiment) of the fuel cell A showing the fundamental embodiment of the first invention.

The above fuel cell A is equipped with, as shown in Fig. 1 (a) to (c), a fuel storing tank 10 for storing a liquid fuel, unit cells (fuel-cell cells) 20, 20 each of which is formed by constructing an electrolyte layer 23 on an outer surface of a fuel electrode body 21 comprising a fine porous carbonaceous substance and constructing an air electrode layer 24 on an outer surface of the electrolyte layer 23, a fuel supplying member 30 connected with the fuel storing tank 10 described above and having a penetrating structure and a used fuel storing tank 40 provided at an end of the above fuel supplying member 30, and assumed is a structure in which the respective unit cells 20, 20 described above are connected in series and in which the fuel is supplied in order by means of the fuel supplying member 30.

In the present embodiment, the liquid fuel is occluded in an occlusion body 10a of a sliver, a porous body or a fiber bundle accommodated in the fuel storing tank 10.

The liquid fuel occluded in the occlusion body 10a of the fuel storing tank 10 includes a methanol solution comprising methanol and water, but the liquid fuel shall not specifically be restricted as long as hydrogen ions (H⁺) and electrons (e⁻) are efficiently obtained from a compound supplied as a fuel in a fuel electrode body described later. For example, liquid fuels such as dimethyl ether (DME), an ethanol solution, formic acid, hydrazine, an ammonia solution, ethylene glycol and a sodium boron hydride aqueous solution can be used as well, though depending on the structure of the fuel electrode body.

The above liquid fuels having various concentrations can be used according to the structure and the characteristics of the fuel cell, and the liquid fuels having a concentration of, for example, 1 to 100 % can be used.

The above occlusion body 10a shall not specifically be restricted as long as it can occlude a liquid fuel, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set, if necessary, according to an amount of the liquid fuel supplied to the respective unit cells 20.

The fuel storing tank 10 described above shall not specifically be restricted as long as it has durability, storage stability against the liquid fuel F stored therein and gas non-permeability (gas non-permeability against oxygen gas, nitrogen gas and the like), and it includes metals such as aluminum and stainless steel, synthetic resins such as polypropylene, polyethylene and polyethylene terephthalate and glass.

Further, the fuel storing tank has preferably light transmittance so that a remaining amount of the liquid fuel can be visually observed. In respect to light transmittance which makes it possible to visually observe a remaining amount of the liquid fuel, the content can be visually observed regardless of the material and a thickness thereof if the light transmittance is 50 % or more. More preferably, if the light transmittance is 80 % or more, it has no problems in terms of actual use, and visibility of the liquid fuel is further enhanced.

In order to prevent the liquid fuel from leaking and vaporizing and prevent air from coming into the fuel reservoir, it is preferably constituted from a gas non-permeable material, and more preferably, if it has an oxygen gas permeability (oxygen gas non-permeability) of 100 cc-25 µm/m²·24 hr·atm (25°C, 65 % RH) or less, it has no problems in terms of actual use.

The fuel storing tank 10 shall not specifically be restricted as long as it has the above characteristics, and it has preferably storage stability against a liquid fuel stored therein, durability and light transmittance. It includes, for example, metals such as aluminum and stainless steel, synthetic resins such as polypropylene, polyethylene and polyethylene terephthalate and glass.

In respect to the material of the fuel storing tank 10, the preferredmaterial includes, if light transmittance is not required, metals such as aluminum and stainless steel, synthetic resins and glass, and from the viewpoints of visibility of a remaining amount of the liquid fuel, gas non-permeability, reduction in a cost in producing and assembling and easiness of the production, it includes preferably those comprising a single layer structure or a multilayer structure of two or more layers comprising a single kind or two or more kinds of resins such as ethylene·vinyl alcohol copolymer resins, polyacrylonitrile, nylon, polyethylene terephthalate, polycarbonate, polystyrene, polyvinylidene chloride and polyvinyl chloride, and more preferably, the above resins in which the oxygen gas permeability (oxygen gas non-permeability) is 100 cc·25 µ m/m²-24 hr·atm (25°C, 65 % RH) or less and in which light transmittance is 50 % or more, particularly preferably 80 % or more are preferably selected.

Particularly preferably, they are ethylene·vinyl alcohol copolymer resins, polyacrylonitrile and polyvinylidene chloride which have an oxygen gas non-permeability of the characteristic described above and in which light transmittance is 80 % or more.

The fuel storing tank 10 comprises preferably a multilayer structure of two or more layers and comprises desirably a multilayer structure of two or more layers in which at least one layer is constituted from a material containing the resin group described above having the gas non-permeability and the light transmittance each described above. If at least one layer in the multilayer structure is constituted from the resin having the performance (gas permeability) described above, the remaining layers may be constituted from usual resins, and no problems in terms of actual use shall be involved therein. Such multilayer structure can be produced by extrusion molding, injection molding, coextrusion molding and the like.

Further, in place of at least one gas non-permeable layer provided by the above molding, a gas non-permeable layer can be provided as well by coating a solution of a resin selected from the resin group described above. In this coating method, more specific production facilities than in the production by molding such as extrusion molding, injectionmolding and the like described above are not required, and it can stepwise be produced.

The gas non-permeable layer provided by the above respective molding methods and coating has preferably a thickness of 10 to 2000 µm. If this thickness is less than 10 µm, the gas non-permeability can not be exhibited. On the other hand, if it exceeds 2000 µm, the performances of the whole part of the tank such as light transmittance and flexibility are deteriorated.

Further, in place of the gas non-permeable layer formed of the resins described above by molding or coating, it can be provided by covering with a non-permeable thin film member such as a gas non-permeable film. The non-permeable thin film member coated includes preferably at least one selected from metal foils such as an aluminum foil, deposition matters of metal oxides such as alumina and silica and diamond-like carbon coating materials. Such gas non-permeability as described above can be exhibited by covering an outer surface of the fuel storing tank 10 with the above non-permeable thin film members. The above non-permeable thin film member has preferably a thickness of 10 to 2000 µm as is the case with what has been described above. When the non-permeable thin film member is a member having no visibility, for example, an aluminum foil, a part of the fuel storing tank is not covered with it so that gas non-permeability is not damaged, and it is coated in a lattice form or a stripe form to provide an inspection window part. A gas non-permeable film having light transmittance can be coated on the above inspection window part to secure gas non-permeability and visibility.

The respective cells 20 which are the unit cells described above have the fuel electrode body 21 comprising a fine porous carbonaceous pillar body and in addition thereto, have a through part 22 in a central part thereof through which the fuel supplying member 30 passes, and it comprises a structure in which the electrolyte layer 23 is constructed on an outer surface of the fuel electrode body 21 described above and in which the air electrode layer 24 is constructed on an outer surface of the electrolyte layer 23. The respective unit cells 20 of the fuel cell generate an electromotive force of about 1.2 V per cell in theory.

The fine porous carbonaceous pillar body constituting the above fuel electrode body 21 may be any ones as long as they are porous structures having fine communication holes, and it includes, for example, carbon composite molded articles which comprise a three-dimensional network structure or a point sintered structure and which are constructed from amorphous carbon and carbon powder, isotropic high density carbon molded articles, carbon fiber paper-making molded articles and activated carbon molded articles. The carbon composite molded articles which comprise amorphous carbon and carbon powder and which have fine communication holes are preferred from the viewpoints of easiness in controlling reaction in the fuel electrode of the fuel cell and further rise in the reaction efficiency.

The carbon powder used for producing the above carbon composite bodies comprising a porous structure is preferably at least one (alone or combination of two ore more kinds thereof) selected from highly oriented pyrolytic graphite (HOPG), kish graphite, natural graphite, artificial graphite, carbon nanotube and fullerene.

Aplatinum-ruthenium (Pt-Ru) catalyst, an iridium-ruthenium (Ir-Ru) catalyst and a platinum-tin (Pt-Sn) catalyst are formed on an outer surface of the fuel electrode body 21 by a method in which a solution containing the above metal ions or a metal fine particle precursor such as metal complexes is subjected to impregnating or dipping treatment and then subjected to reducing treatment and an electrodeposition method of metal fine particles.

The electrolyte layer 23 includes ion exchange membranes having proton conductivity or hydroxide ion conductivity, for example, fluorine base ion exchange membranes including Nafion (manufactured by Du Pont Co., Ltd.), and in addition thereto, it includes membranes in which heat resistance and inhibition in methanol crossover are good, for example, composite membranes comprising an inorganic compound as a proton conducting material and a polymer as a membrane material, to be specific, composite membranes using zeolite as the inorganic compound and styrene-butadiene base rubber as the polymer, and hydrocarbon base graft membranes.

The air electrode layer 24 includes porous carbonaceous body on which platinum (Pt), palladium (Pd) and rhodium (Rh) are carried by a method using a solution containing the metal fine particle precursor described above and which comprise a porous structure.

The fuel supplying member 30 described above shall not specifically be restricted as long as it is connected with the occlusion body 10a for occludeing the liquid fuel stored in the fuel storing tank 10 and has a penetrating structure in which the above liquid fuel can be supplied to the respective unit cells 20, and it includes, for example, those comprising porous bodies having capillary force which are constituted from felts, sponges and sintered bodies such as resin particle sintered bodies and resin fiber sintered bodies and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set according to an amount of the liquid fuel supplied to the respective unit cells 20.

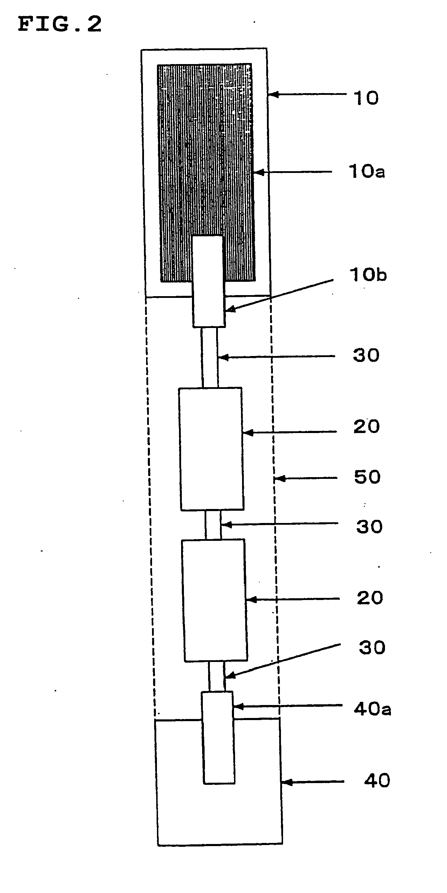

The used fuel storing tank 40 is disposed at an end of the fuel supplying member 30. In this case, it provides no problems if the used fuel storing tank 40 is brought into direct contact with the end of the fuel supplying member 30 to allow the used fuel to be directly occluded, and a sliver, a porous body or a fiber bundle may be provided, as shown in Fig. 2 (modified example of Fig. 1) as the feed 40a in a connecting part brought into contact with the fuel supplying member 30 to set it as a used fuel discharge passage.

The liquid fuel supplied by the fuel supplying member 30 is used for reaction in a unit cell 20 of the fuel cell, and since the fuel supplying amount is linked with the fuel consumption, the liquid fuel which is discharged to the outside of the cell without reacting is scarcely found, so that a treating system is not required at a fuel outlet side as is the case with conventional liquid fuel type fuel cells. However, assumed is a structure in which when the fuel comes to be supplied in excess depending on an operation status, the liquid fuel which is not used for the reaction can be stored in the storing tank 40 to prevent an inhibitory reaction.

Numeral 50 is a member comprising a mesh structure which joins the fuel storing tank 10 with the used fuel storing tank 40 and which allows the liquid fuel to be surely supplied from the fuel storing tank 10 to each of the respective unit cells 20, 20 via the fuel supplying member 30.

In the fuel cell A of the present embodiment thus constituted, the liquid fuel occluded in the occlusion body 10a in the fuel storing tank 10 is introduced into the unit cells 20, 20 of a fuel cell by a penetrating structure of the fuel electrode body 21 or the fuel supplying member 30 by virtue of capillary force. In this case, a feed 10b having the samematerial as that of the occlusion body 10a can be provided as well, as shown in Fig. 2, at a part where the fuel storing tank 10 is connected with the fuel electrode body 21 or the fuel supplying member 30. The liquid fuel can be prevented from being supplied in excess to the cell 20 by providing the above feed 10b, and controlling capillary force of the feed 10b makes it possible to control a supplying amount of the liquid fuel.

In the present embodiment, the capillary force of the fuel storing tank 10 (occlusion body 10a), the fuel electrode body 21 and/or the fuel supplying member 30 brought into contact with the fuel electrode body 21 and the used fuel storing tank 40 (feed 40a) is set, as shown in Fig. 1 (a) or Fig. 2, to the fuel storing tank 10 (occlusion body 10a)<the fuel electrode body 21 and/or the fuel supplying member 30 brought into contact with the fuel electrode body 21, whereby the liquid fuel can stably and continuously be supplied from the fuel storing tank 10 directly to each of the respective unit cells 20, 20 without causing backflow and disruption even if the fuel cell A is left standing in any state (angle) or upside down. Preferably, the respective capillary force is set to the fuel storing tank 10 (occlusion body 10a)<the fuel electrode body 21 and/or the fuel supplying member 30 brought into contact with the fuel electrode body 21<the used fuel storing tank 40 (feed 40a), whereby the stable flow of the liquid fuel can be produced.

Further, when providing the feed 10b, as shown in Fig. 2, in the fuel storing tank 10, capillary force of the feed 10b is set at least to the fuel storing tank 10 (the occlusion body 10a and the feed 10b)<the fuel electrode body 21 and/or the fuel supplying member 30 brought into contact with the fuel electrode body 21, whereby the used liquid fuel is prevented from causing backflow to go into the fuel storing tank. Preferably, the respective capillary force is set to the occlusion body 10a<the feed 10b<the fuel electrode body 21 and/or the fuel supplying member 30 brought into contact with the fuel electrode body 21<the feed 40a, whereby the stable flow of the liquid fuel can be produced regardless of the disposition (upper, lower or horizontal disposition) of the fuel cell.

Further, in the fuel cell A of the present embodiment, assumed is a structure in which the liquid fuel can smoothly be supplied as it is without vaporizing and without using specifically auxiliary equipment such as a pump, ablower, a fuel carburetor and a condenser, and therefore it becomes possible to reduce a size of the fuel cell.

Further, the fuel electrode body 21 having a penetrating structure is connected with an end part of the fuel storing tank 10 directly and/or with the fuel supplying member 30 brought into contact with the fuel electrode body 21 for supplying the fuel to the respective unit cells 20, 20, whereby reduction in a size of the fuel cell comprising plural cells can be achieved.

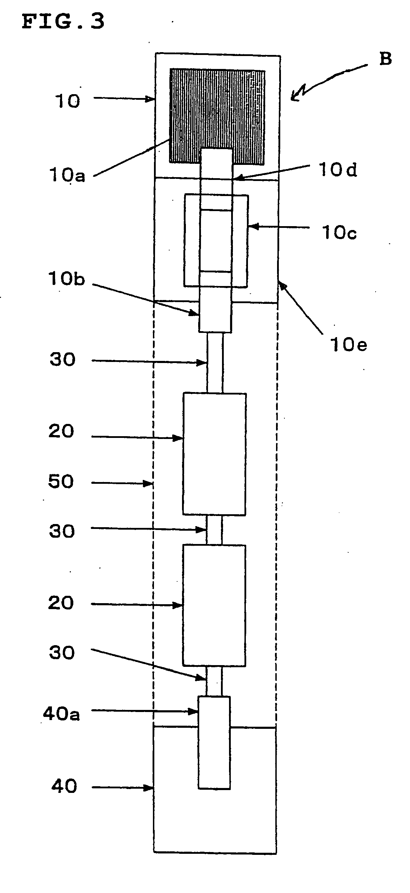

Fig. 3 shows the fuel cell B of the second embodiment in the first invention. In the following second embodiment and those subsequent thereto, fuel cells having the same structure and exhibiting the same effects as those of the fuel cell A of the first embodiment described above shall be given the same reference numerals as in Fig. 1, and the explanations thereof shall be omitted.

The above fuel cell B is different, as shown in Fig. 3, from the fuel cell A of the first embodiment described above only in that an exhaustion detector tube 10c for a liquid fuel is provided in the fuel storing tank 10.

In respect to the exhaustion detector tube 10c for a liquid fuel, when using the occlusion body 10a for a liquid fuel used in the first invention, a liquid fuel occluded is invisible, so that it is not detected by the user that the liquid fuel has been exhausted or is on the verge of exhaustion, and it is considered that disadvantages are exerted by sudden electric power failure. In order to prevent such situation, the exhaustion detector tube 10c to be a liquid fuel guide tube which is formed of a transparent or translucent resin having visibility and through which the liquid fuel passes is provided between a liquid fuel guiding feed 10d in the occlusion body 10a and the feed 10b to provide the fuel cell with a structure in which a lower part of the liquid fuel guiding feed 10d and an upper part of the feed 10b are inserted, as shown in Fig. 3, into the exhaustion detector tube 10c. This makes it possible to visually observe the absence of the liquid fuel in the occlusion body 10a by visually observing the absence of the liquid fuel in the exhaustion detector tube 10c through a transparent or translucent visible part 10e in the fuel storing tank 10.

The liquid fuel guiding feed 10d described above is constituted from the same material as that of the feed 10b. Plural occlusion bodies 10a are provided in the fuel storing tank 10, and the exhaustion detector tubes described above are provided respectively at the liquid fuel discharge parts of the above respective occlusion bodies 10a ---, whereby it becomes possible to detect exhaustion of the liquid fuel occluded in the respective occlusion bodies.

The material of the above exhaustion detector tube 10c shall not specifically be restricted as long as it has storage stability against the liquid fuel stored therein, durability and light transmittance, and it includes inorganic materials such as glass and synthetic resins such as polypropylene, polyethylene and polyethylene terephthalate. Synthetic resins such as polypropylene, polyethylene and polyethylene terephthalate are particularly preferred, and it can be produced by conventional molding arts such as injection molding and extrusion molding and stereolithography in which complicated shapes can be formed.

It is important that a surface free energy on a part (inner wall) in which the exhaustion detector tube 10c is brought into contact with the liquid fuel is set to a lower level than a surface free energy of the liquid fuel, and this makes it possible to lower a wetting property of the exhaustion detector tube 10c to the liquid fuel. When the liquid fuel is exhausted, the liquid fuel is immediately occluded in the fuel electrode body 21 or the fuel supplying member 30, and the liquid fuel is not present in the exhaustion detector tube 10c, whereby exhaustion of the liquid fuel can be detected. Usually, a surface free energy on the exhaustion detector tube 10c can be controlled by treatment with a surface modifying agent, for example, silicone resin coat comprising dimethylsilicone as a skeleton, fluorine coat and fluororesin coat.

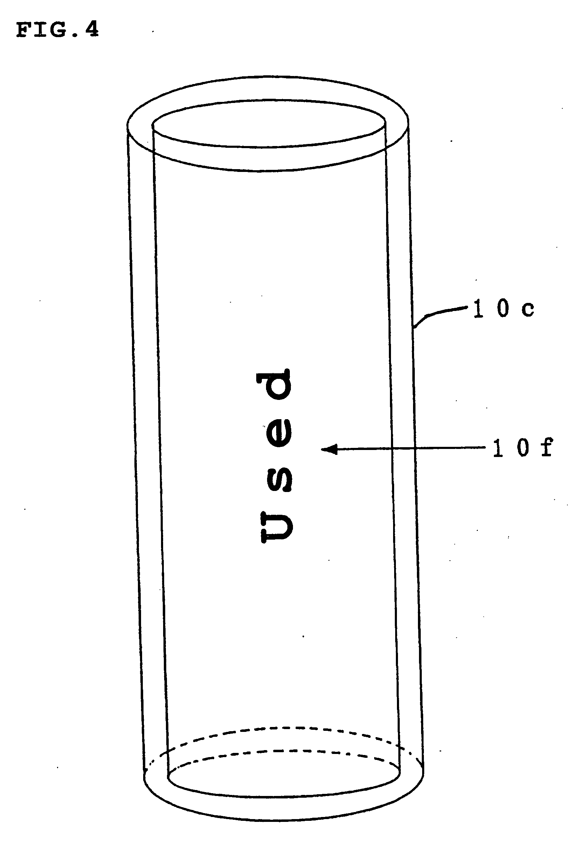

Further, the liquid fuel used is transparent in many cases, and therefore it is difficult in a certain case to detect whether the liquid fuel is exhausted even by using the exhaustion detector tube 10c. In such case, fine irregularities are provided on an inner wall of the exhaustion detector tube 10c by processing with a file or laser processing, whereby the exhaustion detector tube 10c can assume a state in which the exhaustion detector tube 10c looks transparent when the liquid fuel is present but it looks clouded, as shown in Fig. 3, when the liquid fuel is exhausted. Further, the exhaustion tube 10c is provided with a display part 10f which notify exhaustion by characters or figures, for example, ┌used┘, as shown in Fig. 4, with the above fine irregularities, whereby the exhaustion is displayed in an understandable way.

Further, exhaustion of the liquid fuel in the exhaustion detector tube 10c can be displayed by a change in the hue by coloring the liquid fuel with a dye. In this case, dyes and/or pigments can be used as a colorant without limitations as long as they can be dissolved or dispersed in the liquid fuel and do not exert effects on electric power generation. For example, when using a methanol solution for the liquid fuel, capable of being used as the colorant are solutions prepared by dissolving C. I. Solvent Yellow 61 as a colorant in water or methanol or dispersion liquids prepared by dispersing pigments such as phthalocyanine blue in methanol or water using a butyral resin or a styrene acryl resin.

Further, when using the exhaustion detector tube, capillary force of the exhaustion detector tube 10c should be a lower level than any of the capillary force of the occlusion body 10a (including the guiding feed 10d) and the feed 10b, whereby exhaustion of the liquid fuel in the occlusion body 10a can be displayed without delay. Excluding a case in which strong shock is applied, the liquid fuel is not ┌cut┘ in the inside of the exhaustion detector tube 10c, and can be continuously supplied without problems in terms of practical use.

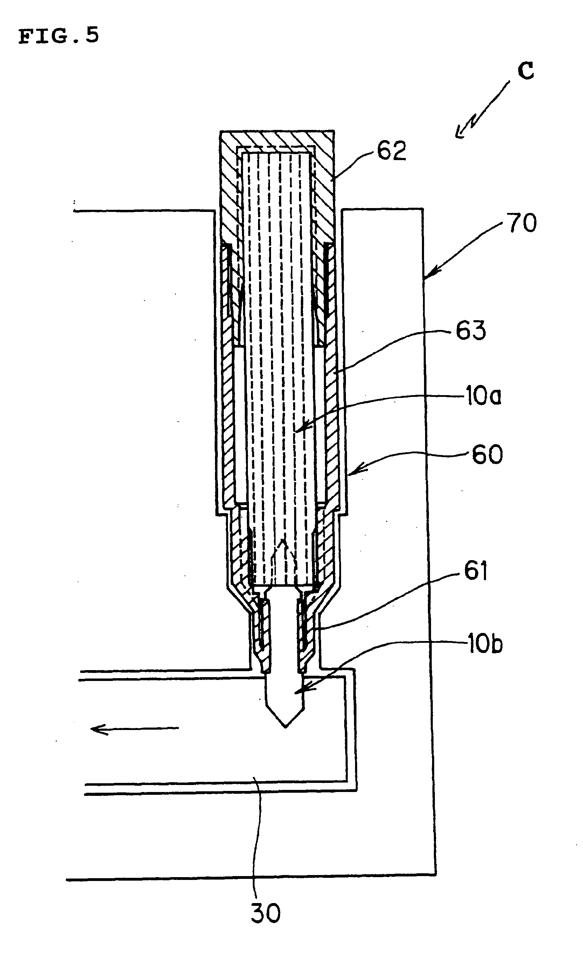

Fig. 5 shows the fuel cell C of the third embodiment in the first invention.

The fuel cell C of the present embodiment is different from the fuel cell A of the first embodiment described above in that the liquid fuel storing tank assumes an exchangeable cartridge structure.

A liquid fuel storing tank 60 of this cartridge type assumes, as shown in Fig. 5, a structure in which it is installed in a supporting member 70, and it is constituted from a cylindrical main body 63 comprising a holding part 61 holding a feed 10b at a front part and a plug part 62 firmly fixed at a rear end. It comprises a structure in which an occlusion body 10a impregnated with a liquid fuel is accommodated in the inside of the main body part 63 and in which the feed 10b is connected with the occlusion body 10a. The feed 10b connected with the occlusion body 10a in the liquid fuel storing tank 60 of this cartridge type is connected with a fuel supplying member 30 installed in the supporting member 70. Assumed is, though not illustrated, a structure in which a tip (arrow direction in Fig. 5) of the fuel supplying member 30 is connected with a unit cell 20 of the fuel cell as is the case with the first embodiment described above.

In the above fuel cell C, the liquid fuel impregnated in the occlusion body 10a in the liquid fuel storing tank 60 assuming the cartridge structure is supplied to the fuel supplying member 30, and when the liquid fuel impregnated in the occlusion body 10a in the liquid fuel storing tank 60 of the cartridge structure is consumed and exhausted, the liquid fuel storing tank 60 can readily be exchanged because of the cartridge structure.

The liquid fuel is preferably supplied continuously from the cartridge structure 60 described above to the fuel supplying member 30, as is the case with the first embodiment described above, preferably via the feed 10b comprising a porous body and/or a fiber bundle having larger capillary force than that of the occlusion body 10a described above. In this case, the fuel can continuously be supplied even in a state that the cartridge structure 60 is situated in a lower position than that of the fuel supplying member 30.

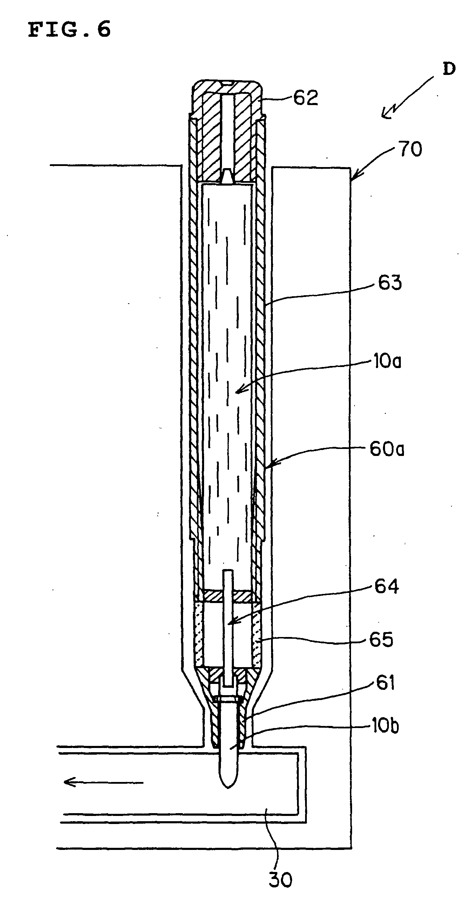

Fig. 6 shows the fuel cell D of the fourth embodiment in the first invention.

The fuel cell D of the present embodiment is different from the fuel cell C of the third embodiment described above in that an exhaustion sign of a liquid fuel can readily be visually observed on the liquid fuel storing tank assuming an exchangeable cartridge structure, and it exhibits the same action and effects as those of the fuel cell B of the second embodiment described above.

In the above fuel cell D, a liquid fuel (including coloring by a colorant) impregnated in a cartridge structure 60a is supplied to a fuel supplying member 30 via a liquid fuel guide tube 64 which is formed of a transparent or translucent resin having visibility and in which a liquid fuel repelling layer is formed at least on a face brought into contact with the liquid fuel by treatment with a surface modifying agent and a feed 10b, and an exhaustion sign of the liquid fuel supplied from the cartridge structure 60a is detected by visually observing the liquid fuel guide tube 64 described above through a transparent or translucent visible part 65 formed on the cartridge structure 60, whereby the exhaustion can readily be detected.

Assumed is, though not illustrated, a structure in which a tip (arrow direction in Fig. 6) of the fuel supplying member 30 is connected with a unit cell 20 of the fuel cell as is the case with the third embodiment described above. In the present embodiment, a supporting member 70 assumes preferably as well a structure in which it is transparent or translucent and has visibility in order to surely observe an exhaustion sign of the liquid fuel.

The fuel cells of the first invention shall not be restricted to the respective embodiments described above and can be varied to various extents within the scope of the technical concept of the present invention.

For example, unit cells 20 of the fuel cell having a cylindrical shape are used, but they may have other shapes such as a prism shape and a tabular shape. They may be connected with the fuel supplying member 30 in parallel as well as in series.

Further, a part of the structures of the fuel cells in the respective embodiments can mutually be varied and used. For example, the liquid fuel storing tank of the exchangeable cartridge structure 60 in the third embodiment described above or the cartridge structure 60a making it possible to readily observe an exhaustion sign of the liquid fuel with eyes in the fourth embodiment described above may be installed in place of the liquid fuel storing tank 10 of the first embodiment described above.

Also, use of the cartridge structure 60 of the third embodiment described above as a used fuel storing tank 40 at an end of the liquid fuel storing member 30 of the first embodiment described above makes it possible to readily exchange the used fuel storing tank.

Further, the cartridge structures of the above embodiments are used as the fuel storing tank and the used fuel storing tank and then carefully refilled with the liquid fuel by a suitable method, whereby they can be used many times as the fuel storing tank.

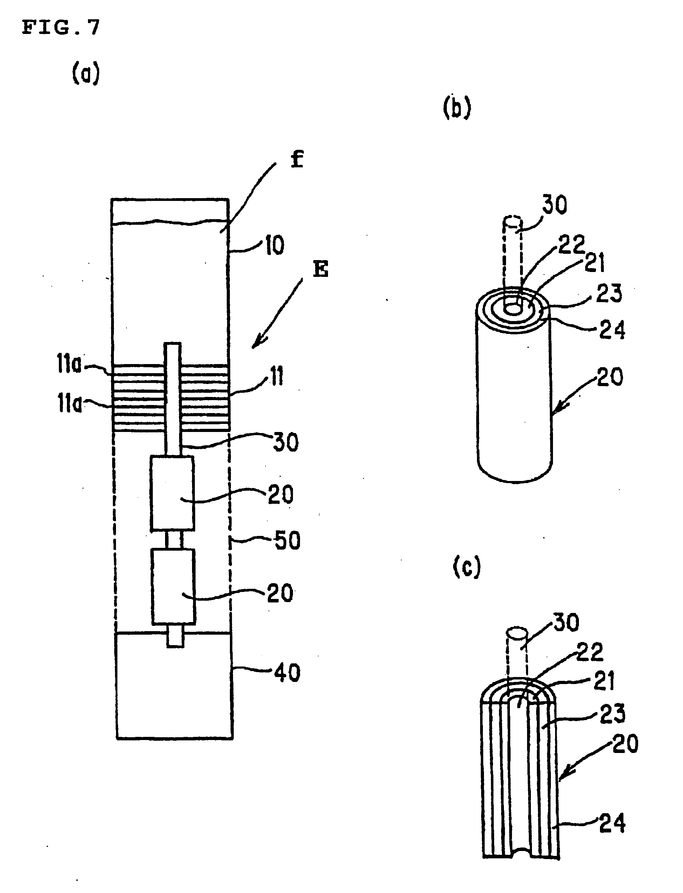

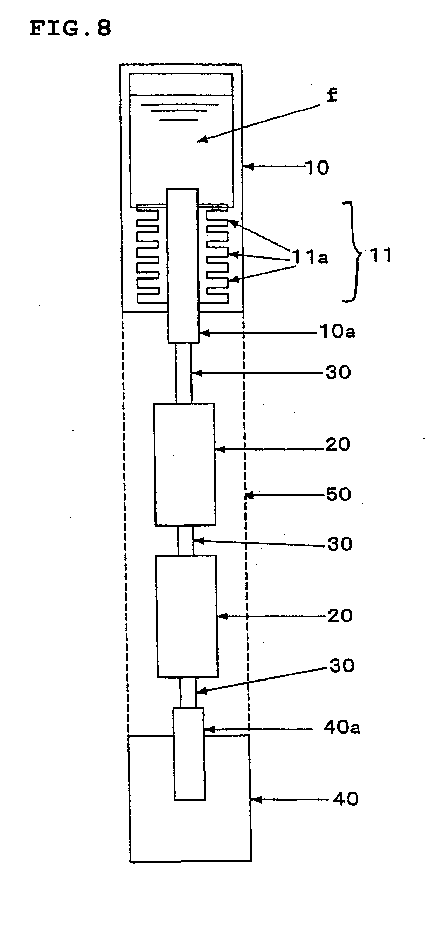

Fig. 7 (a) to (c) are outline drawings showing a fundamental embodiment (first embodiment) of the fuel cell E of the second invention, and Fig. 8 is an outline drawing showing a modified example of the first embodiment.

The above fuel cell E is equipped with, as shown in Fig. 7 (a) to (c), a fuel storing tank 10 for storing a liquid fuel, unit cells (fuel-cell cells) 20, 20 formed by constructing an electrolyte layer 23 on an outer surface of a fuel electrode body 21 comprising a fine porous carbonaceous substance and constructing an air electrode layer 24 on an outer surface of the electrolyte layer 23, a fuel supplying member 30 connected with the fuel storing tank 10 and having a penetrating structure and a used fuel storing tank 40 provided at an end of the fuel supplying member 30, and assumed is a structure in which the respective unit cells 20, 20 described above are connected in series and in which the fuel is supplied in order by means of the fuel supplying member 30.

In the present embodiment, the liquid fuel is directly stored as shown in Fig. 7 (a), and the fuel supplying member 30 is provided at a lower part of the fuel storing tank 10 for storing the liquid fuel. A collector body 11 is provided in a manner of surrounding the above fuel supplying member 30, and the fuel is supplied via the fuel supplying member 30.

As shown in Fig. 8 (modified example of Fig. 7), allowed to be assumed is a constitution in which a feed 10a is provided at a lower part of the fuel storing tank 10 and in which a collector body 11 is disposed in a manner of surrounding the feed 10a to supply the fuel via the feed 10a and the fuel supplying member 30 connected with the above feed 10a.

The feed 10a shall not specifically be restricted as long as it comprises a sliver, a porous body or a fiber bundle and has a penetrating structure, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set according to a supplying amount of the liquid fuel to the respective unit cells 20.

The collector body 11 assumes the same constitution as those of members used in free ink type writing instruments and prevents the liquid fuel stored directly in the fuel storing tank 10 from discharging in excess to the fuel supplying member 30 due to a change in atmospheric pressure and temperature, and assumed is a structure in which the liquid fuel overflown by expansion and the like is heldbetween collector parts 11a, 11a --- in the collector body 11 and in which it returns to the fuel storing tank 10 when a change in atmospheric pressure and temperature goes back to what used to be.

The material of the collector body 11 shall not specifically be restricted as long as it has storage stability and durability against the liquid fuel stored therein, and it includes metals such as aluminum and stainless steel and synthetic resins such as polypropylene, polyethylene and polyethylene terephthalate. Synthetic resins such as polypropylene, polyethylene and polyethylene terephthalate are particularly preferred, and it can be produced by conventional injection molding and stereolithography in which complicated shapes can be formed. Also, a single layer member obtained by subjecting a film of the synthetic resins described above to press working is laminated, whereby a collector body of the single layer member can be constituted in place of the collector part 11a described above.

It is important that a surface free energy on the collector body 11 is set to a higher level than a surface energy of the liquid fuel, and this enhances a wetting property of the collector body to the liquid fuel to raise power for holding the liquid fuel. A surface free energy of the collector body can be controlled usually by making use of plasma treatment, ozone treatment and treatment by a surface modifying agent.

The material of the fuel storing tank 10 described above shall not specifically be restricted as long as it has storage stability, durability against the liquid fuel stored therein and light transmittance, and it includes metals such as aluminum and stainless steel, synthetic resins such as polypropylene, polyethylene and polyethylene terephthalate and glass, and the same ones as in the first invention described above are used, so that explanations thereof shall be omitted.

Also, the same ones as in the first invention described above are used as the respective unit cells 20, and therefore the explanations thereof shall be omitted.

The fuel supplying member 30 described above shall not specifically be restricted as long as it is inserted into the fuel storing tank 10 in which the liquid fuel is stored and has a penetrating structure in which the above liquid fuel can be supplied to the respective unit cells 20, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set according to a supplying amount of the liquid fuel to the respective unit cells 20.

The used fuel storing tank 40 is disposed at an end of the fuel supplying member 30. An occlusion body of a porous body or a fiber bundle which occludes used fuel is accommodated in the above storing tank 40, and it is connected with an end of the fuel supplying member 30. As shown in Fig. 8, it may be connected with the occlusion body of a porous body or a fiber bundle which occludes the used fuel stored in the storing tank 40 via a feed 40a having the same quality as that of the feed 10a at an end of the fuel supplying member 30.

The liquid fuel supplied by the fuel supplying member 30 is used for reaction in the cell 20, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 40 to prevent an inhibitory reaction.

Numeral 50 is a member comprising a mesh structure which joins the fuel storing tank 10 with the used fuel storing tank 40 and which allows the liquid fuel to be surely supplied from the fuel storing tank 10 to each of the respective unit cells 20, 20 via the fuel supplying member 30.

In the fuel cell E of the present embodiment thus constituted, the liquid fuel occluded in the fuel storing tank 10 is introduced into the cells 20, 20 by virtue of capillary force due to a penetrating structure of the fuel supplying member 30.

In the present embodiment, the capillary force of at least the fuel storing tank 10 (feed 10a), the fuel electrode body 21 and/or the fuel supplying member 30 brought into contact with the fuel electrode body 21 and the used fuel storing tank 40 (feed 40a) is set to at least the fuel storing tank 10 (feed 10a)<the fuel electrode body 21 and/or the fuel supplying member 30 brought into contact with the fuel electrode body 21, whereby the liquid fuel can stably and continuously be supplied from the fuel storing tank 10 directly to each of the respective unit cells 20, 20 without causing backflow and disruption even if the fuel cell E is left standing in any state (angle) or upside down. More preferably, the capillary force is set to the fuel storing tank 10 (feed 10a) <the fuel electrode body 21 and/or the fuel supplying member 30 brought into contact with the fuel electrode body 21<the used fuel storing tank 40 (feed 40a), whereby the flow of the liquid fuel can stably and continuously be produced from the fuel storing tank 10 and the respective unit cells 20, 20 to the used fuel storing tank respectively without causing backflow and disruption.

Further, assumed in the fuel cell E of the present embodiment is a structure in which the liquid fuel can smoothly be supplied as it is without vaporizing and without using specifically auxiliary equipment such as a pump, ablower, a fuel carburetor anda condenser, and therefore it becomes possible to reduce a size of the fuel cell.

The fuel supplying member 30 connected directly from an end part of the fuel storing tank 10 and having a penetrating structure is connected to supply the fuel to the respective unit cells 20, 20, whereby reduction in a size of the fuel cell comprising plural cells can be achieved.

Further, an embodiment in which two cells 20 are used has been shown in the present embodiment, and the number of the cells 20 connected (in series or in parallel) can be increased according to the use purposes of the fuel cell to obtain a desired electromotive force.

Accordingly, the fuel cell E of the present embodiment can be turned into a cartridge type, and provided is a small-sized direct methanol fuel cell which can be used as an electric power source for portable electronic appliances such as cellular phones and note type personal computers.

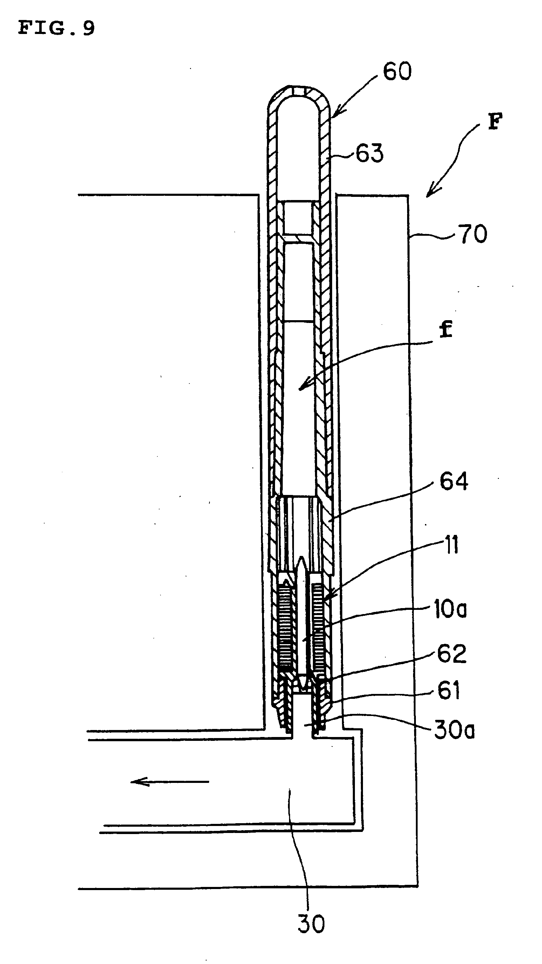

Fig. 9 shows the fuel cell F of the second embodiment in the second invention. In the following embodiment, a fuel cell having the same structure and exhibiting the same effects as those of the fuel cell E of the first embodiment described above shall be given the same reference numerals as in Fig. 7 and in Fig. 8, and the explanations thereof shall be omitted.

The above fuel cell F is different, as shown in Fig. 9, from the first embodiment described above only in that a fuel storing tank for storing a liquid fuel assumes an exchangeable cartridge structure.

This liquid fuel storing tank 60 of a cartridge type assumes, as shown in Fig. 9, a structure in which it is installed in a supporting member 70, and it is constituted from a cylindrical main body 64 equipped with a tip holder 61 holding a collector body 11 having a feed 10a, a holding member 62 at a tip part, and a plug part 63 firmly fixed at a rear end part. A liquid fuel F is stored in the above main body 64, and the feed 10a is inserted thereinto. The feed 10a in the above liquid fuel storing tank 60 of a cartridge type is connected with a tip part 30a of a fuel supplyingmember 30 installed in the supporting member 70. Assumed is, though not illustrated, a structure in which a tip (arrow direction in Fig. 9) of the fuel supplying member 30 is connected with cells 20, 20 --- as is the case with the first embodiment described above.

In the fuel cell F of the second embodiment, a liquid fuel storing tank is the fuel storing tank 60 of a cartridge type, and therefore it can readily be exchanged in the state that the fuel cell main body is fixed. The liquid fuel can be allowed to discharge by bringing the feed 10a in the liquid fuel storing tank 60 into contact with the fuel supplying member 30 to operate the fuel cell. Accordingly, conditioning in starting use and stoppage of use (intermission) can readily be carried out, and the liquid fuel can stably and continuously be supplied.

Further, the fuel storing tank 60 of the present embodiment is a cartridge type and therefore can be reused as a used fuel storing tank. It can be reused as a used fuel storing tank by replacing the feed 10a provided in the fuel storing tank 60 described above with a feed having the same capillary force as that of the feed 40a provided in the used fuel storing tank 40 and installing the fuel storing tank of the present application at an end of the fuel supplying member 30.

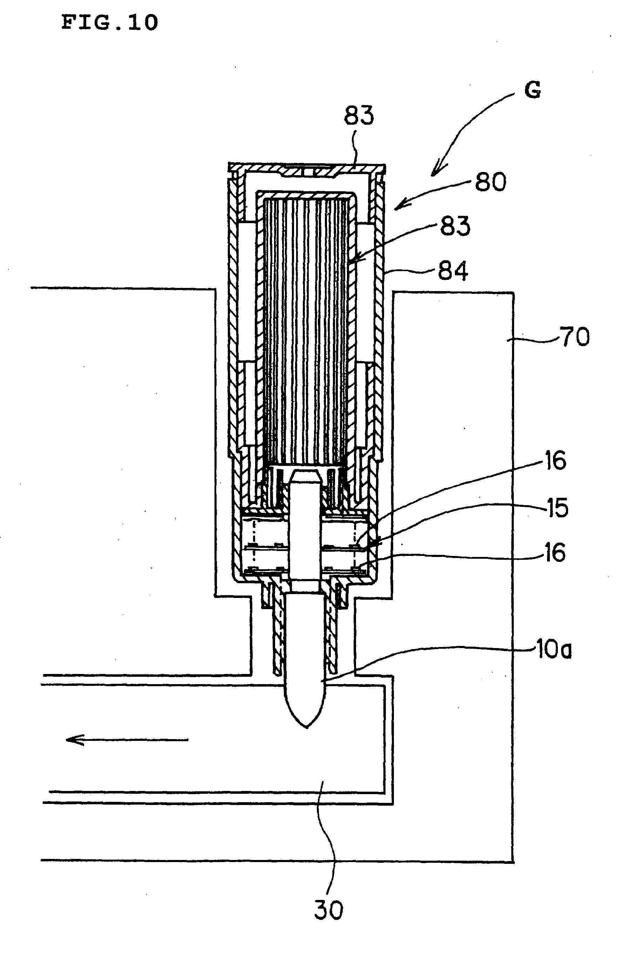

Fig. 10 shows the fuel cell G of the third embodiment in the second invention.

The fuel cell G of the present embodiment is different from the fuel cell F of the second embodiment in that a collector body comprises a collector body 15 constituted by laminating single layer members spreading in a tabular form and that the fuel storing tank of a cartridge type has a little different structure. It exhibits the same action and effects as those of the fuel cell B of the second embodiment.

The above collector body 15 functions in the same manner as that of the collector body 11 of the embodiment described above. Plural convex parts are formed on the surfaces of the respective single layer members 16, 16 --- at a suitable interval, and the adjacent single layer members 16 on which the above convex parts are overlapped are positioned almost parallel at a desired interval, whereby spaces for holding an overflowing liquid fuel are formed, and all single layer members constituting the spaces are brought into contact with a conduit provided with a feed 10a through which the liquid fuel passes.

This liquid fuel storing tank 80 of a cartridge type assumes, as shown in Fig. 10, a structure in which it is installed in a supporting member 70, and it is constituted from a cylindrical main body 84 equipped with a tip holder 81 holding a feed 10a at a tip part, a plug part 82 firmly fixed at a rear end part and a tank 83 for storing a liquid fuel. The feed 10a in the above liquid fuel storing tank 80 of a cartridge type is connected with a fuel supplying member 30 installed in the supporting member 70. Assumed is, though not illustrated, a structure in which a tip (arrow direction in Fig. 10) of the fuel supplying member 30 is connected with cells 20, 20 --- as is the case with the first embodiment described above.

In the fuel cell G of the third embodiment in the second invention thus constituted, a liquid fuel storing tank is the liquid fuel storing tank 80 of a cartridge type equipped with a collector body 15 functioning in the same manner as in the embodiment E described above in which the collector body is constituted by laminating the single layer members spreading in a tabular form, and therefore the fuel storing tank can readily exchanged in the state that the fuel cell main body is fixed to supplement the fuel. The liquid fuel can be allowed to discharge by bringing the feed 10a in the liquid fuel storing tank 80 into contact with the fuel supplying member 30 to operate the fuel cell. Accordingly, conditioning in starting use and stoppage of use (intermission) can readily be carried out, and the liquid fuel can stably and continuously be supplied. The liquid fuel storing tank 80 of the present embodiment can be reused as a used liquid fuel storing tank as is the case with the second embodiment described above.

The fuel cells of the present second invention shall not be restricted to the respective embodiments described above and can be varied to various extents within the scope of the technical concept of the present invention.

For example, the cell 20 having a cylindrical shape is used, but it may have other shapes such as a prism shape and a tabular shape. It may be connected with the fuel supplying member 30 in parallel as well as in series.

Further, a part of the structures of the fuel cells in the respective embodiments can mutually be varied and used. For example, the liquid fuel storing tank may have a structure in which the exchangeable cartridge structure 60 of the second embodiment described above or the cartridge structure 80 of the third embodiment described above is installed in place of the liquid fuel storing tank 10 of the first embodiment described above.

Further, the cartridge structures of the above embodiments are used as the fuel storing tank and the used fuel storing tank and then carefully refilled with the liquid fuel by a suitable method, whereby they can be used many times as the fuel storing tank.

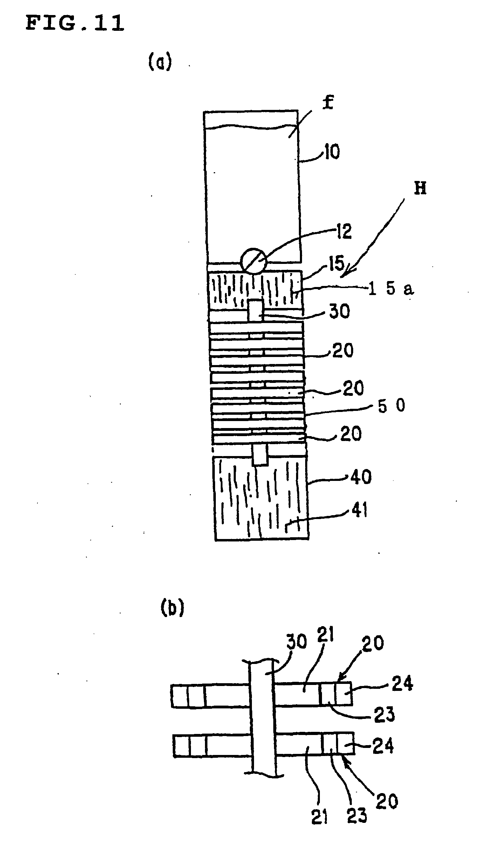

Fig. 11 (a) and (b) are outline drawings showing a fundamental embodiment (first embodiment) of the fuel cell H in the third invention. The same constitution as that of the fuel cell of the first invention described above is shown by the same reference numerals, and the explanations thereof shall be omitted.

The above fuel cell H is equipped, as shown in Fig. 11 (a) and (b), with a fuel storing tank 10 for storing a liquid fuel f, unit cells (fuel-cell cells) 20, 20 formed by constructing an electrolyte layer 23 on an outer surface of a fuel electrode body 21 comprising a fine porous carbonaceous body and constructing an air electrode layer 24 on an outer surface of the above electrolyte layer 23, a fuel supplying member 30 connected with the fuel storing tank 10 described above and having a penetrating structure and a used fuel storing tank 40 provided at an end of the fuel supplying member 30, and assumed is a structure in which the respective unit cells 20, 20 described above are connected in series and in which the fuel is supplied in order by means of the fuel supplying member 30.

The same fuel as in the first invention described above is used as a liquid fuel f stored in the fuel storing tank 10 described above, and therefore the explanations thereof shall be omitted.

In the present embodiment, the liquid fuel is directly stored as shown in Fig. 11 (a), and a second fuel storing tank 15 is further provided in a lower part of the fuel storing tank 10 for storing the liquid fuel via a valve member 12. A porous body or a fiber bundle occluding a liquid fuel is accommodated in the second fuel storing tank 15, and the fuel supplying member 30 is connected with an occlusion body 15a comprising the porous body or the fiber bundle accommodated in the second fuel storing tank 15 described above to supply the fuel.

The above occlusion body 15a shall not specifically be restricted as long as it has a penetrating structure, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set if necessary.

The valve member 12 assumes the same constitution as those of members used in free ink type writing instruments and prevents the liquid fuel stored directly in the fuel storing tank 10 from discharging in excess to the fuel supplying member 30 due to a change in atmospheric pressure and temperature, and assumed is a structure in which the liquid fuel in excess is held in the second fuel storing tank 15 comprising the valve member 12 and the porous body or the fiber bundle accommodated in the second fuel storing tank 15 to temporarily prevent the liquid fuel in excess from discharging.

The material of the above valve member shall not specifically be restricted as long as it has storage stability and durability against the liquid fuel stored therein, and it includes metals such as aluminum and stainless steel and synthetic resins such as polypropylene, polyethylene and polyethylene terephthalate. Synthetic resins such as polypropylene, polyethylene and polyethylene terephthalate are particularly preferred, and it can be produced by conventional injection molding and the like.

The material of the fuel storing tank 10 described above shall not specifically be restricted as long as it has storage stability and durability against the liquid fuel stored therein and light transmittance, and it includes metals such as aluminum and stainless steel, synthetic resins such as polypropylene, polyethylene and polyethylene terephthalate and glass. The same one as in the first invention described above is used, and therefore the explanations thereof shall be omitted.

Also, the same ones as in the first invention described above are used as the respective unit cells 20, and therefore the explanations thereof shall be omitted.

The fuel supplying member 30 described above shall not specifically be restricted as long as it is connected with the occlusion body 15a for occluding the liquid fuel accommodated in the second fuel storing tank 15 and has a penetrating structure in which the liquid fuel can be supplied to the respective unit cells 20, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the porous bodies and fiber bundles is suitably set according to a supplying amount of the liquid fuel to the respective unit cells 20.

The used fuel storing tank 40 is disposed at an end of the fuel supplying member 30. An occlusion body 41 of a porous body or a fiber bundle occluding used fuel is accommodated in the storing tank 40 and connected with an end of the fuel supplying member 30.

The liquid fuel supplied by the fuel supplying member 30 is used for reaction in the cell 20, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 40 to prevent an inhibitory reaction.

Numeral 50 is a member comprising a mesh structure which joins the fuel storing tank 10 with the used fuel storing tank 40 and allows the liquid fuel to be surely supplied from the fuel storing tank 10 directly to each of the respective unit cells 20, 20 via the fuel supplying member 30.

In the fuel cell H of the present embodiment thus constituted, the valve member 12 is opened and closed by pressing operation (knocking operation) of the fuel storing tank 10; the valve member 12 is opened by pressing (knocking) the fuel storing tank 10, and the liquid fuel flows in the second fuel storing tank 15 for temporary storage; the liquid fuel penetrates into the occlusion body 15a comprising a porous body or a fiber bundle in the second fuel storing tank 15 via the valve member 12, and the liquid fuel is introduced into the cells 20, 20 by virtue of the penetrating structure of the fuel supplying member 30.

This allows the liquid fuel to be supplied to the respective unit cells 20 by the fuel electrode body 21 and makes it possible to stably supply the liquid fuel after pressing (knocking) the fuel storing tank.

In the fuel cell H of the present embodiment, the discharge valve 12 is opened and closed by pressing operation (knocking operation) of the fuel storing tank 10, and the fuel cell can be operated. Accordingly, conditioning in starting use and stoppage of use (intermission) can readily be carried out, and the liquid fuel can stably and continuously be supplied.

In the present embodiment, the capillary force of the fuel storing tank 10 (the porous body or fiber bundle 15a in the second fuel storing tank 15), the fuel electrode body 21 and/or the fuel supplying member 30 brought into contact with the fuel electrode body 21 and the used fuel storing tank 40 (occlusion body 41) are set to at least the fuel storing tank 10 (the porous body or fiber bundle 15a in the second fuel storing tank 15)<the fuel electrode body 21 and/or the fuel supplying member 30 brought into contact with the fuel electrode body 21, whereby the liquid fuel can stably and continuously be supplied from the fuel storing tank 10 directly to each of the respective unit cells 20, 20 without causing back flow and disruption. More preferably, the capillary force is set to the fuel storing tank 10 (the porous body or fiber bundle 15a in the second fuel storing tank 15)<the fuel electrode body 21 and/or the fuel supplying member 30 brought into contact with the fuel electrode body 21<the used fuel storing tank 40 (occlusion body 41), whereby the flow of the liquid fuel can stably and continuously be produced from the fuel storing tank 10 and the respective unit cells 20, 20 to the used fuel storing tank without causing backflow and disruption of the liquid fuel.

In the fuel cell H of the present embodiment, the respective unit cells 20 assume a tabular (stratiform) structure, and therefore a lot of the unit cells can be connected in series toward fuel flow, so that the fuel cell having a high electromotive force is obtained. Assumed is a structure in which the liquid fuel can smoothly be supplied as it is without vaporizing and without using specifically auxiliary equipment such as a pump, a blower, a fuel carburetor and a condenser, and therefore it becomes possible to reduce a size of the fuel cell.

Thus, in the fuel cell H of the present embodiment, the whole part of the fuel cell can be turned into a cartridge type, and provided is the small-sized fuel cell which can be used as an electric power source for portable electronic appliances such as cellular phones and note type personal computers.

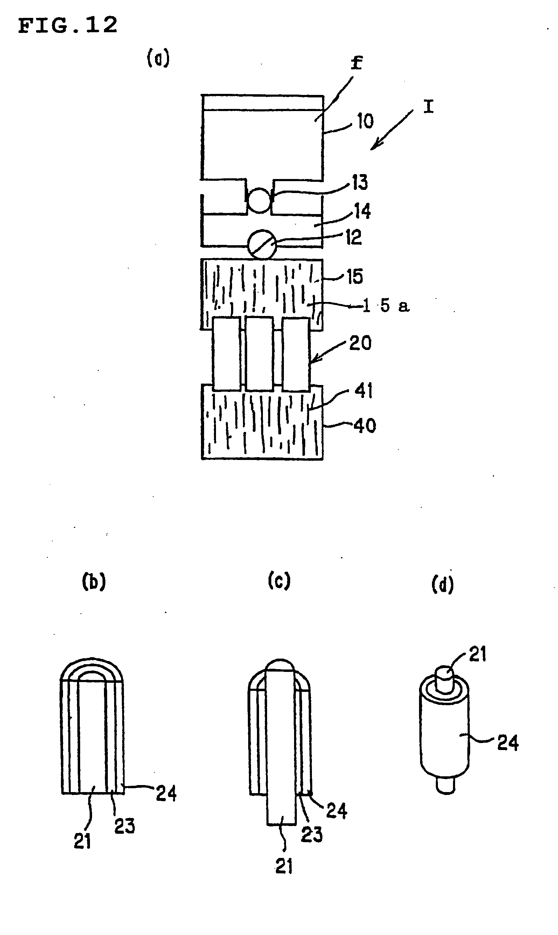

Fig. 12 (a) to (d) shows the fuel cell I of the second embodiment in the present third invention.

The above fuel cell I is different, as shown in Fig. 12 (a) and (b), from the first embodiment described above only in that the liquid fuel in the fuel storing tank 10 is directly stored, in that the fuel storing tank 10 for storing the liquid fuel assumes an exchangeable cartridge structure, in that assumed is a fuel supplying mechanism in which a liquid fuel inflow tank 14 is provided at a lower part of the fuel storing tank 10 via a discharge valve 13, in that a second fuel storing tank 15 is provided at a lower part of the fuel inflow tank 14 via a valve member 12, in that a fuel electrode body 21 itself in respective unit cells 20 is a porous body and provided together with a function of a fuel supplying member 30 and in that the respective unit cells 20 are connected in parallel toward fuel flow.

This unit cell 20 has a structure shown in Fig. 12 (b), and the fuel electrode body 21 present in the center of the cylinder is constituted of a porous body having the same capillary force as that of the fuel supplying member 30 to make it possible to allow the fuel to flow from a second fuel storing tank 15 to a used fuel storing tank 40. In the above structure, the fuel electrode body 21 may have a protruding form as shown in Fig. 12 (c) and (d).

In the fuel cell I of the second embodiment thus constituted, the discharge valve 13 and the valve member 12 are opened and closed by pressing operation (knocking operation) of the fuel storing tank 10; the discharge valve 13 is opened by pressing (knocking) the fuel storing tank 10, and the liquid fuel flows in the liquid fuel inflow tank 14; and the liquid fuel flows in the second fuel storing tank 15 for temporary storage by the valve member 12 opened at the same time. This allows the liquid fuel to be supplied to the respective unit cells 20 by the fuel electrode body 21 to exhibit the same action and effects as in the first embodiment described above.

In the fuel cell I of the second embodiment, the fuel storing tank 10 is a cartridge type, and therefore it can readily be exchanged to supplement the fuel. The discharge valve 13 and the valve member 12 are opened and closed by pressing operation (knocking operation) of the fuel storing tank, and the fuel cell can be operated. Accordingly, conditioning in starting use and stoppage of use (intermission) can readily be carried out, and the liquid fuel can stably and continuously be supplied.

Further, in the fuel cell I of the second embodiment, the respective unit cells 20 assume a porous structure, and therefore the fuel supplying member 30 is not required, so that obtained is the fuel cell which makes it possible to actualize improvement in a performance and efficiency of the respective unit cells and reduction of the size.

An embodiment in which three cells 20 are used is shown in the present embodiment, and the number of the cells 20 connected (in series or in parallel) can be increased according to the use purposes of the fuel cell to obtain a desired electromotive force.

Thus, in the fuel cell I of the present embodiment, it becomes possible to turn the whole part of the fuel cell into a cartridge type and turn the fuel storing tank 10 into a cartridge type, and provided is the small-sized fuel cell which can be used as an electric power source for portable electronic appliances such as cellular phones and note type personal computers.

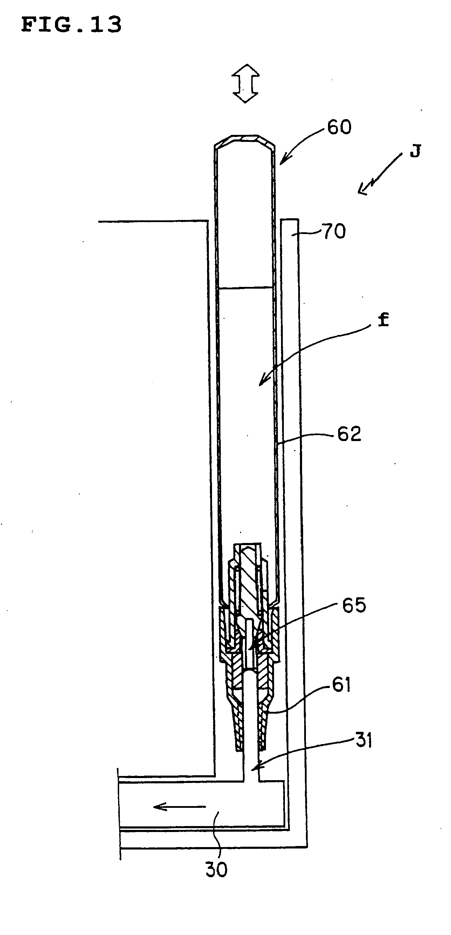

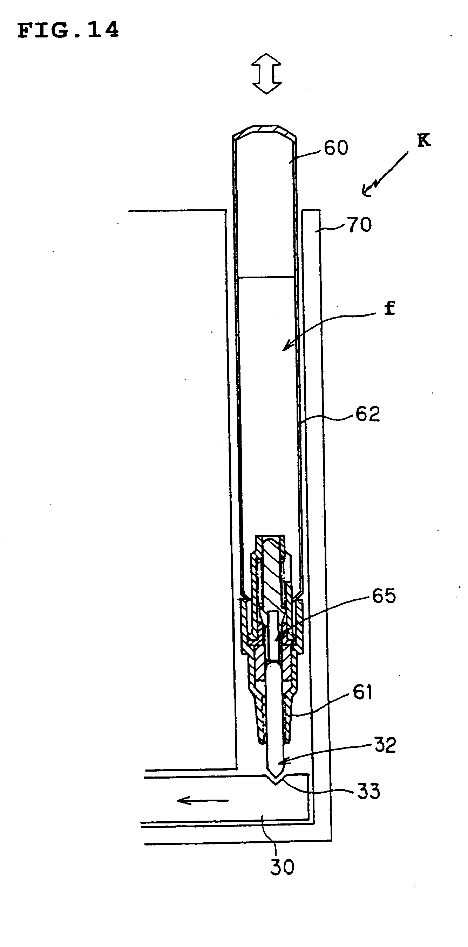

Fig. 13 shows the fuel cell J of the third embodiment in the third invention, and Fig. 14 shows the fuel cell K of the fourth embodiment in the present third invention. In the following embodiments, a fuel cell having the same structure and exhibiting the same effects as those in the first embodiment described above shall be given the same reference numerals as in Fig. 5, and the explanations thereof shall be omitted.

The above fuel cell J or K is different, as shown in Fig. 13 and Fig. 14, from the fuel cell D of the first embodiment described above only in that a fuel storing tank for storing a liquid fuel is an exchangeable cartridge structure 60 equipped with a valve member. A difference between the fuel cells J and K is, as described later, a difference between whether the liquid fuel coming from the cartridge structure 60 penetrates and discharges into a fuel supplying member and whether it penetrates and discharges into the fuel supplying member via a feed.

A liquid fuel storing tank 60 of a cartridge type in the third embodiment assumes, as shown in Fig. 13, a structure in which it is installed in a supporting member 70. It is constituted from a cylindrical main body 62 in which a tip holder 61 holding a feed member 31 which is integrated with a fuel supplying member 30 is mounted at a tip part thereof and a rear end part is closed. A valve member 65 is mounted in the main body part 64. In the fourth embodiment, a feed member is not integrate, as shown in Fig. 14, with the fuel supplying member 30, and it is held in a tip holder 62 as a feed 32 having the same material as that of the occlusion body 15a of the porous body and the fiber bundle described above.

The valve member 65 assumes a structure in which a discharge valve is opened by pressing (knocking) the fuel storing tank 60 to allow the fuel to penetrate into a feed 31 and in which the discharge valve is closed by stopping of pressing. Assumed is, though not illustrated, a structure in which a tip (an arrow direction in Fig. 13 and Fig. 14) of the fuel supplying member 30 is connected with cells 20, 20 as is the case with the first embodiment or the second embodiment.

In the fuel cell J of the present embodiment thus constituted, the liquid fuel storing tank 60 is a cartridge type, and therefore it can readily be exchanged in the state that the fuel cell main body is fixed to supplement the fuel. A holding part 62 moves downward along the feed member 31 by pressing (knocking) operation to open the valve member 65, and a liquid fuel f in the liquid fuel storing tank 60 is penetrated into the fuel supplying member 30 via the feed member 31, whereby the fuel cell can be operated. Accordingly, conditioning in starting use and stoppage of use (intermission) can readily be carried out, and the liquid fuel can stably and continuously be supplied.

In the fuel cell K of the fourth embodiment, the liquid fuel storing tank 60 is a cartridge type, and therefore it can readily be exchanged in the state that the fuel cell main body is fixed to supplement the fuel. It is brought into contact with a pressing part 33 of a fuel supplying member 30 by pressing (knocking) operation to open the valve member 65, and a liquid fuel f in the liquid fuel storing tank 60 is penetrated into the fuel supplying member 30 via the feed member 32, whereby the fuel cell can be operated. Accordingly, conditioning in starting use and stoppage of use (intermission) can readily be carried out, and the liquid fuel can stably and continuously be supplied.

Also, the cartridge structures of the second to fourth embodiments are used as the fuel storing tank and then carefully refilled with the liquid fuel by a suitable method, whereby they can be reused as the fuel storing tank.

Further, the fuel cell of the first embodiment is finished to be used, and then the fuel storing tank 10 is carefully refilled with the liquid fuel by a suitable method, whereby it can be reused as a fuel cell.

The fuel cells of the third invention shall not be restricted to the respective embodiments described above and can be varied to various extents within the scope of the technical concept of the present invention. A part of the structures of the fuel cells in the respective embodiments can mutually be varied and used. For example, a structure in which the liquid fuel storing tank 60 equipped with the valve member 65 of a cartridge type and the feed 32 in the fourth embodiment described above is installed may be assumed in place of the liquid fuel storing tank 10 and the valve member 12 in the first embodiment described above.

Further, when the liquid fuel is quickly consumed, the feed 32 in the fuel cell G of the fourth embodiment is replaced by a metal-made or resin-made member having no retention for the liquid fuel such as a pipe or a pushrod, whereby a large amount of the liquid fuel can be supplied at one time to the fuel supplying member 30.

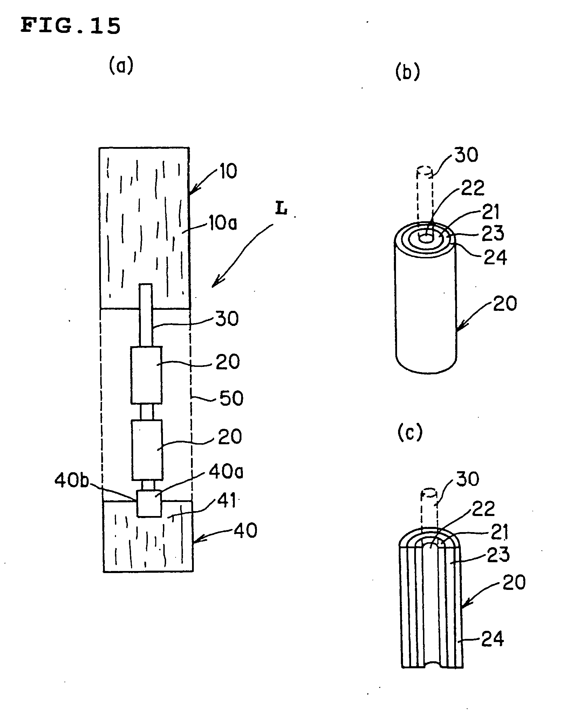

Fig. 15 (a) to (c) are out line drawings showing the fundamental embodiment (first embodiment) of the fuel cell L in the fourth invention.

The above fuel cell L is equipped, as shown in Fig. 15 (a) to (c), with a fuel storing tank 10 for storing a liquid fuel, unit cells (fuel-cell cells) 20, 20 formed by constructing an electrolyte layer 23 on an outer surface of a fuel electrode body 21 comprising a fine porous carbonaceous body and constructing an air electrode layer 24 on an outer surface of the electrolyte layer 23, a fuel supplying member 30 connected with the fuel storing tank 10 described above and having a penetrating structure and a used fuel storing tank 40 provided at an end of the above fuel supplying member 30, and assumed is a structure in which the respective unit cells 20, 20 described above are connected in series and in which the fuel is supplied in order by means of the fuel supplying member 30. Assumed is a structure in which the used liquid fuel storing tank 40 described above is provided with a feed 40a comprising a porous body and/or a fiber bundle having capillary force to discharge a used fuel to the used liquid fuel storing tank 40 via the above feed and in which a part other than a discharge port 40b via the above feed 40a is hermetically closed.

The same fuel as in the first invention described above is used as the liquid fuel stored in the fuel storing tank 10 described above, and the explanations thereof shall be omitted.

In the present embodiment, the liquid fuel is occluded in an occlusion body 10a of a sliver, a porous body or a fiber bundle stored in the fuel storing tank 10. The occlusion body 10a shall not specifically be restricted as long as it can occlude a liquid fuel, and ones having the same constitution as that of a fuel supplying member 30 described later can be used.

The material of the fuel storing tank 10 described above shall not specifically be restricted as long as it has storage stability and durability against the liquid fuel stored therein, and it includes metals such as aluminum and stainless steel, synthetic resins such as polypropylene, polyethylene and polyethylene terephthalate and glass. The same one as in the first invention described above is used, and therefore the explanations thereof shall be omitted.

Also, the same ones as in the first invention described above are used as the respective unit cells 20, and therefore the explanations thereof shall be omitted.

The fuel supplying member 30 described above shall not specifically be restricted as long as it is connected with the occlusion body 10a for occluding the liquid fuel stored in the fuel storing tank 10 and has a penetrating structure in which the liquid fuel can be supplied to the respective unit cells 20, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the porous bodies and fiber bundles is suitably set according to a supplying amount of the liquid fuel to the respective unit cells 20.

The used fuel storing tank 40 is disposed at an end of the fuel supplying member 30 via the feed 40a. Assumed is a structure in which the above used fuel storing tank 40 is provided with the feed 40a comprising a porous body and/or a fiber bundle having capillary force to discharge a used fuel to the used fuel storing tank 40 described and in which parts other than the discharge port 40b via the feed 40a are hermetically closed. Further, an occlusion body 41 of a porous body or a fiber bundle which occludes the used fuel is disposed in the inside of the used fuel storing tank 40 in contact with a lower end part of the feed 40a.

The liquid fuel supplied by the fuel supplying member 30 is used for reaction in the unit cell 20, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 40 to prevent an inhibitory reaction.

Numeral 50 is a member comprising a mesh structure which joins the fuel storing tank 10 with the used fuel storing tank 40 and which allows the liquid fuel to be surely supplied from the fuel storing tank 10 to each of the respective unit cells 20, 20 via the fuel supplying member 30.

In the fuel cell L of the present embodiment thus constituted, the liquid fuel occluded in the occlusion body 10a disposed in the fuel storing tank 10 is introduced into the cells 20, 20 by virtue of capillary force due to a penetrating structure of the fuel supplying member 30.

In the present embodiment, the used fuel storing tank 40 described above assumes a structure in which parts other than the discharge port 40b via the above feed 40a are hermetically closed, and assumed is a constitution in which the used fuel is occluded directly in the occlusion body 41 via the feed 40a disposed at an end of the fuel supplying member 30. At least the capillary force of the fuel storing tank 10 (occlusion body 10a), the fuel electrode body 21 and/or the fuel supplying member 30 brought into contact with the fuel electrode body 21, the feed 40a and the used fuel storing tank 40 (occlusion body 41) is set to the fuel storing tank 10 (occlusion body 10a)<the fuel electrode body 21 and/or the fuel supplying member 30 brought into contact with the fuel electrode body 21<the feed 40a<the used fuel storing tank 40 (occlusion body 41), whereby the liquid fuel can stably and continuously be supplied from the fuel storing tank 10 to each of the respective unit cells 20, 20 without causing backflow and disruption even if the fuel cell L is left standing in any state (angle) or upside down, and the liquid fuel which is not used for the reaction can be stored in the storing tank 40 to prevent an inhibitory reaction.

In the above embodiments, the used fuel storing tank 40 or the occlusion body 41 disposed in the used fuel storing tank 40 or the used fuel storing tank 40 accomodating the occlusion body 41 may be exchangeable. The used fuel storing tank 40 or the occlusion body 41 disposed in the used fuel storing tank 40 may be discarded as it is in order to discharge the used fuel. Also, the used fuel may be discharged by squeezing, centrifugation and vaporization of the used fuel occluded in the occlusion body 41 and the feed 40a, and in this case, the used fuel storing tank can be reused.

Further, when the fuel of such a concentration as reusable as a component of the used fuel remains because of any reasons, the used fuel discharged by the method described above can be refilled once again in the fuel storing tank 10.

Also, in the fuel cell L of the present embodiment, assumed is a structure in which the liquid fuel can smoothly be supplied asitiswithoutvaporizingandwithoutusingspecificallyauxiliary equipment such as a pump, a blower, a fuel carburetor and a condenser, and therefore it becomes possible to reduce a size of the fuel cell.

Further, the fuel supplying member 30 connected directly with an end part of the fuel storing tank 10 and having a penetrating structure is connected for supplying the fuel to the respective unit cells 20, 20, whereby reduction in a size of the fuel cell comprising plural cells can be achieved.

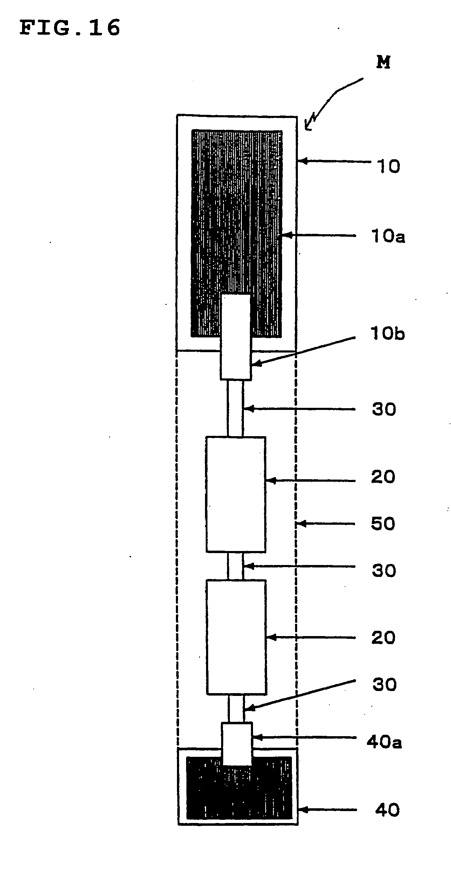

Fig. 16 shows the fuel cell M showing the second embodiment in the fourth invention. The same constitution as that of the fuel cell L of the first embodiment described above shall be given the same reference numerals, and the explanations thereof shall be omitted (the same shall apply in the third embodiment and those subsequent thereto).

The fuel cell M of the present embodiment is different from the fuel cell L of the first embodiment described above in that a liquid fuel is supplied to a fuel supplying member 30 via an occlusion body 10a of a sliver, a porous body or a fiber bundle accommodated in a fuel storing tank 10 and a feed 10b.

In the present embodiment, at least the capillary force of the fuel storing tank 10 (occlusion body 10a), the feed 10b, a fuel electrode body 21 and/or a fuel supplying member 30 brought into contact with the fuel electrode body 21, a feed 40a and a used fuel storing tank 40 (occlusion body 41) is set to the fuel storing tank 10 (occlusionbody 10a) <the feed 10b<the fuel electrode body 21 and/or the fuel supplying member 30 brought into contact with the fuel electrode body 21<the feed 40a<the used fuel storing tank 40 (occlusion body 41), whereby the liquid fuel can stably and continuously be supplied from the fuel storing tank 10 to each of the respective unit cells 20, 20 without causing backflow and disruption even if the fuel cell M is left standing in any state (angle) or upside down, and the liquid fuel which is not used for the reaction can be stored in the storing tank 40 to prevent an inhibitory reaction.

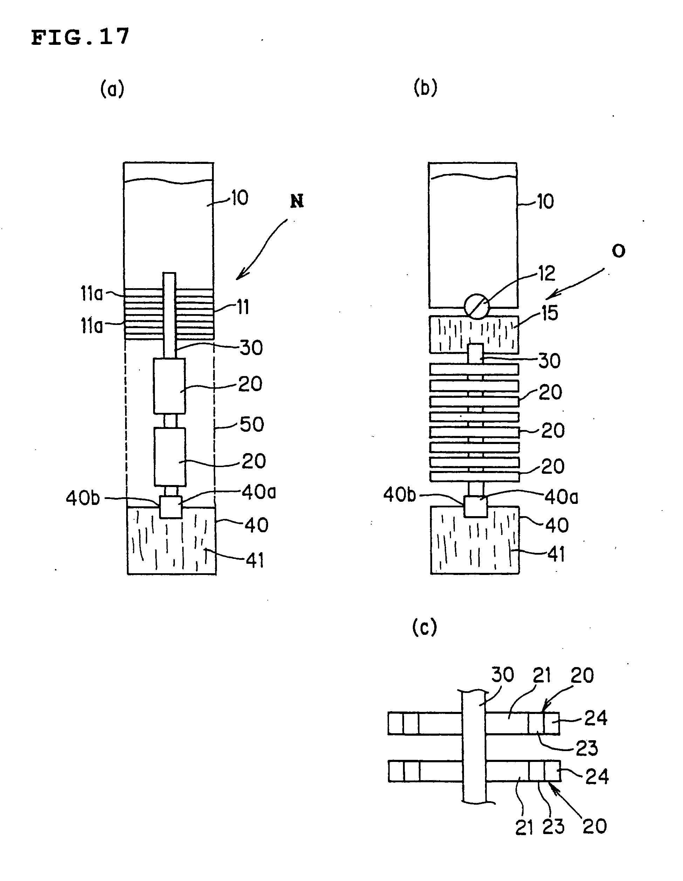

Fig. 17 (a) shows the fuel cell N showing the third embodiment in the fourth invention.

The fuel cell N of the present embodiment is different, as shown in Fig. 17 (a), from the fuel cell L of the first embodiment described above in that the liquid fuel is stored directly and in that a collector body 11 is disposed at a lower part of a fuel storing tank 10 for storing the liquid fuel to supply a fuel.

In the present embodiment, the collector body 11 assumes the same constitution as those of members used in free ink type writing instruments and prevents the liquid fuel stored directly in the fuel storing tank 10 from discharging in excess to the fuel supplying member 30 due to a change in atmospheric pressure and temperature, and assumed is a structure in which the liquid fuel overflown by expansion and the like is held between collector parts 11a, 11a --- in the collector body 11 and in which it returns to the fuel storing tank 10 when a change in atmospheric pressure and temperature goes back to what used to be. It functions in the same manner as in the first embodiment described above.

Fig. 17 (b) and (c) shows the fuel cell O showing the fourth embodiment in the present fourth invention.

The fuel cell O of the present embodiment is different from the fuel cell L of the first embodiment described above in that the liquid fuel is directly stored as shown in Fig. 17 (b) and (c), in that a second fuel storing tank 15 is further provided at a lower part of a fuel storing tank 10 for storing a liquid fuel via a valve member 12, in that a porous body or a fiber bundle occluding the liquid fuel is accommodated in the above second fuel storing tank 15, in that a fuel supplying member 30 is connected with the porous body or the fiber bundle accommodated in the second fuel storing tank 15 and in that a tabular unit cell 20 is used.

In the present embodiment, a valve member 12 is opened and closed by pressing operation (knocking operation) of the fuel storing tank 10, and the liquid fuel flows in the second fuel storing tank 15 for temporary storage. This allows the liquid fuel to be supplied to the respective unit cells 20 by the fuel supplying member 30, and the same action and effects as in the first embodiment described above are exhibit. Further, in the present embodiment, the fuel is supplied by knocking operation of the fuel storing tank 10, and the fuel cell can be operated. Accordingly, control of a supplying amount of the liquid fuel, conditioning in starting use and stoppage of use can readily be carried out.

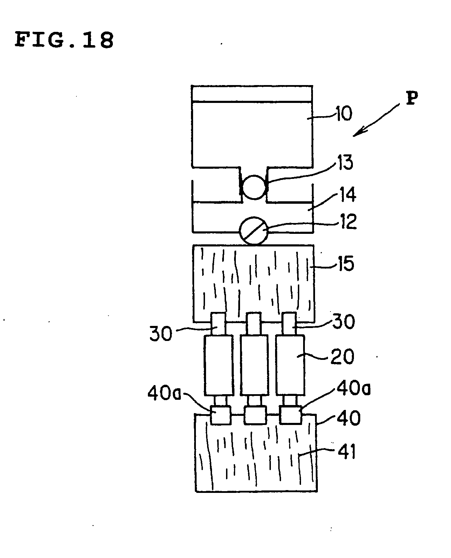

Fig. 18 shows the fuel cell P showing the fifth embodiment in the fourth invention.

The fuel cell P of the present embodiment is different from the fuel cell L of the first embodiment described above in that the liquid fuel is directly stored as shown in Fig. 18, in that the fuel storing tank 10 for storing the liquid fuel assumes an exchangeable cartridge structure and has a fuel supplying member having a liquid fuel inflow tank 14 at a lower part via a discharge valve 13, in that a second fuel storing tank 15 is further provided at a lower part of the liquid fuel inflow tank 14 via a valve member 12, in that a porous body or a fiber bundle occluding the liquid fuel is accommodated in the inside of the above second fuel storing tank 15, in that a fuel supplying member 30 is connected with the porous body or the fiber bundle accommodated in the second fuel storing tank 15 and in that unit cells 20 are connected in parallel.

In the present embodiment, the discharge valve 13 and the valve member 12 are opened and closed by pressing operation (knocking operation) of the fuel storing tank 10, and the liquid fuel flows in the second fuel storing tank 15 for temporary storage. This allows the liquid fuel to be supplied to the respective unit cells 20 by the fuel supplying member 30, and are the same action and effects as in the first embodiment described above exhibited. Further, in the present embodiment, the fuel storing tank 10 is a cartridge type, and therefore it can readily be exchanged to supplement the fuel. The fuel is supplied by pressing operation of the fuel storing tank 10, and the fuel cell can be operated. Accordingly, conditioning in starting use and stoppage of use can readily be carried out.

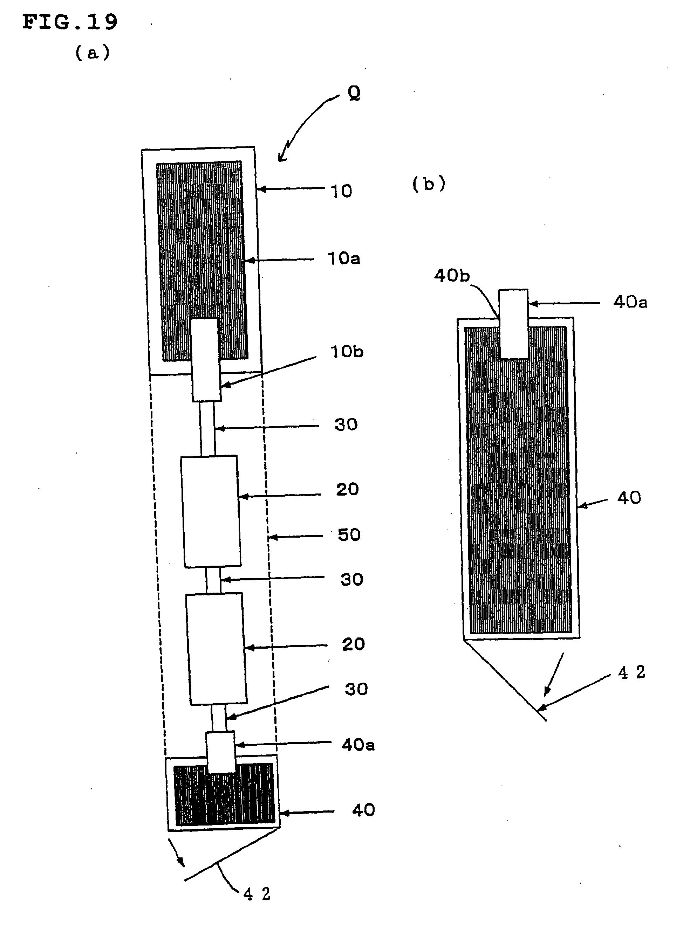

Fig. 19 shows the fuel cell Q of the sixth embodiment in the fourth invention.

The fuel cell Q of the present embodiment is different from the fuel cell M of the second embodiment described above in that a used fuel storing tank 40 is provided with an openable and closable cover 42.

The structure of the openable and closable cover 42 includes, for example, a screw cap structure, a hinge structure and an interfitting cap structure used for ordinary writing instruments, and they can suitably be used as long as they have a structure in which a used liquid fuel is not easily leaked.

In the present embodiment, the fuel cell functions in the same way as in the fuel cell of the first embodiment described above, and an occlusion body 41 accommodated in a used fuel storing tank 40 is exchangeable, so that a used liquid fuel can readily be discarded.

Further, the used fuel storing tank 40 may be detachable, and a large-sized used fuel storing tank 40 may be installed as shown in Fig. 19 (b).

A constitution of making the used fuel storing tank 40 detachable includes, for example, a screw cap structure, an interfitting structure and a structure in which attaching and detaching can readily be carried out by fixing with bolts and the like.

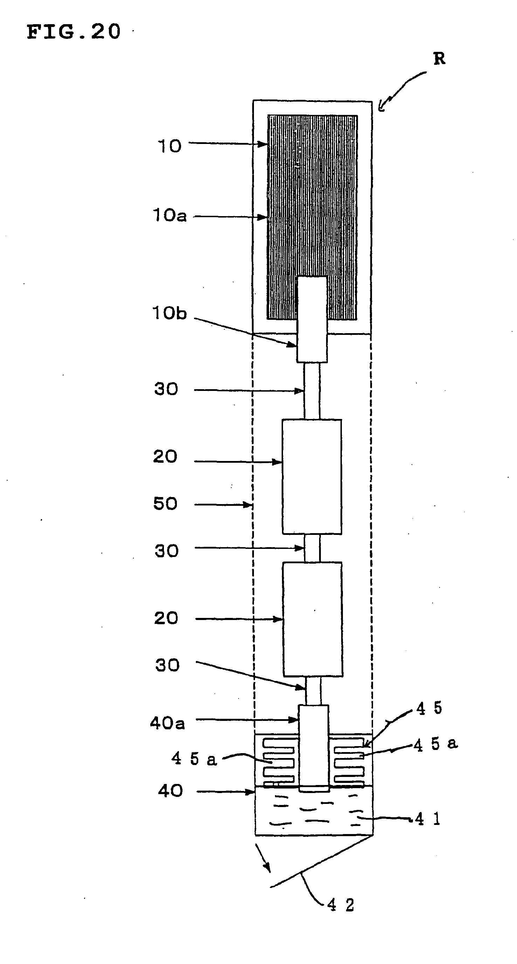

Fig. 20 shows the fuel cell R of the seventh embodiment in the fourth invention.

The fuel cell R of the present embodiment is different, as shown in Fig. 20, from the fuel cell L of the first embodiment described above only in that a collector body 45 is provided in the periphery of a feed 40a brought into contact with a fuel supplying member 30.

The collector body 45 assumes the same constitution as those of members used in free ink type writing instruments and prevents the liquid fuel stored directly in a used fuel storing tank 40 from backflowing to the fuel supplying member 30 due to a change in atmospheric pressure and temperature, and assumed is a structure in which used liquid fuel likely to backflow is held between collector parts 45a, 45a --- in the collection body and in which it returns to the fuel storing tank 40 when a change in atmospheric pressure and temperature goes back to what used to be.

The material of the collector body 45 shall not specifically be restricted as long as it has storage stability and durability against the liquid fuel stored therein, and it includes metals such as aluminum and stainless steel and synthetic resins such as polypropylene, polyethylene and polyethylene terephthalate. Synthetic resins such as polypropylene, polyethylene and polyethylene terephthalate are particularly preferred, and it can be produced by conventional injection molding and stereolithography in which complicated shapes can be formed. Also, a single layer member obtained by subjecting a film of the synthetic resins described above to press working is laminated, whereby the collector part 45a described above is replaced to constitute a collector body.

It is important that a surface free energy on the collector body 45 is set to a higher level than a surface energy of the used liquid fuel, and this enhances a wetting property of the collector body 45 to the used liquid fuel to raise power of holding the used liquid fuel. A surface free energy of the collector body 45 can be controlled usually by making use of plasma treatment, ozone treatment and treatment by a surface modifying agent.

In the present embodiment, the fuel cell functions in the same way as in the fuel cell of the first embodiment described above, and capillary force of a feed 40a is set to a fuel electrode body 21 and/or the fuel supplying member 30 brought into contact with the fuel electrode body 21<the feed 40a, whereby the liquid fuel which is not used for the reaction can be stored in the storing tank 40 without causing backflowing from the used fuel storing tank 40 to each of the respective unit cells 20, 20 to prevent an inhibitory reaction.

In the present embodiments, the used fuel storing tank 40 may be exchangeable or the used fuel storing tank 40 may be provided with an openable or closable cover. The used fuel storing tank 40 may be discarded as it is to discharge the used fuel. Further, the cover may be opened to discharge the used fuel, and in this case, the used fuel storing tank can be reused.

Further, when the fuel of such a concentration as reusable as a component of the used fuel remains because of any reasons, the used fuel discharged by the method described above can be refilled once again in the fuel storing tank 10.

In addition to the structure which can be used for the used fuel storing tank in the fuel cell F of the sixth embodiment described above, the valve structure given as the discharge mechanism of the liquid fuel coming from the fuel storing tank in the fourth and fifth embodiments can also be used as the structure of the openable or closable cover.

The fuel cells of the fourth invention shall not be restricted to the respective embodiments described above and can be varied to various extents within the scope of the technical concept of the present invention.

It can freely be changed to, for example, forms obtained by combining the fuel storing tanks of the third to fifth embodiments with the used fuel storing tanks of the sixth and seventh embodiments respectively.

Further, it is possible to connect a plurality of the used fuel storing tanks of the first to seventh embodiments to raise a storing amount of the used fuel storing tank. In this case, the connecting manner can suitably be selected from series and parallel.

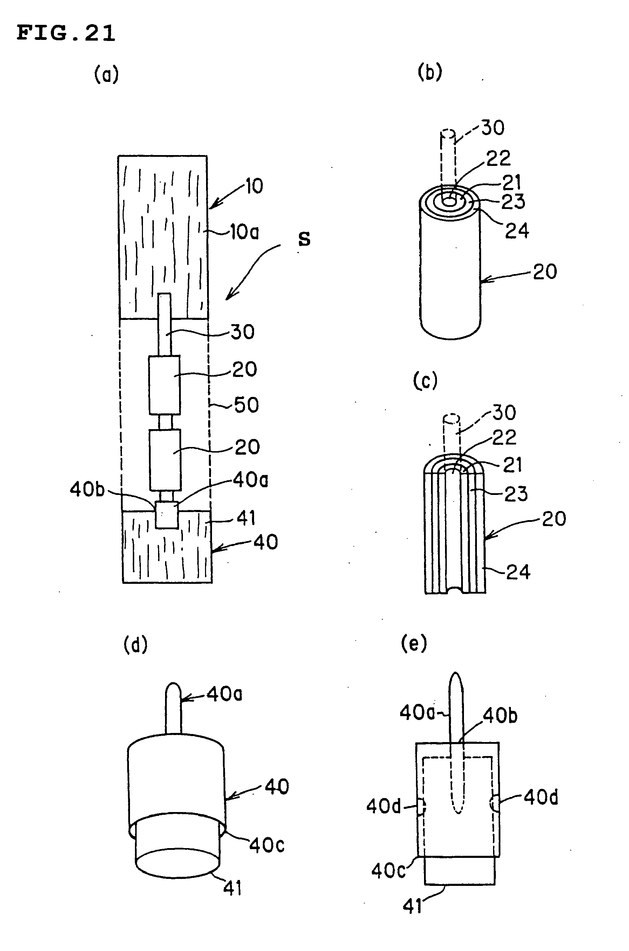

Fig. 21 (a) to (e) are outline drawings showing a fundamental embodiment (first embodiment) of the fuel cell S in the fifth invention.

The fuel cell S is equipped with, as shown in Fig. 21 (a) to (e), a fuel storing tank 10 for storing a liquid fuel, unit cells (fuel-cell cells) 20, 20 formed by constructing an electrolyte layer 23 on an outer surface of a fuel electrode body 21 comprising a fine porous carbonaceous body and constructing an air electrode layer 24 on an outer surface of the electrolyte layer 23, a fuel supplying member 30 connected with the fuel storing tank 10 described above and having a penetrating structure and a used fuel storing tank 40 provided an end of the above fuel supplying member 30, and assumed is a structure in which the respective unit cells 20, 20 described above are connected in series and in which the fuel is supplied in order by means of the fuel supplying member 30. Further, assumed is a constitution in which the used fuel storing tank 40 described above is provided with a feed 40a comprising a porous body and/or a fiber bundle having capillary force to discharge used fuel to the used fuel storing tank 40 described above via the above feed 40a, and assumed is a structure in which the above used fuel storing tank 40 is opened.

The same fuel as in the first invention described above is used as the liquid fuel stored in the fuel storing tank 10 described above, and the explanations thereof shall be omitted.

In the present embodiment, the liquid fuel is occluded in an occlusion body 10a of a sliver, a porous body or a fiber bundle accommodated in the fuel storing tank 10. The above occlusion body 10a shall not specifically be restricted as long as it can occlude a liquid fuel, and ones having the same constitution as that of a fuel supplying member 30 described later can be used.

The material of the fuel storing tank 10 described above shall not specifically be restricted as long as it has storage stability and durability against the liquid fuel stored therein, and it includes metals such as aluminum and stainless steel, synthetic resins such as polypropylene, polyethylene and polyethylene terephthalate and glass. The same one as in the first invention described above is used, and therefore the explanations thereof shall be omitted.

Also, the same ones as in the first invention described above are used as the respective unit cells 20, and therefore the explanations thereof shall be omitted.

The fuel supplying member 30 described above shall not specifically be restricted as long as it is connected with the occlusion body 10a for occluding the liquid fuel accommodated in the fuel storing tank 10 and has a penetrating structure in which the above liquid fuel can bee supplied to the respective unit cells 20, and it includes, for example, those comprising porous bodies which are constituted from felts, sponges and sintered bodies such as resin particle sintered bodies and resin fiber sintered bodies and which have capillary force and fiber bundle bodies comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the above porous bodies and fiber bundles is suitably set according to a supplying amount of the liquid fuel to the respective unit cells 20.

The used fuel storing tank 40 is disposed at an end of the fuel supplying member 30 via the feed 40a. Assumed is an open structure in which the used fuel storing tank 40 is provided with the feed 40a comprising a porous body and/or a fiber bundle having capillary force to allow used fuel to be discharged and in which an aperture part 40c capable of exposing an occlusion body 41 to a large extent is provided, as shown in Fig. 21 (d) and (e), together with an inserting hole 40b for the feed 40a. Further, the occlusion body 41 of a porous body or a fiber bundle matter which occludes the used fuel is accommodated in the used fuel storing tank 40 in contact with a lower end part of the feed 40a. Ribs 40d can be provided as well so that the occlusion body is not allowed to drop out.

The liquid fuel supplied by the fuel supplying member 30 is used for reaction in the unit cell 20, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 40 to prevent an inhibitory reaction.

Numeral 50 is a member comprising a mesh structure which joins the fuel storing tank 10 with the used fuel storing tank 40 and which allows the liquid fuel to be surely supplied from the fuel storing tank 10 to each of the respective unit cells 20, 20 via the fuel supplying member 30.

In the fuel cell S of the present embodiment thus constituted, the liquid fuel occluded in the occlusion body 10a accommodated in the fuel storing tank 10 is introduced into the fuel cell cells 20, 20 by virtue of capillary force due to a penetrating structure of the fuel supplying member 30.

In the present embodiment, the used fuel storing tank 40 described above assumes an open structure comprising a configuration in which the aperture part 40c is provided together with the inserting hole 40b for the feed 40a, and assumed is a constitution in which the used fuel is occluded directly in the occlusion body 41 via the feed 40a disposed at an end of the fuel supplying member 30. At least the capillary force of the fuel storing tank 10 (occlusion body 10a), the fuel electrode body 21 and/or the fuel supplying member 30 brought into contact with the fuel electrode body 21, the feed 40a and the used fuel storing tank 40 (occlusion body 41) is set to the fuel storing tank 10 (occlusion body 10a)<the fuel electrode body 21 and/or the fuel supplying member 30 brought into contact with the fuel electrode body 21<the feed 40a<the used fuel storing tank 40 (occlusion body 41), whereby the liquid fuel can stably and continuously be supplied from the fuel storing tank 10 to each of the respective unit cells 20, 20 without causing backflow and disruption even if the fuel cell A is left standing in any situation (angle) or upside down, and the liquid fuel which is not used for the reaction can be stored in the storing tank 40 to prevent an inhibitory reaction.

In the present embodiment, the used fuel storing tank 40 is not hermetically closed, and therefore the used fuel can be discharged from the occlusion body 40a to the atmosphere by vaporization. When the fuel cell is used for a short time, an amount of the used fuel is small, and therefore the used fuel can readily be discharged to the atmosphere by vaporization.

Further, even when a large amount of the used fuel is discharged, it can be held up to an amount which can be occluded by the occlusion body 40a, and the used fuel occluded can be discharged to the atmosphere in order by vaporization.

In the above embodiments, the used fuel storing tank 40 or the occlusion body 41 accommodated in the used fuel storing tank 40 or the used fuel storing tank 40 accommodating the occlusion body 41 may be exchangeable. The used fuel storing tank 40 or the occlusion body 41 accommodated in the used fuel storing tank 40 may be discarded as it is in order to discharge the used fuel. Also, the used fuel occluded in the occlusion body 41 and the feed 40a may be discharged by squeezing, centrifugation or vaporization, and in this case, the used fuel storing tank can be reused.

Further, in the fuel cell S of the present embodiment, assumed is a structure in which the liquid fuel can smoothly be supplied asitiswithoutvaporizingandwithoutusingspecificallyauxiliary equipment such as a pump, a blower, a fuel carburetor and a condenser , and therefore it becomes possible to reduce a size of the fuel cell.

Further, the fuel supplying member 30 having a penetrating structure is connected directly with an end part of the fuel storing tank 10 for supplying the fuel to the respective unit cells 20, 20, whereby reduction in a size of the fuel cell comprising plural cells can be achieved.

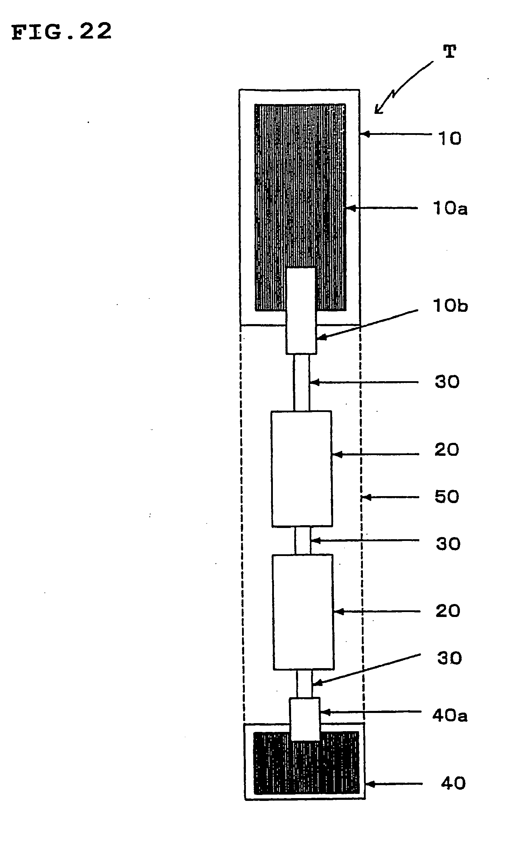

Fig. 22 shows the fuel cell T showing the second embodiment in the fifth invention. The same constitution as that of the fuel cell S of the first embodiment described above shall be given the same reference numerals, and the explanations thereof shall be omitted (the same shall apply in the third embodiment and those subsequent thereto).

The fuel cell T of the present embodiment is different from the fuel cell S of the first embodiment described above in that the liquid fuel is supplied to a fuel supplying member 30 via an occlusion body 10a of a sliver, a porous body or a fiber bundle accommodated in a fuel storing tank 10 and a feed 10b.

In the present embodiment, at least the capillary force of the fuel storing tank 10 (occlusion body 10a), the feed 10b, a fuel electrode body 21 and/or the fuel supplying member 30 brought into contact with the fuel electrode body 21, a feed 40a and a used fuel storing tank 40 (occlusion body 41) is set to the fuel storing tank 10 (occlusion body 10a) <the feed 10b<the fuel electrode body 21 and/or the fuel supplying member 30 brought into contact with the fuel electrode body 21<the feed 40a<the used fuel storing tank 40 (occlusion body 41), whereby the liquid fuel can stably and continuously be supplied from the fuel storing tank 10 to each of the respective unit cells 20, 20 without causing backflow and disruption even if the fuel cell T is left standing in any state (angle) or upside down, and the liquid fuel which is not used for the reaction can be stored in the storing tank 40 to prevent an inhibitory reaction.

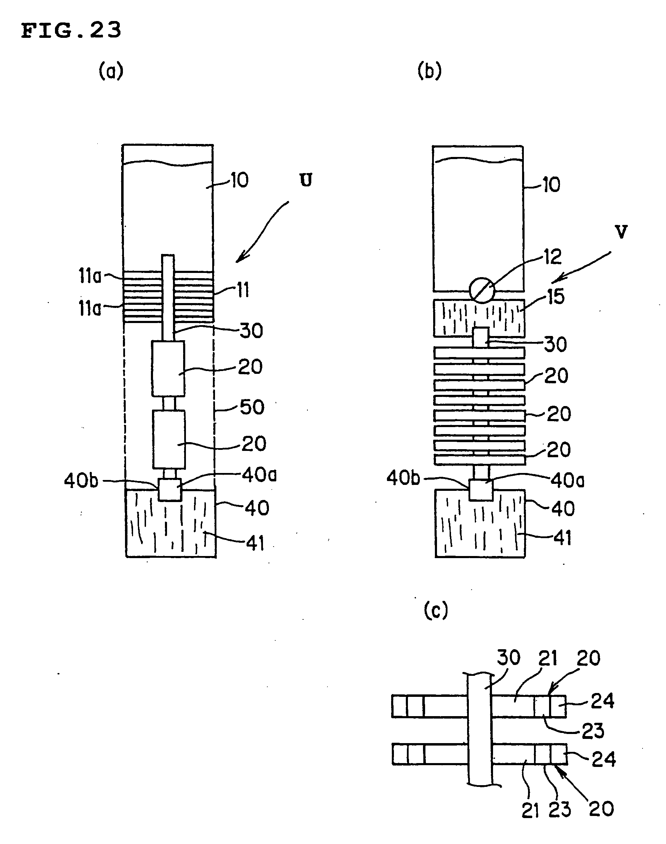

Fig. 23 (a) shows the fuel cell U showing the third embodiment in the fifth invention.

The fuel cell U of the present embodiment is different, as shown in Fig. 23 (a), from the fuel cell S of the first embodiment described above in that the liquid fuel is stored directly and that a collector body 11 is disposed at a lower part of a fuel storing tank 10 to supply a fuel.

In the present embodiment, the collector body 11 assumes the same constitution as those of members used in free ink type writing instruments and prevents the liquid fuel stored directly in the fuel storing tank 10 from discharging in excess to the fuel supplying member 30 due to a change in atmospheric pressure and temperature, and assumed is a structure in which the liquid fuel overflown by expansion and the like is held between collector parts 11a, 11a --- in the collector body 11 and in which it returns to the fuel storing tank 10 when a change in atmospheric pressure and temperature goes back to what used to be. It functions in the same manner as in the first embodiment described above.

Fig. 23 (b) and (c) shows the fuel cell V showing the fourth embodiment in the fifth invention.

The fuel cell V of the present embodiment is different, as shown in Fig. 23 (b) and (c), from the fuel cell S of the first embodiment described above in that the liquid fuel is directly stored, in that a second fuel storing tank 15 is further provided at a lower part of a fuel storing tank 10 for storing a liquid fuel via a valve member 12, in that a porous body or a fiber bundle occluding the liquid fuel is accommodated in the second fuel storing tank 15, in that a fuel supplying member 30 is connected with the porous body or the fiber bundle accommodated in the second fuel storing tank 15 and in that a tabular unit cell 20 is used.

In the present embodiment, a valve member 12 is opened and closed by pressing operation (knocking operation) of the fuel storing tank 10, and the liquid fuel flows in the second fuel storing tank 15 for temporary storage. This allows the liquid fuel to be supplied to the respective unit cells 20 by the fuel supplying member 30, and the same action and effects as in the first embodiment described above are exhibited. Further, in the present embodiment, the fuel is supplied by knocking operation of the fuel storing tank 10, and the fuel cell can be operated. Accordingly, control of a supplying amount of the liquid fuel, conditioning in starting use and stoppage of use can readily be carried out.

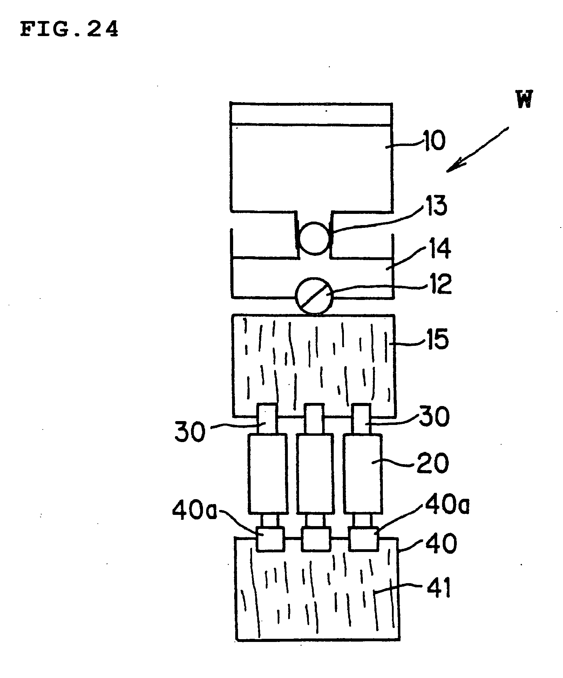

Fig. 24 shows the fuel cell W showing the fifth embodiment in the fifth invention.

The fuel cell W of the present embodiment is different, as shown in Fig. 24, from the fuel cell S of the first embodiment described above in that the liquid fuel is directly stored, in that the fuel storing tank 10 for storing the liquid fuel assumes an exchangeable cartridge structure and has a fuel supplying member having a liquid fuel inflow tank 14 at a lower part tank 10 via a discharge valve 13, in that a second fuel storing tank 15 is further provided at a lower part of the liquid fuel inflow tank 14 via a valve member 12, in that a porous body or a fiber bundle occluding the liquid fuel is accommodated in the second fuel storing tank 15, in that a fuel supplying member 30 is connected with the porous body or the fiber bundle accommodated in the second fuel storing tank 15 and in that unit cell 20s are connected in parallel.

In the present embodiment, the discharge valve 13 and the valve member 12 are opened and closed by pressing operation (knocking operation) of the fuel storing tank 10, and the liquid fuel flows in the second fuel storing tank 15 for temporary storage. This allows the liquid fuel to be supplied to the respective unit cells 20 by the fuel supplying member 30, and the same action and effects as in the first embodiment described above are exhibited. Further, in the present embodiment, the fuel storing tank 10 is a cartridge type, and therefore it can readily be exchanged to supplement the fuel. The fuel is supplied by pressing operation of the fuel storing tank 10, and the fuel cell can be operated. Accordingly, conditioning in starting use and stoppage of use can readily be carried out.

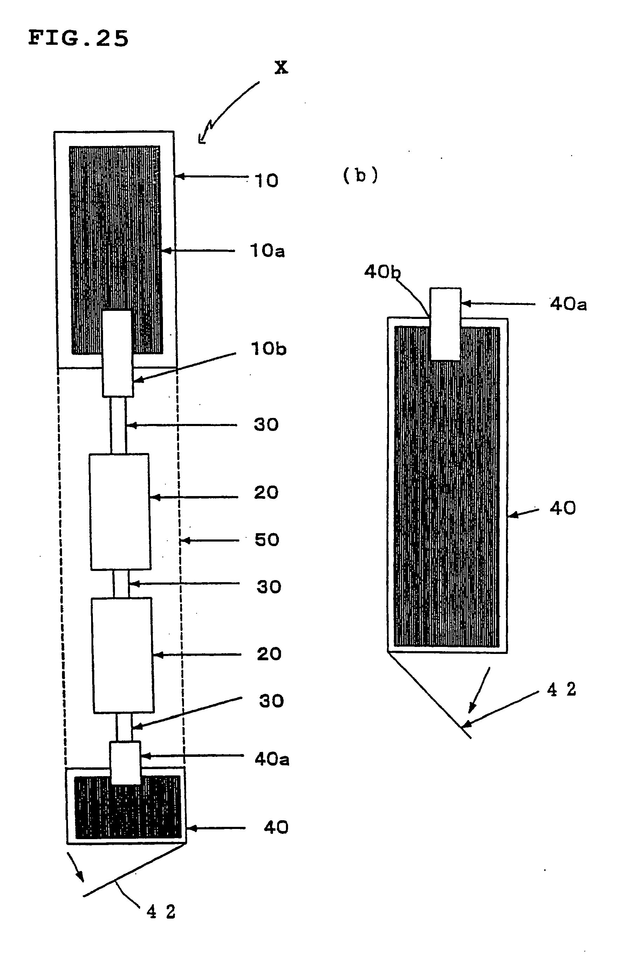

Fig. 25 shows the fuel cell X of the sixth embodiment in the fifth invention.

The fuel cell X of the present embodiment is different, as shown in Fig. 25 (a), from the fuel cell T of the second embodiment described above in that a used fuel storing tank 40 is provided with an openable and closable cover 42.

The structure of the openable and closable cover 42 includes, for example, a screw cap structure, a hinge structure and an interfitting cap structure used for ordinary writing instruments, and they can suitably be used as long as they have a structure in which a used liquid fuel is not easily leaked.

In the present embodiment, the fuel cell functions in the same way as in the fuel cell of the first embodiment described above, and an occlusion body 41 accommodated in a used fuel storing tank 40 is exchangeable, so that a used liquid fuel can readily be discarded.

Further, the used fuel storing tank 40 may be detachable, and a large-sized used fuel storing tank 40 may be installed as shown in Fig. 25 (b).

A constitution of making the used fuel storing tank 40 detachable includes, for example, a screw cap structure, an interfitting structure and a structure in which attaching and detaching can readily be carried out by fixing with bolts and the like.

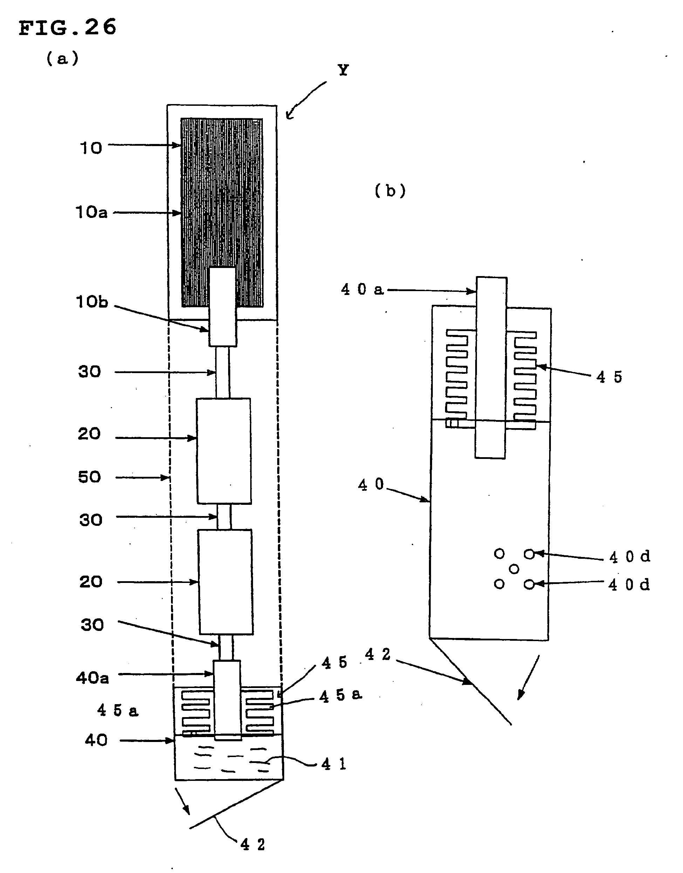

Fig. 26 shows the fuel cell Y of the seventh embodiment in the fifth invention.

The fuel cell Y of the present embodiment is different, as shown in Fig. 26 (a), from the fuel cell of the first embodiment described above only in that a collector body 45 is provided in the periphery of a feed 40b brought into contact with a fuel supplying member 30 in an opened used fuel storing tank 40.

The collector body 45 assumes the same constitution as those of bodies used in free ink type writing instruments and prevents the liquid fuel stored directly in the used fuel storing tank 40 from backflowing to the fuel supplying member 30 due to a change in atmospheric pressure and temperature, and assumed is a structure in which a used liquid fuel likely to backflow is held between collector parts 45a, 45a --- in the collector body 45 and in which it returns to the fuel storing tank 40 when a change in atmospheric pressure and temperature goes back to what used to be.

The material of the collector body 45 shall not specifically be restricted as long as it has storage stability and durability against the liquid fuel stored therein, and it includes metals such as aluminum and stainless steel and synthetic resins such as polypropylene, polyethylene and polyethylene terephthalate. Synthetic resins such as polypropylene, polyethylene and polyethylene terephthalate are particularly preferred, and it can be produced by conventional injection molding and stereolithography in which complicated shapes can be formed. Also, a single layer member obtained by subjecting a film of the synthetic resins described above to press working is laminated, whereby the collector part 45a described above is replaced to constitute a collector body.

It is important that a surface free energy on the collector body 45 is set to a higher level than a surface free energy of the used liquid fuel, and this enhances a wetting property of the collector body 45 to the used liquid fuel to raise power of holding the used liquid fuel. A surface free energy of the collector body 45 can be controlled by making use of plasma treatment, ozone treatment and treatment by a surface modifying agent.

In the present embodiment, the fuel cell functions in the same way as in the fuel cell of the first embodiment described above, and capillary force of a feed 40a is set to a fuel electrode body 21 and/or the fuel supplying member 30 brought into contact with the fuel electrode body 21<the feed 40a, whereby the liquid fuel which is not used for the reaction can be stored in the storing tank 40 without causing backflowing of the used fuel from the used fuel storing tank 40 to each of the respective unit cells 20, 20, to prevent an inhibitory reaction.

In the present embodiment, when a small amount of the used fuel is discharged, it is vaporized from an opened aperture, whereby it can be discharged to the atmosphere.

Further, when a large amount of the used fuel is discharged, the cover can be opened to discharge the used fuel.

The structure used for the used fuel storing tank in the fuel cell F of the sixth embodiment described above can be used for the openable and closable cover 42, and in addition thereto, the valve structure given as the discharge mechanism of the liquid fuel coming from the fuel storing tanks of the fourth and fifth embodiments can be used as well.

Further, the used fuel storing tank 40 may be enlarged in a size and opened through fine aperture parts 40d, 40d ---, as shown in Fig. 26 (b). Further, the used fuel storing tank 40 may be provided with an openable and closable cover 42. When a small amount of the used fuel is discharged, it is vaporized from an opened aperture, whereby it can be discharged to the atmosphere. Further, when a large amount of the used fuel is discharged, the cover can be opened to discharge the used fuel.

Further, a surface free energy in the inside of the used fuel storing tank 40 and the periphery of the fine aperture parts 40d is set to a lower level than that of the used fuel, whereby the used fuel stored in the used fuel storing tank 40 can be prevented from leaking in the form of liquid.

This is because a surface free energy in the inside of the used fuel storing tank 40 and the periphery of the fine aperture parts 40d is set to a lower level than that of the used fuel, whereby the wetting property to the used fuel is reduced to thereby make it difficult for the used fuel to leak from the aperture parts of the used fuel storing tank 40.

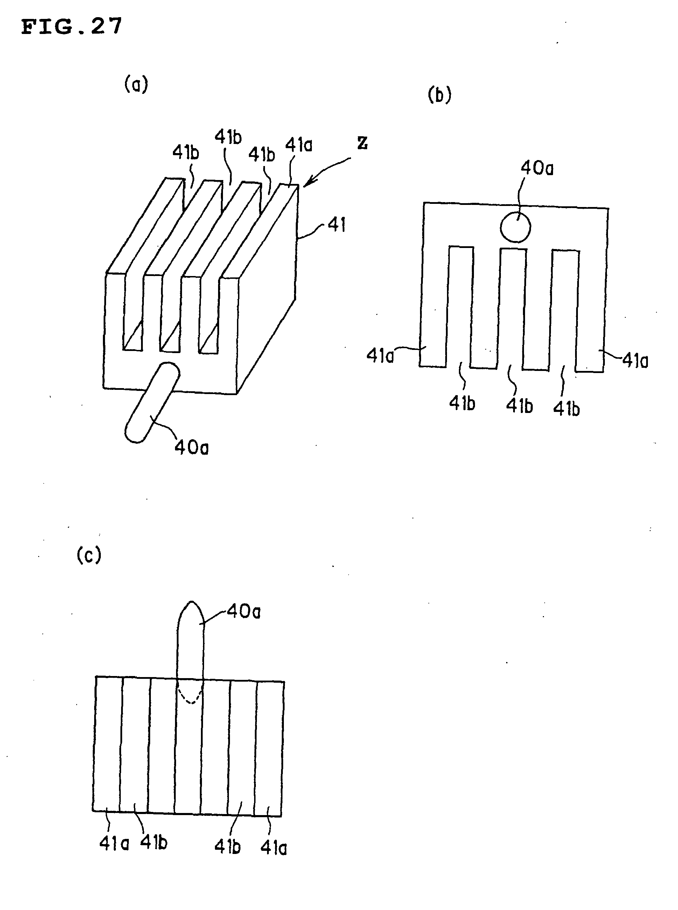

Fig. 27 shows the fuel cell Z of the eighth embodiment in the fifth invention.

The present embodiment is different from the fuel cells A to G of the respective embodiments described above only in that when it is anticipated that used fuel is generated in excess of an amount discharged from a used fuel storing tank 40 to the atmosphere, an occlusion body 41 is provided with a shape in which the used fuel is more liable to be vaporized.

As shown in Fig. 27 (a) to (c), the occlusion body 41 has a fin shape in which the respective occluding parts 41a are formed at a prescribed interval, and an air layer 41b is provided between the occluding parts 41a, to thereby make it possible to more efficiently vaporize the used fuel into the atmosphere.

A place installing a feed 40a may be both sides in addition to the central part.

The fuel cells of the fifth invention shall not be restricted to the respective embodiments described above and can be varied to various extents within the scope of the technical concept of the present invention.

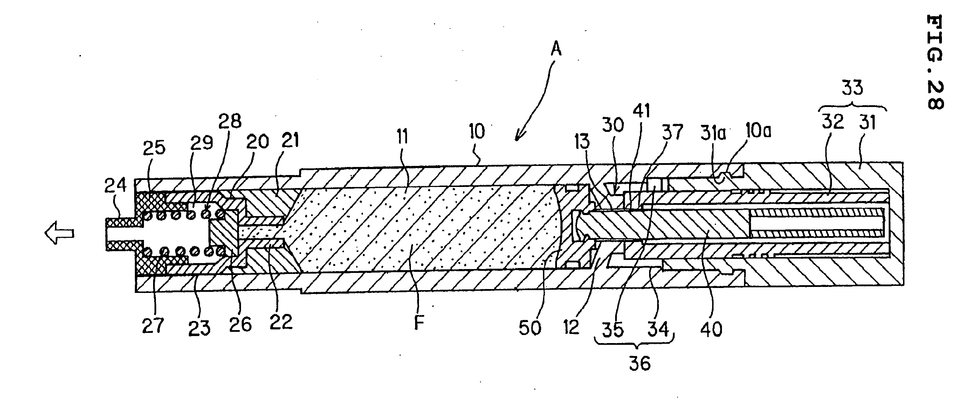

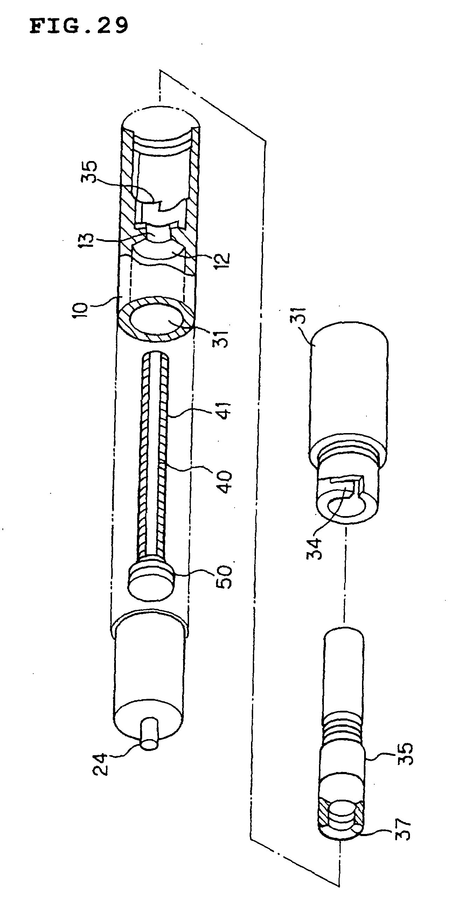

For example, the used fuel storing tanks of the first to sixth embodiments may be changed to the used fuel storing tank having the collector body of the seventh embodiment, and a plurality of the used fuel storing tanks of the first to seventh embodiments can be connected to increase storing amount of the used fuel. Fig. 28 to Fig. 30 show a fuel reservoir A for a fuel cell showing one example of the first embodiment in the sixth invention.

The fuel reservoir A for a fuel cell of the first embodiment in the sixth invention is, as shown in Fig. 28 to Fig. 30, a cartridge type fuel reservoir detachably connected with a fuel cell main body, wherein the fuel reservoir is equipped with a fuel tank (main body part) 10 for storing a liquid fuel F, a liquid fuel discharge part 20 provided at the tip of the fuel tank 10 and having a check valve and a liquid fuel pressing mechanism 30 provided in the fuel tank 10; and the liquid fuel F stored in the fuel tank part 10 is pushed forward by the liquid fuel pressing mechanism 30 to supply a fixed amount to the liquid fuel discharge part 20 and a fixed amount of the liquid fuel F is discharged from the liquid fuel discharge part 20.

The fuel tank part 10 assumes a constitution in which the liquid fuel discharge part 20 having a check valve is provided at the tip side thereof and a central part is a storing room 11 for storing the liquid fuel and in which the liquid fuel pressing mechanism 30 for discharging a fixed amount of the liquid fuel is provided at the rear side thereof.

The fuel tank 10 is preferably one having durability, storage stability against the liquid fuel F and gas non-permeability (gas non-permeability against oxygen gas and nitrogen gas).

Further, it has preferably light transmittance so that a remaining amount of the liquid fuel can be visually observed. In respect to light transmittance which makes it possible to visually observe a remaining amount of the liquid fuel, the content can be visually observed regardless of a material and a thickness thereof if the light transmittance is 50 % or more. More preferably, if the light transmittance is 80 % or more, it has no problems in terms of actual use, and visibility of the liquid fuel is further enhanced.

In order to prevent the liquid fuel from leaking and vaporizing and prevent air from coming into the fuel reservoir tank, it is preferably constituted from a gas non-permeable material, and more preferably, if the oxygen gas permeability (oxygen gas non-permeability) is 100 cc·25 µm/m²·24 hr·atm (25°C, 65 % RH) or less, it has no problems in terms of actual use.

In respect to the material of the fuel tank 10, the preferred material includes metals such as aluminum and stainless steel when light transmittance is not required, synthetic resins and glass, and from the viewpoints of visibility of the remaining amount of the liquid fuel, gas non-permeability, reduction in a cost in producing and assembling and easiness of the production, it includes preferably those comprising a single layer structure or a multilayer structure of two or more layers comprising a single kind or two or more kinds of resins such as ethylene·vinyl alcohol copolymer resins, polyacrylonitrile, nylon, polyethylene terephthalate, polycarbonate, polystyrene, polyvinylidene chloride and polyvinyl chloride. More preferably, the above resins in which the oxygen gas permeability (oxygen gas non-permeability) is 100 cc·25 µ m/m²·24 hr·atm (25°C, 65 % RH) or less and which have a light transmittance of 50 % or more, particularly preferably 80 % or more are preferably selected.

Particularly preferably, they are ethylene·vinyl alcohol copolymer resins, polyacrylonitrile and polyvinylidene chloride which have an oxygen gas non-permeability of the characteristic described above and in which light transmittance is 80 % or more.

The fuel tank 10 comprises preferably a multilayer structure of two or more layers and comprises desirably a multilayer structure of two or more layers in which at least one layer is constituted from a material containing the resin group described above having the gas non-permeability and the light transmittance each described above. If at least one layer in the multilayer structure is constituted from the resin having the performance (gas permeability) described above, the remaining layers may be constituted from usual resins, and no problems in terms of actual use shall be involved therein. Such multilayer structure can be produced by extrusion molding, injection molding, coextrusion molding and the like.

Further, in place of at least one gas non-permeable layer provided by the above molding, a gas non-permeable layer can be provided as well by coating a solution of a resin selected from the resin group described above. In this coating method, more specific production facilities than in the production by molding such as extrusion molding, injection molding and the like described above are not required, and it can stepwise be produced.

The gas non-permeable layer provided by the above respective molding methods and coating has preferably a thickness of 10 to 2000 µm. If this thickness is less than 10 µm, the gas non-permeability can not be exhibited. On the other hand, if it exceeds 2000 µm, the performances of the whole part of the vessel such as light transmittance and flexibility are deteriorated.

Further, in place of the gas non-permeable layer formed of the resins described above by molding or coating, it can be provided by covering with a non-permeable thin film member such as a gas non-permeable film. The non-permeable thin film member coated includes preferably at least one selected from metal foils such as an aluminum foil, deposition matters of metal oxides such as alumina and silica and diamond-like carbon coating materials. Such gas non-permeability as described above can be exhibited by covering the outer surface of the fuel storing tank 10 with the above non-permeable thin film members. The above non-permeable thin film member has preferably a thickness of 10 to 2000 µm as is the case with what has been described above. When the non-permeable thin film member described above is a member having no visibility, for example, an aluminum foil, a part of the fuel storing tank is not covered with it so that gas non-permeability is not damaged, and it is coated in a lattice form or a stripe form to provide an inspection window part. A gas non-permeable film having light transmittance can be coated on the above inspection window part to secure gas non-permeability and visibility.

The liquid fuel discharge part 20 is provided at the tip side of the inside of the above fuel tank 10 via an adaptor member 21 and comprises a separable upper member 23 having a cylindrical inflow part 22 and a separable lower member 25 having a cylindrical discharge part 24, and it assumes a structure in which joining the separable members 23, 25 makes a receiving room 29 for receiving, between the inflow part 22 and the discharge part 24, a check valve 28 comprising a check valve member 26 and a pressing member 27 comprising a coil spring pressing the check valve member 26 to the inflow part 22 side.

A structure in which foreign matters such as air are prevented from coming in during stoppage of use (non-use) is assumed by providing the above liquid fuel discharge part 20 with the check valve 28, so that the fuel tank 10 can be prevented from being substituted by air and that the liquid fuel F can be prevented from leaking and spilling.

The material of the liquid fuel discharge part 20 including the check valve 28 shall not specifically be restricted as long as it has durability, storage stability against the liquid fuel stored therein and gas non-permeability, and it includes synthetic resins such as ethylene·vinyl alcohol copolymer resins, polyacrylonitrile, nylon, polyethylene terephthalate, polycarbonate, polystyrene, polyvinylidene chloride and polyvinyl chloride, rubbers such as natural rubber, isoprene rubber, butadiene rubber, 1,2-polybutadiene rubber, styrene-butadiene rubber, chloroprene rubber, nitrile rubber, butyl rubber, ethylene-propylene rubber, chlorosulfonated polyethylene, acryl rubber, epichlorohydrin rubber, polysulfide rubber, silicone rubber, fluorocarbon rubber and urethane rubber and elastomers. It can be produced by conventional injection molding and vulcanizing molding.

The same liquid fuel as used in the first invention can be used as the liquid fuel F.

In the sixth invention, the liquid fuel pressing mechanism 30 shall not specifically be restricted as long as the liquid fuel F stored in the fuel tank 10 is pushed forward by the above liquid fuel pressing mechanism 30 to supply a fixed amount to the liquid fuel discharge part 20 and a fixed amount of the liquid fuel F is discharged from the liquid fuel discharge part 20, and ones having various structures can be used.

The liquid fuel pressing mechanism 30 of the present embodiment is equipped at the rear of the fuel tank 10 with a rotation operating member 33 constituted by an outer cylindrical member 31 and an inner cylindrical member 32 which is non-rotatably inserted into the inside of the outer cylindrical member, a rachet mechanism 36 provided at a tip part of the outer cylindrical member 31 in the rotation operating member 33 and comprising rachet teeth 34 formed on the inner face of the fuel tank 10 and locking pawls 35 engaged with the rachet teeth 34, a screw rod 40 inserted into the inside of the inner cylindrical member 32 in the rotation operating member 33 and a piston 50 provided at a tip part of the screw rod 40 and inserted into the fuel tank 10 so as to be slidable on the inner face in front of a partition wall 12 protruded on the inner face of the fuel tank 10.

An interfitting convex part 31a is formed on the outer cylindrical member 31 described above, and this interfits with an interfitting concave part 10a of the fuel tank 10, whereby the outer cylindrical member 31 is rotatable and non-detachable to the fuel tank 10.

A male screw part 41 formed on an outer face of the screw rod 40 screws with a female screw part 37 formed at the front end of the inner cylindrical member 31, and the screw rod 40 is inserted into an inserting pore 13 of the partition wall 12 described above and can be moved only in a longitudinal direction relative to the inner cylindrical member 32.

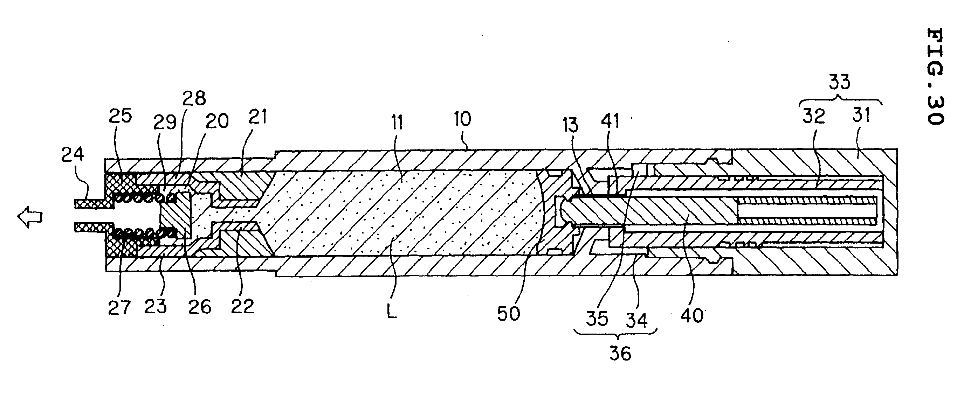

Assumed is a structure in which the screw rod 40 is rotated by a rotating operation of the outer cylindrical member 31 in the rotation operating member 33 described above to move forward by screwing with the female screw part 37 so that a fixed amount of the liquid fuel F is supplied to the liquid fuel discharge part 20 by means of the piston 50 connected with a tip of the screw rod 40 and fixed amount of the liquid fuel F is pushed out from the liquid fuel discharge part 20. A fixed amount of the liquid fuel F pushed out by the piston 50 opens, as shown in Fig. 30, the check valve 28 by virtue of pressure thereof and is supplied to the liquid fuel discharge part 20, and a fixed amount of the liquid fuel F is discharged (pushed out) from the liquid fuel discharge part 20. Assumed is a structure in which after a fixed amount of the liquid fuel F is supplied, the state of Fig. 28 is reinstated by the pressing member 27 to prevent foreign matters such as air from coming into the fuel tank 10.

In the fuel reservoir A for a fuel cell of the sixth invention thus constituted, the outer cylindrical member 31 can be rotated only to one direction relative to the fuel tank 10 by the rachet mechanism 36, and in the present embodiment, a fixed amount of the liquid fuel F can be discharged by maintaining a rotation angle of the rotation operating member 33 to a certain level. A structure in which feeling of clicking is obtained by the rachet mechanism 36 every time rotating operation is carried out by a certain angle is assumed in order to maintain the certain rotation angle described above. A discharged amount of the liquid fuel discharged by one click is controlled (discharged amount = pitch of the screw × 1/notch number × rear end wall area) by the rotation operating member 33, a pitch of the screw rod 40, a notch number (the total number of cams gotten over by one rotation of the rachet mechanism 36) of the rachet mechanism 36 and a rear wall area of the fuel tank 10, and it is set preferably to 5 µl to 10 ml.

When the outer cylindrical member 31 described above is rotated relative to the fuel tank 10, the inner cylindrical member 32 is rotated together with the outer cylindrical member 31. In this case, the screw rod 40 is prevented from rotating by the inserting pore 12, and therefore the screw rod 40 is moved forward. As a result, the liquid fuel F stored in the fuel tank 10 is pushed by the piston to be supplied a fixed amount to the liquid fuel discharge part 20 having the check valve 28, and a fixed amount of the liquid fuel F is discharged from the liquid fuel discharge part 20.

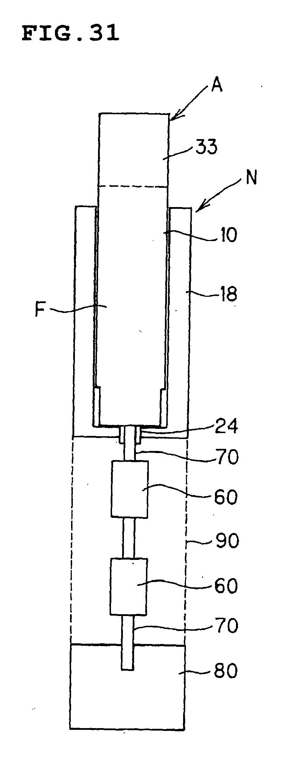

The fuel reservoir A for a fuel cell thus constituted is detachably connected, as shown in Fig. 31, with a fuel cell main body N and used.

That is, the fuel cell main body N is equipped with, as shown in Fig. 31, unit cells 60, 60 each of which is formed by constructing an electrolyte layer 63 on an outer surface of a fuel electrode body 62 comprising a fine porous carbonaceous body and constructing an air electrode layer 64 on an outer surface of the electrolyte layer 63, a fuel supplying member 70 connected with the fuel reservoir A and having a penetrating structure and a used fuel storing tank 80 provided at an end of the fuel supplying member 70, and assumed is a structure in which the respective unit cells 20, 20 are connected in series and in which the fuel is supplied in order by means of the fuel supplying member 70. The fuel reservoir A described above comprises an exchangeable cartridge structure and assumes a structure in which it is installed into a supporting member 18 of the fuel cell main body N.

The above fuel reservoir A is installed in the supporting member 18 of the fuel cell main body N to be connected with the fuel supplying member 70. In this case, if the respective members have a higher surface free energy than that of the liquid fuel, the liquid fuel is liable to get into a gap between the junction parts, and the possibility that the liquid fuel leaks is enhanced. Accordingly, a surface free energy of the above members is preferably controlled to a lower level than that of the liquid fuel on at least a wall surface thereof brought into contact with the liquid fuel F. A method for controlling this can be carried out by subjecting a wall surface of the fuel tank 10 brought into contact with the liquid fuel to water repellent film-forming treatment by coating with a water repellent agent of a silicone base, or a fluorine base resin.

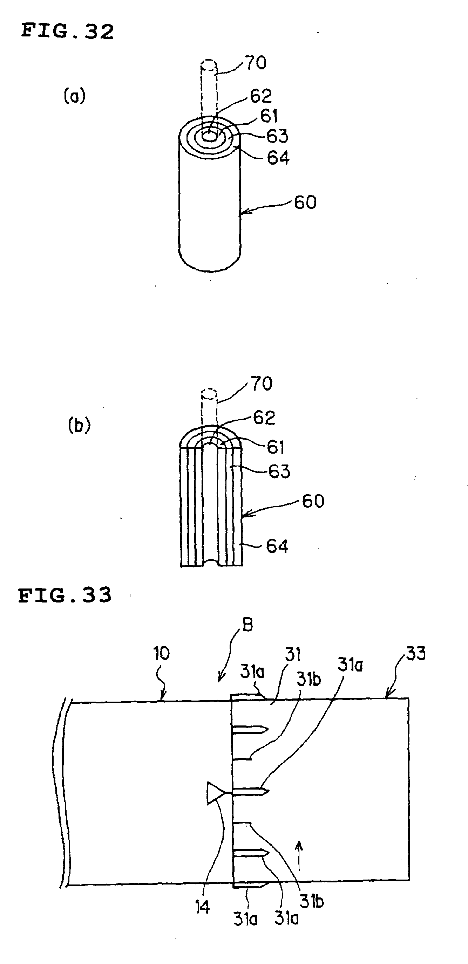

The respective unit cells 60 have, as shown in Fig. 32 (a) and (b), a fuel electrode body 61 comprising a fine porous carbonaceous pillar body and in addition thereto, have a through part 62 through which the fuel supplying member 70 passes in a central part thereof, and assumed is a structure in which the electrolyte layer 63 is constructed on an outer surface of the fuel electrode body 61 and in which the air electrode layer 64 is constructed on an outer surface of the electrolyte layer 63. The respective cells 60 generate an electromotive force of about 1.2 V per cell in theory.

The same cells as those of the first invention described above are used for the respective cells 60.

The fuel supplying member 70 described above shall not specifically be restricted as long as it is inserted into the discharge port 24 of the fuel reservoir A and has a penetrating structure in which the liquid fuel can be supplied to the respective unit cells 60, and it includes, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the porous bodies and fiber bundles is suitably set according to a supplying amount of the liquid fuel to the respective unit cells 60.

The used fuel storing tank 80 is disposed at an end of the fuel supplying member 70. In this case, it involves no problems that the used fuel storing tank 80 is brought into direct contact with an end of the fuel supplying member 70 to occlude the used fuel directly in an occlusion body. However, a sliver, a porous body or a fiber bundle may be provided as a feed at a junction part brought into contact with the fuel supplying member 70 to use it as a discharge passage for the used fuel.

The liquid fuel supplied by the fuel supplying member 70 is used for reaction in the cell 60, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 80 to prevent an inhibitory reaction.

Numeral 90 is a member comprising a mesh structure which joins the fuel reservoir A with the used fuel storing tank 80 and in which a fixed amount of the liquid fuel is surely supplied from the fuel reservoir A to each of the respective unit cells 60, 60 via the fuel supplying member 70.

In the fuel cell using the fuel reservoir A thus constituted, a fixed amount of the liquid fuel F is supplied to the liquid fuel discharge part 20 from the fuel reservoir A by rotating the rotation operating member 33 and introduced into the cells 60, 60 by the penetrating structure of the fuel supplying member 70.

In the present invention, a fixed amount of the liquid fuel F can be discharged by fixing a rotation angle of the rotation operating member 33 in the fuel reservoir A for a fuel cell to a certain level. In order to maintain the certain rotation angle, assumed is a structure in which feeling of clicking is obtained every time rotating operation by the rachet mechanism 36 described above is carried out by a certain angle and therefore the fixed amount can readily be discharged.

Further, assumed is a structure in which when a fixed amount of the liquid fuel F is supplied to the liquid fuel discharge part 20, the check valve 28 is reinstated in the state of Fig. 28 by the pressing member 27 to prevent foreign matters such as air from coming in the fuel tank part 10. Accordingly, the fuel tank 10 is prevented air from coming in to prevent the fuel from leaking and spilling, and the fuel cell can be operated. Further, constitution of the fuel tank part 10 by a material having a light transmittance of 50 % or more and/or a material having at least one oxygen barrier resin layer makes it possible to raise the storing property and makes it possible for the user to readily observe the discharge amount, and the usability is further improved.

In the fuel cell of the above constitution, assumed is a structure in which a fixed amount of the liquid fuel can smoothly be supplied as it is without vaporizing and without using specifically auxiliary equipment such as a pump, a blower, a fuel carburetor and a condenser, and therefore it becomes possible to reduce a size of the fuel cell.

Accordingly, in the fuel cell of the above embodiment, it becomes possible to turn the whole part of the fuel cell into a cartridge, and provided is the small-sized fuel cell which can be used as an electric power source for portable electronic appliances such as cellular phones and note type personal computers.

In the embodiment described above, an embodiment in which two cells 60 are used has been shown, and the number of the cells 60 connected (serial or parallel) can be increased according to the use purposes of the fuel cell to obtain a required electromotive force.

The fuel reservoirs for a fuel cell and the fuel cells in the sixth invention shall not be restricted to the respective embodiments described above and can be varied to various extents within the scope of the technical concept of the present invention.

For example, the cell 60 having a cylindrical shape is used, but it may have other shapes such as a prism shape and a tabular shape. It may be connected with the fuel supplying member 70 in parallel as well as in series.

In the embodiment described above, the present invention has been explained in the form of a direct methanol fuel cell, but the present invention shall not be restricted to the direct methanol fuel cell described above as long as the fuel cell reservoir is a cartridge type fuel reservoir which is detachably connected with a fuel cell main body and equipped with a fuel tank for storing a liquid fuel, a liquid fuel discharge part provided at a tip of the fuel tank and having a check valve and a liquid fuel pressing mechanism provided in the fuel tank, and in which the liquid fuel stored in the fuel tank is pushed forward by the liquid fuel pressing mechanism to supply a fixed amount to the liquid fuel discharge part so that a fixed amount of the liquid fuel is discharged from the liquid fuel discharge part. It can suitably be applied as well to a polymer membrane fuel cell including a reformer type.

Fig. 33 is a partial plain drawing showing another example of the fuel reservoir for a fuel cell according to the sixth invention.

The fuel reservoir B for a fuel cell of the present embodiment is different from the fuel reservoir A for a fuel cell of the embodiment described above only in that convex parts 31a, 31a and /or reference lines for a scale 31b, 31b which is present at a central part (middle) of the convex parts 31a, 31a are provided in a longitudinal direction of an outer cylindrical member 31 in a rotation operating member 33 and that a marking part 14 is provided on a surface of the rear side of a fuel tank 10, and it can be used in the same manner as the fuel reservoir A.

In the fuel reservoir B for a fuel cell of the present embodiment, when the liquid fuel F is discharged from a discharge part 24 in a fixed amount of 0.1 ml by one revolution (360 degrees) of the outer cylindrical member 31 in the rotation operating part 33, 0.0125 ml of the liquid fuel is discharged by adjusting a convex part 31a to the marking part 14 set as a reference (no discharge of the liquid fuel, discharge amount: 0) and rotating the outer cylindrical member 31 to adjust the next convex part 31a to the rerference 14, and one round (360 degrees) is completed by adjusting the convex part 31a eight times to the marking part 14 set as the reference. In the present embodiment, a discharge amount of 0.00625 is obtained by adjusting to the first reference line 31b.

In the fuel reservoir B for a fuel cell of the present embodiment, displaying of the convex parts 31a for a scale and/or the reference line 31b and the marking part 14 each described above by printing makes it possible to readily confirm a discharge amount of the liquid fuel other than by feeling of clicking.

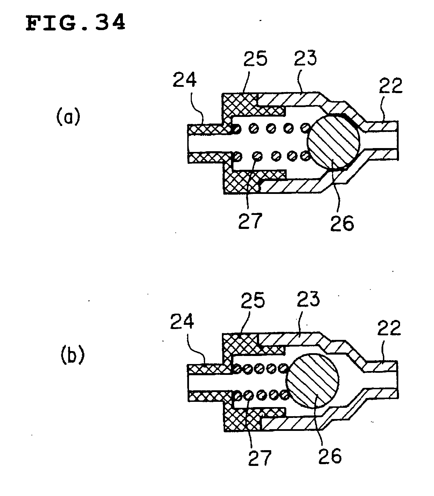

Fig. 34 shows another embodiment of the liquid fuel discharge part 20. The liquid fuel discharge part 20 of the present embodiment is different as compared with the embodiment of Fig. 28 to Fig. 30 in that a check valve member 26 provided in the liquid fuel discharge part 20 comprises a ball valve and in that the form of a separable upper member 23 assumes a structure in which the ball valve can be attached firmly, and it can be used in the same manner as in the embodiment shown in Fig. 28.

Further, a fuel cell main body has been constituted by constructing an electrolyte layer on an outer surface of a fuel electrode body comprising a fine porous carbonaceous body and constructing an air electrode layer on an outer surface of the electrolyte layer, but the structure of the fuel cell main body shall not specifically be restricted, and it may be a fuel cell main body assuming, for example, a constitution in which a porous carbonaceous body having electroconductivity is used as a base material and a unit cell obtained by forming the respective layers of electrode/electrolyte/electrode on the base material or a jointed body obtained by connecting two or more above unit cells is equipped to penetrate the liquid fuel into the base material via a fuel supplying member and in which an electrode face formed on an outer surface of the base material is exposed to air.

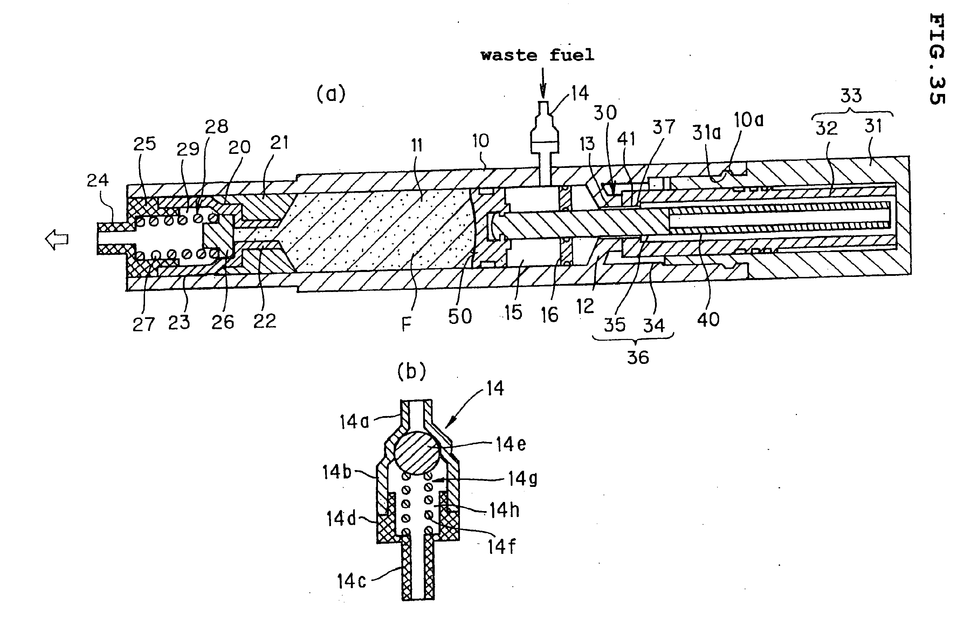

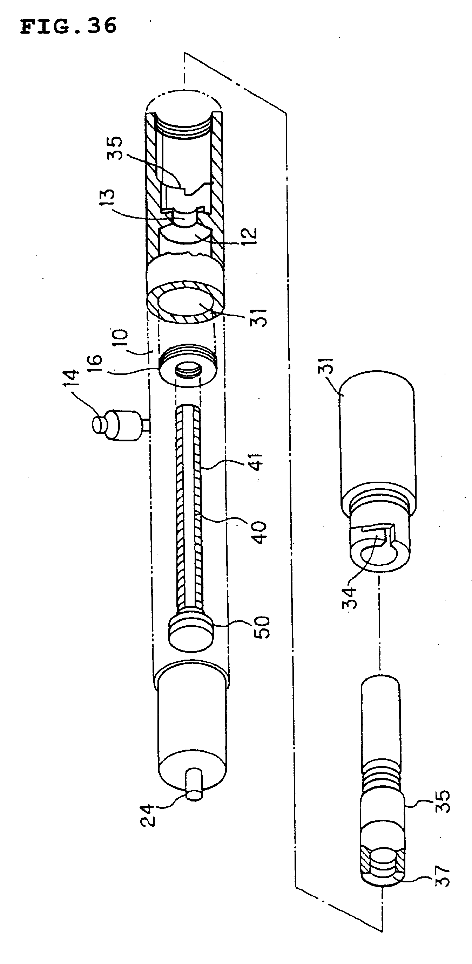

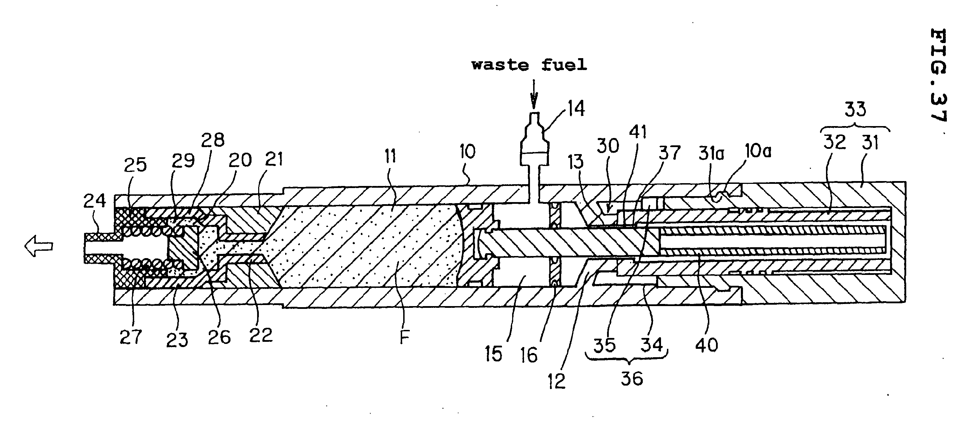

Fig. 35 to Fig. 38 show the fuel reservoir A for a fuel cell and the fuel cell N showing one example of the embodiment in the seventh invention.

The fuel reservoir A for a fuel cell of the first embodiment is, as shown in Fig. 35 to Fig. 38, a cartridge type fuel reservoir detachably connected with a fuel cell main body, wherein the fuel reservoir is equipped with a fuel tank (main body part) 10 having a waste fuel recovery aperture part 14 for storing a liquid fuel F, a liquid fuel discharge part 20 provided at a tip of the fuel tank 10 and having a check valve and a liquid fuel pressing mechanism 30 provided in the fuel tank 10; the liquid fuel F stored in the fuel tank 10 is pushed forward by the liquid fuel pressing mechanism 30 to supply a fixed amount F to the liquid fuel discharge part 20 and a fixed amount of the liquid fuel F is discharged from the liquid fuel discharge part 20; and a space part 15 in the fuel tank 10 which is formed by the pressing mechanism is used as a waste fuel recovery tank for used fuel consumed in a fuel cell main body.

The fuel tank 10 assumes a constitution in which the liquid fuel discharge part 20 having a check valve is provided at the tip side thereof and a central part is a storing room 11 for storing the liquid fuel and in which the liquid fuel pressing mechanism 30 for discharging a fixed amount of the liquid fuel is provided at the rear side.

The fuel tank 10 is preferably one having durability, storage stability against the liquid fuel F and gas non-permeability (gas non-permeability against oxygen gas and nitrogen gas).

Further, the fuel tank has preferably light transmittance so that a remaining amount of the liquid fuel canbe visually observed. In respect to light transmittance which makes it possible to visually observe a remaining amount of the liquid fuel, the content can be visually observed regardless of the material and a thickness thereof if the light transmittance is 50 % ormore. More preferably, the light transmittance of 80 % or more involves no problems in terms of actual use, and visibility of the liquid fuel is further enhanced.

In order to prevent the liquid fuel from leaking and vaporizing and prevent air from coming into the fuel storing tank, it is preferably constituted from a gas non-permeable material. More preferably, if it has the oxygen gas permeability (oxygen gas non-permeability) of 100 cc·25 µm/m²·24 hr·atm (25°C, 65 % RH) or less, no problems are involved in terms of actual use.

In respect to the materials of the fuel tank 10, the preferred materials include metals such as aluminum and stainless steel when light transmittance is not required, synthetic resins and glass, and from the viewpoints of visibility of the remaining amount of the liquid fuel described above, gas non-permeability, reduction in a cost in producing and assembling and easiness of the production, they include preferably those comprising a single layer structure or a multilayer structure of two or more layers comprising a single kind or two or more kinds of resins such as ethylene·vinyl alcohol copolymer resins, polyacrylonitrile, nylon, polyethylene terephthalate, polycarbonate, polystyrene, polyethylene, polypropylene, polyvinylidene chloride and polyvinyl chloride, and more preferably, the resins which have an oxygen gas permeability (oxygen gas non-permeability) of 100 cc·25 µm/m²·24 hr·atm (25°C, 65 % RH) or less and which have a light transmittance of 50 % or more, particularly preferably 80 % or more are preferably selected.

Particularly preferably, they are ethylene·vinyl alcohol copolymer resins, polyacrylonitrile and polyvinylidene chloride which have an oxygen gas non-permeability of the characteristic described above and a light transmittance of 80 % or more.

The fuel tank 10 comprises preferably a multilayer structure of two or more layers and comprises desirably a multilayer structure of two or more layers in which at least one layer is constituted from a material selected from the resin group described above having the gas non-permeability and the light transmittance each described above. If at least one layer in the multilayer structure described above is constituted from the resin (oxygen barrier layer) having the performance (gas non-permeability) described above, the remaining layers may be constituted from usual resins, and no problems in terms of actual use shall be involved therein. Such multilayer structure can be produced by extrusion molding, injection molding, coextrusion molding and the like.

Further, in place of at least one oxygen barrier layer provided by the above moldings, an oxygen barrier layer can be provided by coating a solution of a resin selected from the resin group described above. In this coating method, more specific production facilities than in the production by molding such as extrusion molding, injection molding and the like described above are not required, and it can stepwise be produced.

The oxygen barrier (gas non-permeable) layer provided by the above respective molding methods and coating has preferably a thickness of 10 to 2000 µm. If this thickness is less than 10 µm, the gas non-permeability can not be exhibited. On the other hand, if it exceeds 2000 µm, the performances of the whole part of the tank such as light transmittance and flexibility are deteriorated.

Further, in place of the oxygen barrier layer (gas non-permeable layer) formed from the resins described above by molding or coating, it can be provided by covering with a non-permeable thin film member such as the gas non-permeable film described above. The non-permeable thin film member coated includes preferably at least one selected from metal foils such as an aluminum foil, deposition matters of metal oxides such as alumina and silica and diamond-like carbon coating materials. Such gas non-permeability as described above can be exhibited by covering the outer surface of the fuel tank 10 with the above non-permeable thin film members. The non-permeable thin film member has preferably a thickness of 10 to 2000 µm as is the case with what has been described above. When the non-permeable thin film member is a member having no visibility, for example, an aluminum foil, a part of the fuel tank is not covered with it so that gas non-permeability is not damaged, and it is coated in a lattice form or a stripe form to provide an inspection window part. A gas non-permeable film having light transmittance can be coated on the inspection window part to secure a gas non-permeability and visibility.

The liquid fuel discharge part 20 is provided at the tip side of the fuel tank 10 via an adaptor member 21 and comprises a separable upper member 23 having a cylindrical inflow part 22 and a separable lower member 25 having a cylindrical discharge part 24, and it is assumes a structure in which joining the separable members 23, 25 makes a receiving room 29 for receiving, between the inflow part 22 and the discharge part 24, a check valve 28 comprising a check valve member 26 and a pressing member 27 comprising a coil spring pressing the check valve member 26 to the inflow part 22 side.

A structure in which foreign matters such as air are prevented from coming in during stoppage of use (non-use) is assumed by providing the above liquid fuel discharge part 20 with the check valve 28, so that the fuel tank 10 can be prevented from being substituted by air and the liquid fuel F can be prevented from leaking and spilling.

The material of the liquid fuel discharge part 20 including the check valve 28 shall not specifically be restricted as long as it has durability, storage stability against the liquid fuel stored and gas non-permeability, and it includes synthetic resins such as ethylene·vinyl alcohol copolymer resins, polyacrylonitrile, nylon, polyethylene terephthalate, polycarbonate, polystyrene, polyvinylidene chloride and polyvinyl chloride, rubbers such as natural rubber, isoprene rubber, butadiene rubber, 1,2-polybutadiene rubber, styrene-butadiene rubber, chloroprene rubber, nitrile rubber, butyl rubber, ethylene-propylene rubber, chlorosulfonated polyethylene, acryl rubber, epichlorohydrin rubber, polysulfide rubber, silicone rubber, fluorocarbon rubber and urethane rubber and elastomers. It can be produced by conventional injection molding and vulcanizing molding.

The same liquid fuel as used in the first invention described above canbe used as the liquid fuel F, and therefore the explanations thereof shall be omitted.

In the seventh invention, the liquid fuel pressing mechanism 30 shall not specifically be restricted as long as the liquid fuel F stored in the fuel tank 10 is pushed forward by the above liquid fuel pressing mechanism 30 to supply a fixed amount to the liquid fuel discharge part 20 and a fixed amount of the liquid fuel F is discharged from the liquid fuel discharge part 20, and ones having various structures can be used.

The liquid fuel pressing mechanism 30 of the present embodiment is equipped at the rear of the fuel tank 10 with a rotation operating member 33 constituted by an outer cylindrical member 31 and an inner cylindrical member 32 which is non-rotatably inserted into the inside of the outer cylindrical member, a rachet mechanism 36 provided at a tip part of the outer cylindrical member 31 in the rotation operating member 33 and comprising rachet teeth 34 formed on the inner face of the fuel tank 10 and locking pawls 35 engaged with the rachet teeth 34, a screw rod 40 inserted into the inside of the inner cylindrical member 32 in the rotation operating member 33 and a piston 50 provided at a tip part of the screw rod 40 and inserted into the fuel tank 10 so as to be slidable on the inner face in front of a partition wall 12 protruded on the inner face of the fuel tank 10.

An interfitting convex part 31a is formed on the outer cylindrical member 31 described above, and this interfits with an interfitting concave part 10a of the fuel tank 10, whereby the outer cylindrical member 31 is rotatable and non-detachable to the fuel tank 10.

A male screw part 41 formed on an outer face of the screw rod screws with a female screw part 37 formed at the front end of the inner cylindrical member 31, and the screw rod 40 is inserted into an inserting pore 13 of the partition wall 12 described above and can be moved only in a longitudinal direction relative to the inner cylindrical member 32.

Assumed is a structure in which the screw rod 40 is rotated by a rotating operation of the outer cylindrical member 31 in the rotation operating member 33 described above to move forward by screwing with the female screw part 37 so that a fixed amount of the liquid fuel F is supplied to the liquid fuel discharge part 20 by means of the piston 50 connected with a tip of the screw rod 40 and a fixed amount of the liquid fuel F is pushed out from the liquid fuel discharge part 20. A fixed amount of the liquid fuel F pushed out by the piston 50 opens, as shown in Fig. 35, the check valve 28 by virtue of pressure thereof and is supplied to the liquid fuel discharge part 20, and a fixed amount of the liquid fuel F is discharged (pushed out) from the above liquid fuel discharge part 20. Assumed is a structure in which after a fixed amount of the liquid fuel F is supplied, the state of Fig. 35 is reinstated by the pressingmember 27 to prevent foreign matters such as air from coming into the fuel tank 10.

Assumed is a constitution in which a waste fuel recovery aperture part 14 having therein a check valve for recovering used fuel consumed in the fuel cell main body into the fuel tank 10 is provided directly (or via an adaptor member) on a side part of the fuel tank 10 described above and in which a sealing ring 16 comprising an elastic body such as silicone rubber hermetically seals a gap between the screw rod 40 and the fuel tank 10 in order to surely contain recovered waste fuel in the fuel tank 10.

The space part 15 which is a waste fuel recovery tank is formed in the fuel tank 10 by the sealing ring 16 provided in the fuel tank 10 and the piston 50 of the pressing mechanism 30, and this space part 15 is a space part whose volume grows to a waste fuel recovery tank in order by the pressing mechanism 30 .

The check valve which is mounted in the waste fuel recovery aperture part 14 described above includes small-sized ones having the same structure as that of the check valve 28 mounted in the liquid fuel discharge part 20 described above. In the present embodiment, it comprises, as shown in Fig. 35 (b), a separable upper member 14b having a cylindrical inflowpart 14a and a separable lower member 14d having a cylindrical discharge part 14c, and it assumes a structure in which joining the separable members 14b, 14d makes a receiving room 14h receiving, between the inflow part 14a and the discharge part 14c, a check valve 14g comprising a pressing member 14f comprising a coil spring pressing a check valve member 14e to the inflow part 14a side.

A structure in which foreign matters such as air are prevented from coming in during stoppage of use (non-use) is assumed by providing the above waste fuel recovery aperture part 14 with the check valve 14g so that the waste fuel can be prevented from leaking and spilling from the fuel recovey part 15 in the fuel tank 10.

In the present embodiment, a volume of the waste fuel recovery tank (space part) 15 formed by moving of the piston 50 is smaller than a volume of the liquid fuel discharged because of the presence of the screw rod 40, but a fuel component such as methanol in the liquid fuel is consumed with electric power generation, and therefore it is a space part in which the waste fuel can sufficiently be recovered.

In the fuel reservoir A for a fuel cell thus constituted, the outer cylindrical member 31 can be rotated only to one direction relation to the fuel tank 10 by the rachet mechanism 36, and in the present embodiment, a fixed amount of the liquid fuel F can be discharged by fixing a rotation angle of the rotation operating member 33 to a certain level. In order to maintain the certain rotation angle, assumed is a structure in which feeling of clicking is obtained every time rotating operation by the rachet mechanism 36 is carried out by a certion angle. A discharged amount of the liquid fuel discharged by one click is controlled (discharged amount = pitch of the screw × 1/notch number × rear end wall area) by the rotation operating member 33,a pitch of the screw rod 40, a notch number (the total number of cams gotten over by one rotaion of the rachet mechanism 36) of the rachet mechanism 36 and a rear wall area of the fuel tank 10, and it is set preferably to 5 µ 1 to 10 ml.

When the outer cylindrical member 31 described above is rotated relation to the fuel tank 10, the inner cylindrical member 32 is rotated together with the outer cylindrical member 31. In this case, the screw rod 40 is prevented from rotating by the inserting pore 12, and therefore the screw rod 40 is moved forward. As a result, the liquid fuel F stored in the fuel tank 10 is pushed by the piston to be supplied a fixed amount to the liquid fuel discharge part 20 having the check valve 28, and a fixed amount of the liquid fuel F is discharged from the liquid fuel discharge part 20. The space part 15 in the fuel tank 10 which is formed by the pressing mechanism 30 described above is used as a waste fuel recovery tank.

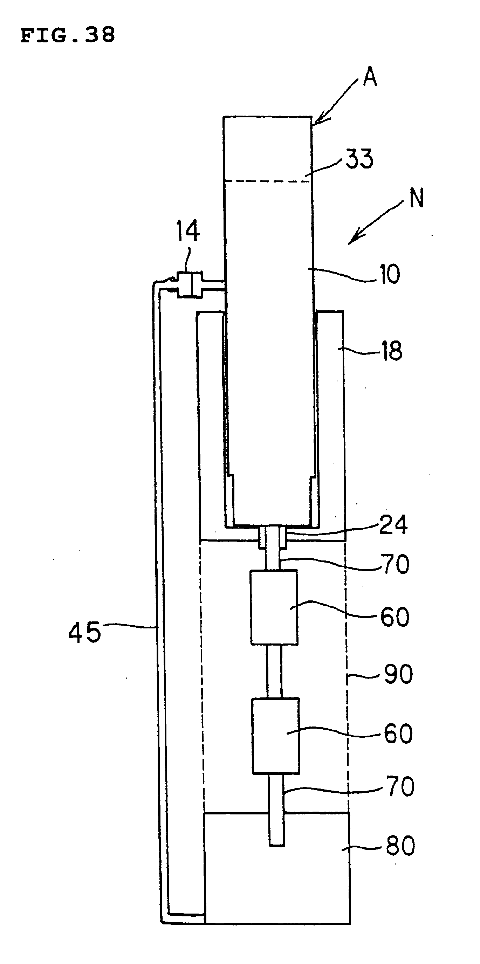

The fuel reservoir A for a fuel cell thus constituted is detachably connected, as shown in Fig. 38, with a fuel cell main body and used as a fuel cell N.

That is, the fuel cell main body is equipped with, as shown in Fig. 32, unit cells 60, 60 formed by constructing an electrolyte layer 63 on an outer surface of a fuel electrode body 62 comprising a fine porous carbonaceous body and constructing an air electrode layer 64 on an outer surface of the above electrolyte layer 63, a fuel supplying member 70 connected with the fuel reservoir A and having a penetrating structure and a used fuel storing tank 80 provided at an end of the fuel supplying member 70, and assumed is a structure in which the respective unit cells 20, 20 are connected in series and in which the fuel is supplied in order by means of the fuel supplying member 70. The fuel reservoir A assumes an exchangeable cartridge structure in which it is installed into a supporting member 18 of the fuel cell main body N.

The above fuel reservoir A is installed in the fuel cell main body N via the supporting member 18 and the fuel supplying member 70. In this case, if the respective members have a higher surface free energy than that of the liquid fuel, the liquid fuel is liable to get into a gap between the junction parts, and the possibility that the liquid fuel leaks is enhanced. Accordingly, a surface free energy of the above members is preferably controlled to a lower level than that of the liquid fuel on at least a wall surface thereof brought into contact with the liquid fuel F. A method for controlling this can be carried out by subjecting a wall surface of a fuel tank 10 brought into contact with the liquid fuel to water repellent film forming treatment by coating a water repellent agent of a silicone base, or a fluorine base resin.

The respective unit cells 60 have, as shown in Fig. 32 (a) and (b), a fuel electrode body 61 comprising a fine porous carboneous pillar body as is the case with the sixth invention and in addition thereto, have a through part 62 through which the fuel supplying member 70 passes in a central part thereof, and assumed is a structure in which the electrolyte layer 63 is constructed on an outer surface of the fuel electrode body 61 and in which the air electrode layer 64 is constructed on an outer surface of the electrolyte layer 63. The respective cells 60 generate an electromotive force of about 1.2 V per cell in theory.

The same cell as that of the first invention described above can be used for the cell 60.

The fuel supplying member 70 described above shall not specifically be restricted as long as it is inserted into a discharge port 24 of the fuel reservoir A and has a penetrating structure in which the liquid fuel can be supplied to the respective unit cells 60, and it includes, for example, those comprising porous bodies which are constituted from felts, sponges and sinteredbodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the porous bodies and fiber bundles is suitably set according to a supplying amount of the liquid fuel to the respective unit cells 60.

The used fuel storing tank 80 is disposed at an end of the fuel supplying member 70. In this case, it involves no problems taht the used fuel storing tank 80 is brought into direct contact with an end of the fuel supplying member 70 to occlude the used fuel directly in an occlusion body. Hpwever, a sliver, a porous body or a fiber bundle may be provided as a feed at a junction part brought into contact with the fuel supplying member 70 to use it as a discharge passage for the used fuel.

The liquid fuel supplied by the fuel supplying member 70 is used for reaction in the cell 60, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the storing tank 80 to prevent an inhibitory reaction.

Numeral 90 is a member comprising a mesh structure which joins the fuel reservoir A with the used fuel storing tank 80 and in which a fixed amount of the liquid fuel is surely supplied from the fuel reservoir A to each of the respective unit cells 60, 60 via the fuel supplying member 70.

In the present embodiment, one end of a fuel recovery passage 95 having a recovery tube in the inside is connected with the used fuel storing tank 80 in order to recover the remaining liquid fuel from the used fuel storing tank 80, and the other end is connected with the waste fuel recovery aperture part 14 having therein the check valve described above.

Capillary force of the used fuel storing tank 80 is set to the fuel electrode body 61 and/or the fuel supplying member 70 brought into contact with the fuel electrode body 61<the used fuel storing tank 80, whereby the used fuel is supplied from the fuel storing tank 80 to each of the respective unit cells 60, 60 without causing backflow, and the liquid fuel which is not used for the reaction can be stored in the storing tank 80 to prevent an inhibitory reaction.

The fuel recovery passage 95 described above is a flow path of such an extent that capillary force is produced, and it is set to the fuel electrode body and/or the fuel supplying member 70 brought into contact with the fuel electrode body<an occlusion body of the used fuel storing tank 80<the fuel recovery passage 95, whereby the used fuel does not cause backflow, and the liquid fuel which is not used for the reaction can be stored in the storing tank 80 to prevent an inhibitory reaction. Further, assumed is a constitution in which the used fuel including the remainder of the fuel can be recovered again in the space part 15 in the inside of the fuel tank 10.

In the fuel cell N using the fuel reservoir A thus constituted, a fixed amount of the liquid fuel F is supplied from the fuel resevior A to the liquid fuel discharge part 20 by rotating the rotation operating member 33 and introduced into the cells 60, 60 by the penetrating structure of the fuel supplying member 70.

In the present invention, a fixed amount of the liquid fuel F can be discharged by fixing a rotation angle of the rotation operating member 33 in the fuel reservoir A for a fuel cell to a certain level. In order to maintain the certain rotaion angle, assumed is a structure in which feeling of clicking is obtained every time rotating operation by the rachet mechanism 36 described above is carried out by a certain angle is assumed and therefore the fixed amount can readily be discharged.

Further, assumed is a structure in which when a fixed amount of the liquid fuel F is supplied to the liquid fuel discharge part 20, the check valve 28 is reinstated in the state of Fig. 35 by the pressing member 27 to prevent foreign matters such as air from coming into the fuel tank 10. Accordingly, the fuel tank is prevented from being substituted by air to prevent the fuel from leaking and spilling, and the fuel cell can be operated.

In electric power generation of the fuel cell, the fuel is not completely consumed, and water or the fuel of a low concentration is produced as waste fuel. In the present embodiment, the waste fuel is stored in the used fuel storing tank 80, and then it is recovered in the waste fuel recovery tank (space part) 15 in the fuel tank 10 which is formed by the pressing mechanism described above via the fuel recovery passage 95 and the waste fuel recovery aperture part 14 having a check valve. A fuel occlusion body for occluding waste fuel may be accommodated advance in the waste fuel recovery tank (space part) 15.

The waste fuel recovery tank (space part) 15 is hermetically closed by the waste fuel recovery aperture part 14 having a check valve, the sealing ring 16 and the piston 50, and therefore the waste fuel recovery tank (space part) 15 is turned into negative pressure by moving the piston 50 forward in discharging the fixed amount. Therefore, the fuel cell of the present invention assumes a constitution in which the waste fuel can automatically be recovered from the used fuel storing tank 80 to the waste fuel recovering tank (space part) 15 in the fuel tank 10 which is formed by the pressing mechanism described above via the fuel recovery passage 95 and the waste fuel recovery aperture part 14 having a check valve without providing a pump and an electromagnetic valve.

In the present invention, constitution of the fuel tank 10 described above by a material having a light transmittance of 50 % or more and/or a material having at least one oxygen barrier resin layer makes it possible to raise the storing property and makes it possible for the user to readily observe the discharge amount, and the usability is further improved.

In the fuel cell of the present invention thus constituted, a liquid fuel can efficiently be supplied quantitatively to a cell without vaporizing and without providing a pump, an electromagnetic valve, a controlling device for controlling a discharge amount of a liquid fuel, a flow amount sensor and the like, and obtained are a fuel cell and a fuel reservoir for a fuel cell in which a used fuel can automatically be recovered with ease without separately providing a waste fuel recovery tank. In addition thereto, the fuel cell can be reduced in a size.

Accordingly, in the fuel cell of the above embodiment, it becomes possible to turn the whole part of the fuel cell into a cartridge, and provided is a small-sized fuel cell which can be used as an electric power source for portable electronic appliances such as cellular phones, digital cameras and note type personal computers.

In the embodiment described above, an embodiment in which two cells 60 are used has been shown, and a required electromotive force can be obtained by increasing the number of the cells 60 connected (serial or parallel) according to the use purposes of the fuel cell.

The fuel reservoir for a fuel cell and the fuel cell according to the seventh invention shall not be restricted to the respective embodiments described above and can be varied to various extents within the scope of the technical concept of the present invention.

For example, the cell 60 having a cylindrical shape is used, but it may have other shapes such as a prism shape and a tabular shape. It may be connected with the fuel supplying member 70 in parallel as well as in series.

In the embodiment described above, the present invention has been explained in the form of a direct methanol fuel cell, but the present invention shall not be restricted to the direct methanol fuel cell described above as long as it is a cartridge type fuel reservoir detachably connected with a fuel cell main body and equipped with a fuel tank for storing a liquid fuel, a liquid fuel discharge part provided at a tip of the fuel tank and having a check valve and a liquid fuel pressing mechanism provided in the fuel tank; the liquid fuel stored in the fuel tank is pushed forward by the liquid fuel pressing mechanism to be supplied a fixed amount to the liquid fuel discharge part and a fixed amount of the liquid fuel is discharged from the liquid fuel discharge part; and a space part 15 in the fuel tank which is formed by the pressing mechanism is used as a waste fuel recovery tank for a used fuel consumed in the fuel cell main body. It can suitably be applied as well to polymer membrane fuel cell including a reformer type.

The fuel reservoir B for a fuel cell shown in Fig. 33 in the sixth invention can be applied as another example of the fuel reservoir for a fuel cell according to the seventh invention, and the liquid fuel discharge part of the embodiment shown in Fig. 34 in the sixth invention can be used as well.

Further, the fuel cell main body has been constituted by constructing the electrolyte layer on an outer surface of the fuel electrode body comprising a fine porous carbonaceous body and constructing the air electrode layer on an outer surface of the electrolyte layer, but the structure of the fuel cell main body shall not specifically be restricted, and it may be a fuel cell main body assuming, for example, a constitution in which a porous carboneous body having an electroconductivity is used as a base material and in which a unit cell obtained by forming the respective layers of electrode/electrolyte/electrode on the base material or a jointed body obtained by connecting two or more above unit cells is equipped to penetrate the liquid fuel into the base material via a fuel supplying member and in which an electrode face formed on an outer surface of the base material is exposed to air.

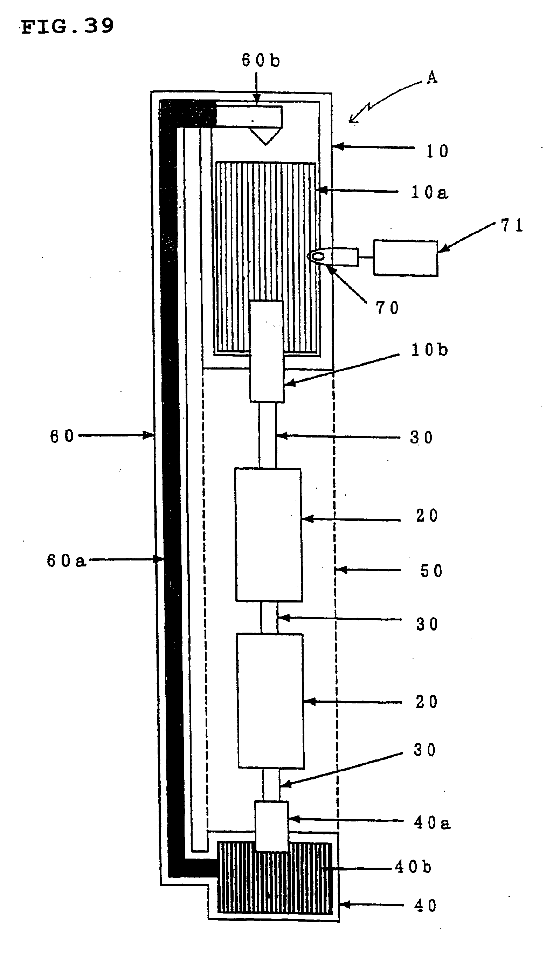

Fig. 39 shows the fundamental mode of the direct methanol fuel cell A (hereinafter referred to merely as "the fuel cell") showing the fundamental embodiment of the present eighth invention.

The above fuel cell A of the eighth invention is equipped, as shown in Fig. 39, with a fuel storing tank 10 for storing a liquid fuel, unit cells 20, 20 formed by constructing an electrolyte layer on an outer surface of a fuel electrode body comprising a fine porous carbonaceous body and constructing an air electrode layer on an outer surface of the electrolyte layer, a fuel supplying member 30 connected with the fuel storing tank 10 and having a penetrating structure and a used fuel storing tank 40 provided at an end of the fuel supplying member 30, and assumed is a structure in which the respective unit cells 20, 20 are connected in series and in which the fuel is supplied in order by means of the fuel supplying member 30. Further, a fuel resupplying passage 60 from the used fuel storing tank 40 to the fuel storing tank 10 is provided.

The liquid fuel of the first invention described above can be used as the liquid fuel stored in the fuel storing tank 10 described above.

In the present embodiment, the liquid fuel comprising a methanol solution is occluded in an occlusion body 10a of a sliver, a porous body or a fiber bundle accommodated in the fuel storing tank 10. This occlusion body 10a shall not specifically be restricted as long as it can occlude the liquid fuel, and an occlusion body having the same constitution as that of the fuel supplying member 30 which shall be described later can be used.

The material of the fuel storing tank 10 described above shall not specifically be restricted as long as it has storage stability and durability against the liquid fuel stored therein, and it includes, for example, metals such as aluminum and stainless steel, synthetic resins such as polypropylene, polyethylene and polyethylene terephthalate and glass. The same one as in the seventh invention described above is used. The structure of the fuel storing tank 10 may assume a multilayer structure in addition to a single layer structure.

The respective unit cells 20 have, as shown in Fig. 39 (a) and (b), a fuel electrode body 21 comprising a fine porous carbonaceous pillar body and in addition thereto, have a through part 22 through which the fuel supplying member 30 passes in a central part thereof, and it assumes a structure in which the electrolyte layer 23 is constructed on an outer surface of the fuel electrode body 21 and in which the air electrode layer 24 is constructed on an outer surface of the electrolyte layer 23. The respective cells 20 generate an electromotive force of about 1.2 V per cell in theory.

The cell 20 of the first invention described above can be used as the above cell 20, and therefore the explanations thereof shall be omitted.

The fuel supplying member 30 described above is connected with the occlusion body 10a occluding the liquid fuel stored in the fuel storing tank 10 via a feed 10b. The feed 10b and fuel supplying member 30 shall not specifically be restricted as long as they have a penetrating structure in which the liquid fuel can be supplied to the respective unit cells 20, and they include, for example, those comprising porous bodies which are constituted from felts, sponges and sintered bodies such as resin particle sintered bodies and resin fiber sintered bodies and which have capillary force and fiber bundles comprising one or combination of two or more kinds of natural fibers, animal hair fibers, polyacetal base resins, acryl base resins, polyester base resins, polyamide base resins, polyurethane base resins, polyolefin base resins, polyvinyl base resins, polycarbonate base resins, polyether base resins and polyphenylene base resins. A porosity of the porous bodies and fiber bundles is suitably set according to a supplying amount of the liquid fuel to the respective unit cells 20.

The used fuel storing tank 40 is disposed at an end of the fuel supplying member 30 and constituted by the same material as that of the fuel storing tank 10 described above. The occlusion body 40b of a porous body or a fiber bundle which occludes a used fuel is accommodated in the storing tank 40 and connected with a an end of the fuel supplying member 30 via a feed 40a.

The liquid fuel supplied by the fuel supplying member 30 is used for reaction in the cell 20, and since the fuel supplying amount is linked with the fuel consumption, the liquid fuel which is unreacted and discharged to the outside of the cell is scarcely found, so that a treating system is not required at a fuel outlet side as is the case with conventional liquid fuel cells. However, assumed is a structure in which when the fuel comes to be supplied in excess depending on an operation status, the liquid fuel which is not used for the reaction can be stored in the used fuel storing tank 40 to prevent an inhibitory reaction.

Numeral 50 is a member comprising a mesh structure which joins the fuel storing tank 10 with the used fuel storing tank 40 and in which the liquid fuel is surely supplied from the fuel storing tank 10 to each of the respective unit cells 20, 20 via the fuel supplying member 30.

The fuel resupplying passage 60 for supplying the used fuel to the fuel storing tank 10 to reuse it as a liquid fuel is connected with the used fuel storing tank 40 described above. To be specific, a fuel resupplying member 60a having the same constitution as that of the fuel supplying member 30 comprising a porous body or a fiber bundle described above is provided in the fuel resupplying passage 60 connected with the used fuel storing tank 40 and the fuel storing tank 10 in order to reuse the remaining fuel coming from the used fuel storing tank 40, and assumed is a constitution in which one end of the fuel resupplying member 60a is connected with a used fuel occlusion body 40b and a dropping part 60b of the other end is introduced into the fuel storing tank 10. The fuel resupplying passage 60 is constituted by the same material as that of the fuel storing tank 10.

In the fuel cell A of the present embodiment thus constituted, the liquid fuel occluded in the occlusion body 10a accommodated in the fuel storing tank 10 by the penetrating structure of the fuel supplying member 30 is introduced into the cells 20, 20 by virtue of capillary force.

In the present embodiment, an occlusion body 40b of a sliver, a porous body or a fiber bundle is accommodated in the used fuel storing tank 40 to occlude a used fuel. In the present embodiment, it involves no problems that the occlusion body 40b is brought into direct contact with an end of the fuel supplying member 30 to occlude directly the used fuel, but a feed 40a comprising a sliver, a porous body or a fiber bundle is connected with a connecting part of the occlusion body 40b and the fuel supplying member 30 and a used fuel discharge passage to the occlusion body 40b is constituted.

Further, in the present embodiment, at least the capillary force of the fuel storing tank 10 (occlusion body 10a), the fuel electrode body 21 and/or the fuel supplying member 30 brought into contact with the fuel electrode body 21, the used fuel storing tank 40 (occlusion body 40b) and the fuel resupplying passage 60 (fuel resupplying member 60a) is set to the fuel storing tank 10 (occlusion body 10a)<(feed 10b)<the fuel electrode body and/or the fuel supplying member 30 brought into contact with the fuel electrode body<(the feed 40a<the used fuel storing tank 40 (occlusion body 40b)<the fuel resupplying passage 60 (fuel resupplying member 60a), whereby the liquid fuel can stably and continuously be supplied from the fuel storing tank 10 directly to each of the respective unit cells 20, 20 without causing backflow and disruption even if the fuel cell A is left standing in any state (angle) or upside down, and the used fuel can be resupplied to the fuel storing tank 10.

When the fuel resupplying member 60a is not provided in the fuel resupplying passage 60, the fuel resupplying passage 60 is controlled to a passage of such an extent that capillary force is produced, and the capillary force is set to the fuel electrode body and/or the fuel supplying member 30 brought into contact with the fuel electrode body<the occlusion body40b<the fuel resupplying passage 60, whereby the used fuel does not cause backflow, and the liquid fuel which is not used for the reaction can be stored in the storing tank 40 to prevent an inhibitory reaction. Further, the used fuel including the remainder of the fuel can be returned again to the fuel storing tank 10.

In the present embodiment, the capillary force of the respective elements in the fuel cell is set, as described above, to the fuel occlusion body 10a<the fuel resupplying passage 60 (fuel resupplying member 60a), and therefore if the fuel occlusion body 10a is brought into contact with the fuel resupplying passage 60 or the fuel resupplying member 60a, the fuel flows from the fuel occlusion body 10a to the fuel resupplying passage 60 or the fuel resupplying member 60a, so that the used fuel does by no means return to the fuel storing tank 10. Accordingly, it is important that a constitution in which the fuel occlusion body 10a is brought into contact with the fuel resupplying path 60 or the fuel resupplying member 60a is not assumed. In the present embodiment, the dropping member 60b is provided, as shown in Fig. 39, so that the used fuel is dropped into the fuel storing tank 10.

In the present embodiment, a liquid concentration sensor 70 for the respective liquid fuels such as methanol may be disposed in the fuel storing tank 10 or the occlusion body 10a in the fuel storing tank 10 and the used fuel storing tank 40 or the occlusion body 40b in the used fuel storing tank 40. Thus, the fuel can be used to such an extent of a concentration that the liquid fuel such as methanol does not generate electric power at a prescribed output, and assumed is a constitution in which when the above concentration is reached, exhaustion (finish sign) of the fuel can readily be found by the user through a display part 71 from the concentration sensor 70.

Further, if the used fuel storing tank 40 and/or the fuel storing tank 10 each described above or a connecting part of the used fuel storing tank 40 with the fuel storing tank 10 is freely combined or interfitted, they are detachable, and therefore the fuel storing tank 10, the used fuel storing tank 40 and the connecting part thereof can readily be exchanged.

Further, an openable or closable cover may be provided in the used fuel storing tank 40 and/or the fuel storing tank 10 each described above or at a connecting part of the used fuel storing tank 40 with the fuel storing tank 10, and this makes it possible to prevent foreign matters such as dust from coming in.

In the fuel cell A of the present embodiment, assumed is a structure in which the liquid fuel can smoothly be supplied and resupplied as it is without vaporizing and without using specifically auxiliary equipment such as a pump, a blower, a fuel carburetor and a condenser, and therefore it becomes possible to reduce a size of the fuel cell.

Further, the fuel supplying member 30 having a penetrating structure is connected with an end part of the fuel storing tank 10 directly or via the feed 10b for supplying the fuel to the respective unit cells 20, 20, whereby reduction in a size of the fuel cell comprising plural cells can be achieved.

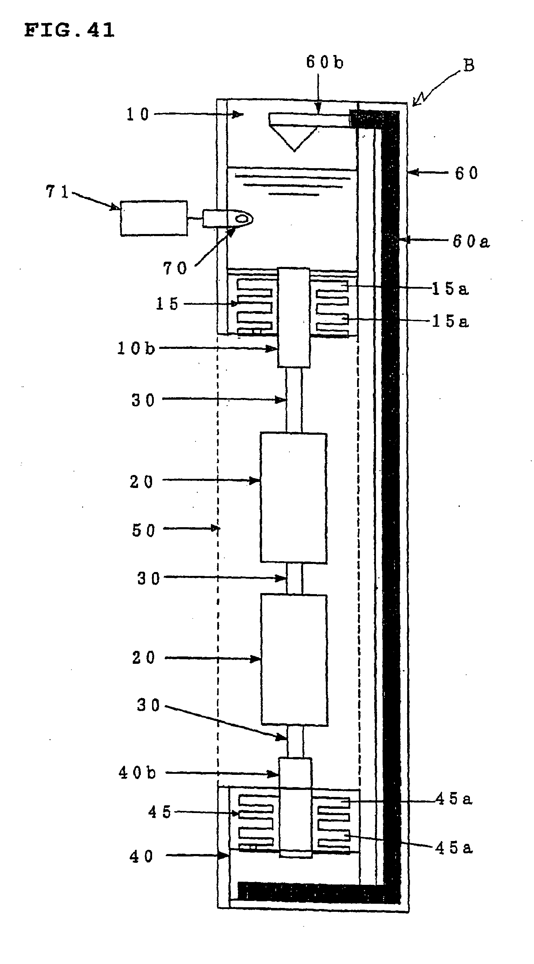

Fig. 41 shows the fuel cell B of the second embodiment in the eighth invention. In the following embodiment, a fuel cell having the same structure and exhibiting the same effects as those in the first embodiment described above shall be given the same reference nymerals as in Fig. 39, and the explanations thereof shall be omitted.

The fuel cell B of the second embodiment is different, as shown in Fig. 41, from the fuel cell A of the first embodiment described above in that a liquid fuel is stored directly in a fuel storing tank 10, in that a collector body 15 is disposed at a lower part of the fuel storing tank 10 to supply the liquid fuel to a fuel supplying member 30 via a feed 10b, in that a used fuel is stored directly in a used fuel storing tank 40, in that a feed 40b comprising a sliver, a porous body or a fiber bundle is provided at a connecting part brought into contact with the fuel supplying member 30 and in that a collector body 42 is provided in the periphery of the feed 40b.

The collector body 15 assumes the same constitution as those of members used in free ink type writing instruments and prevents the liquid fuel stored directly in the fuel storing tank 10 from discharging in excess to the fuel supplying member 30 due to a change in atmospheric pressure and temperature, and assumed is a structure in which the liquid fuel overflown by expansion and the like is held in a gap (between blade members) between collector parts 15a, 15a --- in the collector body and in which it goes back to the fuel storing tank 10 when a change in atmospheric pressure and temperature returns to what used to be.

Further, a collector body 45 assumes as well the same constitution as those of members used in free ink type writing instruments and prevents the used liquid fuel stored directly in the used fuel storing tank 40 frombackflowing to the fuel supplying member 30 due to a change in atmospheric pressure and temperature, and assumed is a structure in which a used liquid fuel likely to backflow is held in a gap between collector parts 45a, 45ain the collector body 45 and in which it goes back to the fuel storing tank 40 when a change in atmospheric pressure and temperature returns to what used to be.

The materials of the collector bodies 15 and 45 shall not specifically be restricted as long as they have storage stability and durability against the liquid fuel stored therein, and they include metals such as aluminum and stainless steel and synthetic resins such as polypropylene, polyethylene and polyethylene terephthalate. Synthetic resins such as polypropylene, polyethylene and polyethylene terephthalate are particularly preferred, and they can be produced by conventional injection molding or stereolithography in which complicated shapes can be formed. Also, a single layer member obtained by subjecting a film of the synthetic resins described above to press working is laminated to replace the collector parts produced by injection molding or stereolithography to form a collector body.

It is important that a surface free energy on the above collector body 15 and collector body 45 is set to a higher level than a surface free energy of the liquid fuel and the used fuel, and this enhances a wetting property of the collector bodies to the liquid fuel and the used fuel to raise power of holding the liquid fuel and the used fuel. A surface free energy of the collector bodies can be controlled usually by plasma treatment, ozone treatment and treatment by a surface modifying agent.

In the fuel cell B of the above second embodiment, capillary force of the feed 40b is set, as is the case with the fuel cell A of the first embodiment described above, to the fuel electrode body 21 and/or the fuel supplying member 30 brought into contact with the fuel electrode body 21<the feed 40b, whereby the used fuel does not cause backflow from the fuel storing tank 40 to each of the respective unit cells 20, 20, and the liquid fuel which is not used for the reaction can be stored in the storing tank 40 to prevent an inhibitory reaction.

Further, the fuel resupplying passage 60 is disposed in order to reuse the fuel remaining in the used fuel storing tank 40, and the fuel resupplying member 60a is provided therein and connected with the fuel storing tank 10. In the present embodiment, a used fuel occlusion body is not provided in the used fuel storing tank 40, which is different from the first embodiment, and therefore flow passages in the fuel resupplying member 60a and the fuel resupplying passage 60 can be provided without considering capillary force of the fuel supplying member 30.

Further, in the second embodiment, a concentration sensor 70 for the liquid fuel such as methanol may be disposed as well in the fuel storing tank 10 or the used fuel storing tank 40. Thus, the fuel can be used to such an extent of a concentration that the liquid fuel such as methanol can not be used for electric power generation, and assumed is a constitution in which when the above concentration is reached, exhaustion of the fuel can readily be found by the user through a display part 71 from the sensor.

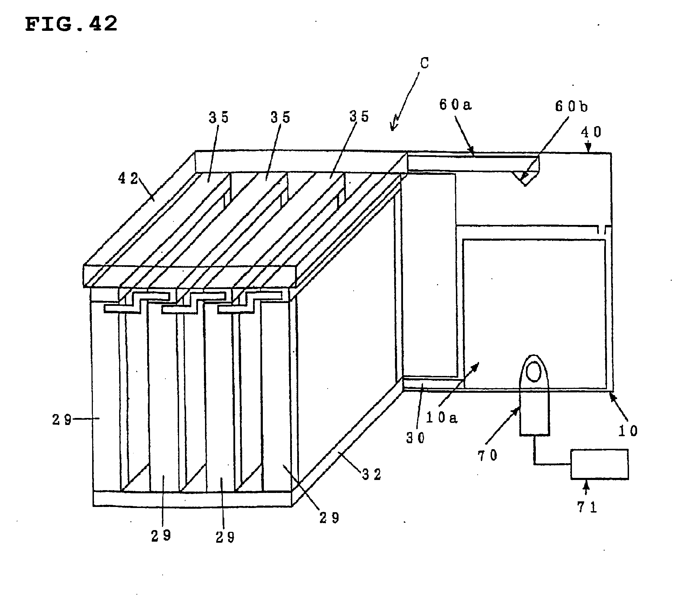

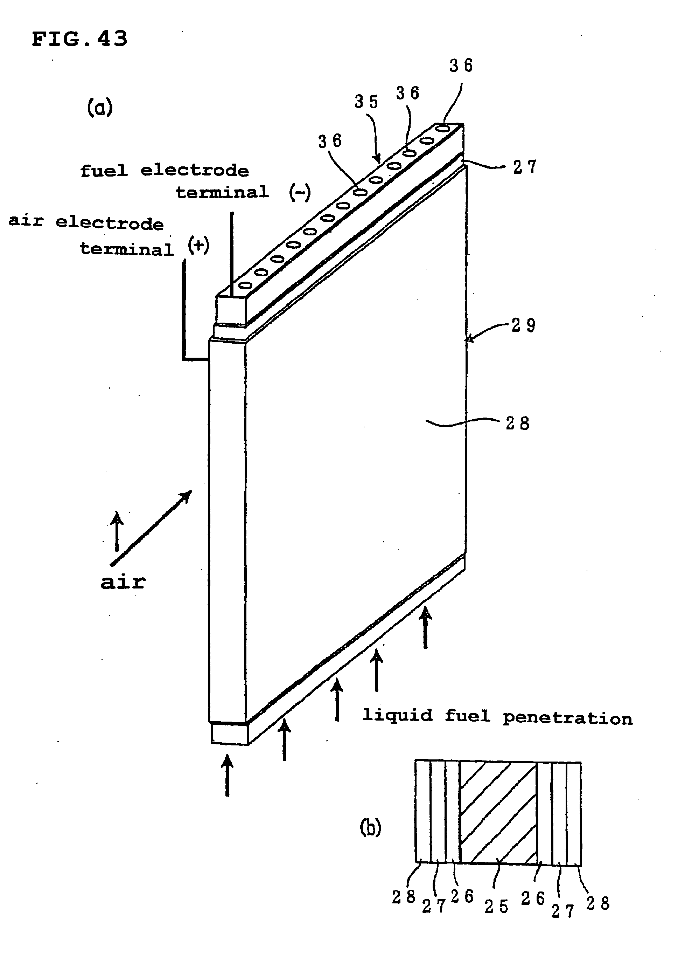

Fig. 42 and Fig. 43 show the fuel cell C of the third embodiment in the eighth invention.

The fuel cell C of the present embodiment is different from the unit cell of the first embodiment described above in that the porous carbon having high conductivity which can absorb a liquid fuel such as a methanol aqueous solution by virtue of capillary force is used for a cell supporting member and in that the respective layers of electrode/electrolyte/electrode are provided on the surface thereof to thereby form a unit cell. The above embodiment is an embodiment in which the liquid fuel is penetrated from a lower part to an upper part.

In the fuel cell C of the above embodiment, a porous carbonaceous body having electroconductivity is used, as shown in Fig. 43, as a base material 25, and four unit cells 29 each of which is prepared by forming the respective layers (MEA) of electrode (fuel electrode) 26/electrolyte 27/electrode (air electrode) 28 having the same constitution as in the first embodiment described above on the surface of the base material 25 are connected in series.

The porous carbonaceous body which is the base material 25 in the present embodiment has electroconductivity and functions as a penetrating medium for a liquid fuel and a gas and a fuel supporting member (hereinafter referred to merely as "the respective characteristics"). The material thereof shall not specifically be restricted as long as it has the above characteristics and includes, for example, amorphous carbon, composites of amorphous carbon and carbon powder, anisotropic high density carbon molded articles, carbon fiber paper-making molded articles and activated carbon molded articles, and it is preferably constituted by the amorphous carbon and a composite of amorphous carbon and carbon powder from the viewpoints of moldability, a cost and easiness of obtaining desired physical properties.

The amorphous carbon shows a carbonization yield of 5 % or more by burning and is obtained by burning at least one raw material selected from thermoplastic resins such as polyvinyl chloride, chlorinated vinyl chloride resins, polyacrylonitrile, polyvinyl alcohol and polyvinyl chloride-polyvinyl acetate copolymer, thermosetting resins such as phenol resins, furan resins, imide resins and epoxy resins and natural high molecular materials such as cellulose and gum arabic.

The carbon powder includes, for example, at least one selected from graphite, pitch obtained by further subjecting tar-like materials to dry distillation, carbon fibers, carbon nanotubes and mesocarbon microbeads.

The composite of amorphous carbon and carbon powder described above is obtained by mixing 50 to 100 % by weight of an amorphous carbon material in which a particle diameter is controlled with 0 to 50 % by weight of carbon powder based on the total amount and then carbonizing the mixture at 700°C or higher in inert atmosphere.

In order to preferably exhibit the respective characteristics described above, the porous carbonaceous body which is the base material 25 has preferably an average pore diameter of 1 to 100 µm and a porosity of 10 to 85 % , and it is provided preferably with a liquid penetrating property (a function to penetrate liquid) by a capillary phenomenon and strength sufficient to hold a self shape. In the present embodiment, provided are an average pore diameter of 20 µm, a porosity of 55 %, a liquid penetrating property by a capillary phenomenon and strength sufficient to hold a self shape.

More preferably provided are an average pore diameter of 5 to 70 µm, a porosity of 20 to 70 % and a liquid penetrating property by a capillary phenomenon.

If the average pore diameter (1 to 100 µm) and the porosity (10 to 85 %) each described above fall outside the respective ranges described above, disadvantages are brought about on the electric conductivity, the penetrating medium for a liquid fuel and a gas and the function as a cell supporting member, and therefore that is not preferred.

The base material obtained may be further subjected to treatment such as air oxidation, electrochemical oxidation and the like in order to enhance a liquid penetrating property.

The porous carbonaceous body 25 having the respective characteristics described above and having the aimed continuous pores can be produced by putting the particles of the thermally fusible resins described above in a mold having an optional shape, fusing them by heating and then burning them in inert atmosphere. The porous carbonaceous body having the aimed continuous pores can be produced by mixing and kneading a resin which is a binder and graphite which is carbon powder, crushing and pelletizing the mixture, putting it in a mold having an optional shape to pressmold it and then burning it in inert atmosphere.

The porous carbonaceous body which is the base material 25 of the present embodiment assumes, as shown in Fig. 43, a tabular form and has the respective characteristics described above in the whole part. The base material 25 may have at least partially electric conductivity and/or may comprise at least partially a porous carbonaceous body.

The unit cell 29 of the present embodiment can be formed by interposing an electrolyte film 27 between a fuel electrode 26 obtained by coating a Pt-Ru/C catalyst on the surface of the base material 25 having the respective characteristics described above and an air electrode 28 obtained by coating a Pt/C catalyst on a sheet-like porous carbon body and pressing it by means of a hot press.

The above cell 29 is provided with, as shown in Fig. 43 (a) and (b), an air hole member 35 having air and liquid vent holes 36, 36 --- for degassing and acceleration of liquid fuel penetration on an upper surface of the base material 25.

Use of the above cell 29 which is turned into a cartridge makes it possible to develop efficiency of a connecting work of the cells 29 and electric connection, and to improve a cell performance by increase in convection and diffusion speed of air or the liquid fuel by hollowing of a space between the cells.

In the present embodiment, the cells 29, 29 --- described above are mounted onto a fuel supplying holder member 32 connected with an occlusion body 10a in a liquid fuel storing tank 10 via a fuel supplying member 30 so that an interval between the respective cells is equalized. Flow and a concentration of air or a fuel which is convected and diffused between the cells are uniformized by providing an equal interval of about 1 to 20 mm between the above respective cells 29, 29, and an output of the respective cells is uniformized, so that uniformizing in an output of each cell and stabilization in an output of fuel cell can be exhibited. In order to obtain the high output by renewal of air, air may forcibly be convected by using suitably a small fan.

In the fuel cell C having the above structure, assumed is a structure in which the liquid fuel is penetrated by the porous carbonaceous body of the respective cells 29 and in which an electrode surface formed on an outer surface is exposed to air. The liquid fuel can be penetrated from a forward, downward or lateral direction, as shown in Fig. 4, even if a longitudinal direction of the respective cells is turned horizontally, vertically or obliquely. Accordingly, the liquid fuel can stably and continuously be supplied from the liquid fuel storing tank 10 directly to the respective cells 29 without causing disruption to generate electric power.

Arranging of the plural unit cells described above makes it possible to expand the electrode area to increase an output density of electric power per volume. Arranging of them so that a gap is maintained between the cells makes it possible, as shown in Fig. 42, to make use of the gap as a passage for supplying air.

In the present embodiment, assumed is a structure in which a temporary used fuel storing tank 42 comprising a fuel occlusion body for occluding a used fuel and the fuel storing tank 10 are connected with the air hole members 35, 35 --- which are upper end of the cells 29 via a fuel resupplying member 60a, and the waste fuel is returned directly to the fuel occlusion body 10a.

In the fuel cell C of the present embodiment, the capillary force of the respective elements in the fuel cell is set, as is the case with the fuel cell A of the first embodiment, to the fuel occlusion body 10a<the fuel resupplying passage 60 (fuel resupplying member 60a), and therefore if the fuel occlusion body 10a is brought into contact with the fuel resupplying passage 60 or the fuel resupplying member 60a, the fuel flows from the fuel occlusion body 10a to the fuel resupplying passage 60 or the fuel resupplying member 60a, so that the used fuel does by no means return to the fuel storing tank 10. Accordingly, it is important that a constitution in which the fuel occlusion body 10a is brought into contact with the fuel resupplying passage 60 or the fuel resupplying member 60a is not assumed. In the present embodiment, assumed is a structure in which the dropping member 60b is provided to the fuel resupplying member 60a and the used fuel is dropped to the occlusion body 10a in the fuel storing tank 10.

In the fuel cell C of the present embodiment thus constituted, a porous carbonaceous body having electroconductivity is used as the base material 25, and assumed is a structure in which a unit cell 29 prepared by forming the respective layers of electrode 26/electrolyte 27/electrode 28 on the surface of the base material 25 is mounted on the holder member 32 to penetrate the liquid fuel into the base material 25 and in which an electrode surface formed on an outer surface of the base material 25 is exposed to air. The base material 25 is used as an electrode·current collector , a penetrating medium for a liquid fuel or a gas and a cell supporting member, and the liquid fuel stored in the fuel storing tank 10 is introduced into the cell 29 by penetrating action and used for electric power generation.

In the present embodiment, the base material 25 has the characteristics described above, that is, it has electroconductivity and functions as a penetrating medium for a liquid fuel or a gas and a cell supporting member. Accordingly, the liquid fuel does not leak to the outside, and regardless of disposing the fuel cell C vertically or horizontally, the liquid fuel can stably and continuously be supplied from the liquid fuel storing tank 10 directly to the unit cells 29 without causing disruption.

In the fuel cell C of the present embodiment, a separator can be unneeded by using the base material comprising a porous carbonaceous body having electroconductivity as an electrode·current collector, a penetrating medium for a liquid fuel or a gas and a cell supporting member without using specifically auxiliary equipment such as a pump, a blower, a fuel carburetor and a condenser, and therefore assumed is a structure in which the liquid fuel can smoothly be supplied as it is without vaporizing by making use of the above unneeded space for a field of convecting or diffusing the gas or the liquid fuel. Accordingly, the fuel cell can be reduced in a size, and the fuel cell which makes it possible to readily reuse a used liquid fuel is obtained.

In the present embodiment, a large part of the surface of the base material 25 which is a porous supporting member can be used as an electrode, and porous carbon of the base material 25 doubles as a current collector of the fuel electrode, so that electric connection between the cells can readily be carried out at an end part thereof.

Further, in the present embodiment, a concentration sensor 70 for the liquid fuel such as methanol may be disposed as well in the fuel storing tank 10 or the used fuel storing tank 42. Thus, the fuel can be used to such an extent of a concentration that the liquid fuel such as methanol can not be used for electric power generation, and when the above concentration is reached, exhaustion sign can be given to the user through a display part 71 from the sensor.

The fuel cell of the present invention shall not be restricted to the respective embodiments described above and can be varied to various extents within the scope of the technical concept of the present invention.

For example, the cell 20 having a cylindrical shape is used in the first embodiment described above, but it may have other shapes such as a prism shape and a tabular shape. It maybe connected with the fuel supplying member 30 in parallel as well as in series.

Further, in the embodiment described above, the present invention has been explained in the form of a direct methanol fuel cell, but the present invention shall not be restricted to the direct methanol fuel cell described above as long as it is a fuel cell which connects plural unit cells each of which is formed by constructing an electrolyte layer on an outer surface of a fuel electrode body and constructing an air electrode layer on an outer surface of the electrolyte layer, in which a fuel supplying member connected with a liquid fuel storing tank for storing a liquid fuel and having a penetrating structure or a fuel electrode body is connected with the above respective unit cells to supply the liquid fuel and in which an end of the fuel supplying member is connected with a used fuel storing tank, wherein assumed is a constitution in which the used fuel storing tank is connected with the fuel storing tank and in which the used fuel is supplied to the fuel storing tank and can be reused as the liquid fuel. It can suitably be applied as well to a polymer membrane fuel cell including a reformer type.

### EXAMPLES

Next, the sixth invention and seventh invention shall be explained in further details with reference to examples, but the present sixth invention and seventh invention shall not be restricted to the examples described below.

### Example 1

The fuel reservoir B for a fuel cell based on Fig. 28 to Fig. 30 and Fig. 33 was used.

Used were a liquid fuel F, a fuel tank 10, a liquid fuel discharge part 20 and a liquid pressing mechanism 30 each having constitutions described below.
Liquid fuel:
10 wt % methanol aqueous solution, filled amount: 5 ml.
Fuel tank 10:
Constituted from polyethylene terephthalate resin having an oxygen gas permeability (oxygen gas non-permeability) of 100 cc·25 µ m/m²·24 hr·atm (25°C, 65 % RH) or less and a light transmittance of 80 % or more, wall thickness: 1 mm.
Liquid fuel discharge part 20:
Material of separable upper member 23 and separable lower member 24: polypropylene, material of check valve 26: polypropylene, pressing member 27: coil spring, discharge port diameter: 2 mm. Liquid pressing mechanism 30:
   Material of outer cylindrical member 31: polypropylene, material of inner cylindrical member 32: polypropylene, material of screw rod 40: ABS, material of piston 50: silicone rubber;
The liquid fuel F is discharged from a discharge part 24 in a fixed amount of 0.1 ml by one revolution (360 degrees) of the outer cylindrical member 31 in a rotation operating member 33.

The fuel reservoir B for a fuel cell having the constitution described above was actually used. That is, it was confirmed that 0.0125 ml of the liquid fuel was discharged from the discharge port 24 of the liquid fuel discharge part 20 by adjusting a convex part 31a to a marking part 14 set as a reference (no discharge of the liquid fuel, discharge amount: 0) and then rotating the outer cylindrical member 31 of the rotation operating part 33 to adjust the next convex part 31a to the marking part 14. Also, it was found that in the above rotating operation (discharge operation), feeling of clicking a rachet mechanism 36 was obtained, and also a discharge amount of the liquid fuel was readily confirmed. Further, it was confirmed that the liquid fuel did not leak when the fuel reservoir B for a fuel cell was held by a hand with the discharge port 24 turned downward and shaken from side to side.

### Example 2

The fuel reservoir A for a fuel cell based on Fig. 35 to Fig. 37 and Fig. 33 was used.

Used were a liquid fuel F, a fuel tank 10, a liquid fuel discharge part 20 and a liquid pressing mechanism 30 each having constitutions described below.
Liquid fuel:
10 wt % methanol aqeous solution, filled amount: 5 ml.
Fuel tank 10:
Constituted from polyethylene terephthalate resin having an oxygen gas permeability (oxygen gas non-permeability) of 100 cc·25 µ m/m²·24 hr·atm (25°C, 65 % RH) or less and a light transmittance of 80 % or more, wall thickness: 1 mm.
Liquid fuel discharge part 20:
Material of separable upper member 23 and separable lower member 24: polypropylene, material of check valve 26: polypropylene, pressing member 27: coil spring, discharge port diameter: 2 mm. Liquid pressing mechanism 30:
   Material of outer cylindrical member 31: polypropylene, material of inner cylindrical member 32: polypropylene, material of screw rod 40: ABS, material of piston 50: silicone rubber;
The liquid fuel F is discharged from a discharge port 24 in a fixed amount of 0.1 ml by one revolution (360 degrees) of the outer cylindrical member 31 in a rotation operating member 33.

The fuel reservoir A for a fuel cell having the constitution described above was actually used. That is, it was confirmed that 0.0125 ml of the liquid fuel was discharged from the discharge port 24 of the liquid fuel discharge part 20 by adjusting a convex part 31a to a marking part 14 set as a reference (no discharge of the liquid fuel, discharge amount: 0) and then rotating the outer cylindrical member 31 of the rotation operating member 33 to adjust to the next convex part 31a to the marking part 14. Also, it was found that in the above rotating operation (discharge operation), feeling of clicking a rachet mechanism 36 was obtained, and also a discharge amount of the liquid fuel was readily confirmed. Further, it was confirmed that the liquid fuel did not leak when the fuel reservoir B for a fuel cell was held by a hand with the discharge port 24 turned downward and shaken from side to side.

Further, it was confirmed that the liquid fuel was recovered in a space part 15 in the fuel tank 10 by connecting one end of a silicone rubber-made tube (length: 100 mm) having an inner diameter of 2 mm with the discharge port 24 of the liquid fuel discharge part 20 and connecting the other end with a waste fuel recovery aperture part, and then rotating the outer cylindrical member 31 of the rotation operating member 33 to discharge 0.5 ml of the liquid fuel.

### Industrial Applicability

In the fuel cell and the fuel reservoir for a fuel cell according to the present invention, a liquid fuel can stably and continuously be supplied directly from a fuel storing tank, and the fuel cell can be reduced in a size, so that it can suitably be used as an electric power source for portable electronic appliances such as cellular phones, note type personal computers and PDA.

## Claims

1. A fuel reservoir for a fuel cell which is a cartridge type fuel reservoir detachably connected with a fuel cell main body, wherein the cartridge type fuel reservoir is equipped with a fuel tank for storing a liquid fuel, a liquid fuel discharge part provided at a tip of the fuel tank and having a check valve and a liquid fuel pressing mechanism provided in the fuel tank described above; and the liquid fuel stored in the fuel tank is pushed forward by the liquid fuel pressing mechanism to supply a fixed amount to the liquid fuel discharge part and a fixed amount of the liquid fuel is discharged from the liquid fuel discharge part.

2. The fuel reservoir for a fuel cell as described in claim 1, wherein the liquid fuel pressing mechanism is equipped at the rear of a fuel tank with a rotation operating member constituted by an outer cylindrical member and an inner cylindrical member which is non-rotatably inserted into the inside of the outer cylindrical member, a rachet mechanism provided at a tip part of the outer cylindrical member in the rotation operating member and comprising rachet teeth formed on an inner face of the fuel tank and locking pawls engaged with the rachet teeth, a screw rod inserted into the inside of the inner cylindrical member in the rotation operating member and a piston provided at a tip part of the screw rod and inserted into the fuel tank so as to be slidable on the inner face in front of a partition wall protruded on an inner face of the fuel tank; a male screw part formed on an outer face of the screw rod screws with a female screw part formed at a front end of the inner cylindrical member, and the screw rod is inserted into an inserting pore of the partition wall and movable only in a longitudinal direction relative to the inner cylindrical member; the screw rod is rotated by a rotating operation of the outer cylindrical member in the rotation operating member to move forward by screwing with the female screw part, and a fixed amount of the liquid fuel is supplied to the liquid fuel discharge part by means of the piston connected with a tip of the screw rod and a fixed amount of the liquid fuel is pushed out from the above liquid fuel discharge part.

3. The fuel reservoir for a fuel cell as described in claim 1 or 2, wherein the fuel tank has at least one oxygen barrier resin layer.

4. The fuel reservoir for a fuel cell as described in claim 3, wherein the oxygen barrier resin layer comprises at least one resin of ethylene·vinyl alcohol copolymer resins, polyacrylonitrile, nylon, polyethylene terephthalate, polycarbonate,polystyrene,polyvinylidene chloride and polyvinyl chloride.

5. The fuel cell as described in any one of claims 1 to 4, wherein the fuel tank is formed by a material having a light transmittance of 50 % or more.

6. The fuel cell as described in any one of claims 1 to 5, wherein a surface free energy on at least a wall surface of the fuel tank brought into contact with the liquid fuel is controlled to a lower value than that of the liquid fuel.

7. A fuel cell comprising a fuel cell main body and a cartridge type fuel reservoir detachably connected with the fuel cell main body, wherein assumed is a constitution in which the fuel cell main body connects plural unit cells each of which is formed by constructing an electrolyte layer on an outer surface of a fuel electrode body and constructing an air electrode layer on an outer surface of the electrolyte layer and in which the unit cells are connected with a fuel supplying member connected with the fuel reservoir for a fuel cell as described in any one of claims 1 to 6 to allow a liquid fuel to be supplied.

8. A fuel reservoir for a fuel cell which is a cartridge type fuel reservoir datachably connected with a fuel cell main body, wherein the cartridge type fuel reservoir is equipped with a fuel tank storing a liquid fuel and having a waste fuel recovery aperture part, a liquid fuel discharge part provided at a tip of the fuel tank and having a check valve and a liquid fuel pressing mechanism provided in the fuel tank; the liquid fuel stored in the fuel tank is pushed forward by the liquid fuel pressing mechanism to discharge a fixed amount to the fuel cell main body; and a space part in the fuel tank which is formed by the pressing mechanism is used as a waste fuel recovery tank for used fuel consumed in the fuel cell main body.

9. The fuel reservoir for a fuel cell as described in claim 8, wherein the liquid fuel pressing mechanism is equipped at the rear of a fuel tank with a rotation operating member constituted by an outer cylindrical member and an inner cylindrical member which is non-rotatably inserted into the inside of the outer cylindrical member, a rachet mechanism provided at a tip part of the outer cylindrical member in the rotation operating member and comprising rachet teeth formed on an inner face of the fuel tank and locking pawls engaged with the rachet teeth, a screw rod inserted into the inside of the inner cylindrical member in the rotation operating member and a piston provided at a tip part of the screw rod and inserted into the fuel tank so as to be slidable on the inner face in front of a partition wall protruded on the inner face of the fuel tank; a male screw part formed on an outer face of the screw rod screws together with a female screw part formed at a front end of the inner cylindrical member, and the screw rod is inserted into an inserting pore of the partition wall and movable only in a longitudinal direction relative to the inner cylindrical member; the screw rod is rotated by a rotating operation of the outer cylindrical member in the rotation operating member to move forward by screwing with the female screw part, and a fixed amount of the liquid fuel is supplied to the liquid fuel discharge part by means of the piston connected with a tip of the screw rod and a fixed amount of the liquid fuel is pushed out from the liquid fuel discharge part.

10. The fuel reservoir for a fuel cell as described in claim 8 or 9, wherein the fuel tank has at least one oxygen barrier layer.

11. The fuel reservoir for a fuel cell as described in claim 10, wherein the oxygen barrier layer comprises at least one resin of ethylene·vinyl alcohol copolymer resins, polyacrylonitrile, nylon, polyethylene terephthalate, polycarbonate, polystyrene, polyvinylidene chloride and polyvinyl chloride.

12. The fuel reservoir for a fuel cell as described in claim 11, wherein the oxygen barrier layer comprises a resin film on which a metal oxide is deposited; the metal oxide comprises one of alumina and silica or both of them; and the resin film comprises one of polyethylene terephthalate, polystyrene, polyethylene, polypropylene and nylon or a composite thereof.

13. The fuel reservoir for a fuel cell as described in claim 11, wherein the oxygen barrier layer comprises a resin film covered with diamond-like carbon (DLC); and the resin film comprises one of polyethylene terephthalate, polystyrene, polyethylene, polypropylene and nylon or a composite thereof.

14. The fuel cell as described in any one of claims 8 to 13, wherein the fuel tank is formed by a material having a light transmittance of 50 % or more.

15. A fuel cell comprising a fuel cell main body and a cartridge type fuel reservoir detachably connected with the fuel cell main body, wherein the cartridge type fuel reservoir is equipped with a fuel tank storing a liquid fuel and having a waste fuel recovery aperture part, a liquid fuel discharge part provided at a tip of the fuel tank and having a check valve and a liquid fuel pressing mechanism provided in the fuel tank; the liquid fuel stored in the fuel tank is pushed forward by the liquid fuel pressing mechanism to discharge a fixed amount to the fuel cell main body; and used fuel consumed in the fuel cell main body is recovered in a space part of the fuel tank which is formed by the pressing mechanism.

16. The fuel cell as described in claim 15, wherein the fuel cell main body is provided with a used fuel storing tank, and the used fuel storing tank is connected with the waste fuel recovery aperture part having a check valve in the fuel tank.

17. A fuel cell assuming a constitution in which a fuel cell main body connects plural unit cells each of which is formed by constructing an electrolyte layer on an outer surface of a fuel electrode body and constructing an air electrode layer on an outer surface of the electrolyte layer and in which the unit cells are connected with a fuel supplying member connected with the fuel reservoir for a fuel cell as described in any one of claims 8 to 16 to allow a liquid fuel to be supplied.
